# EUROPEAN PATENT APPLICATION

(11) **EP 4 645 172 A1**
(43) Date of publication of application: **05.11.2025**
(21) Application number: 25180906.7
(22) Date of filing: 11.05.2016
(51) Int. Cl.: G06N 5/02, G06Q 10/02, G06Q 30/0283, G06N 3/006, G06N 5/022, G06F 40/30

(54) **UNIVERSAL TASK INDEPENDENT SIMULATION AND CONTROL PLATFORM FOR GENERATING CONTROLLED ACTIONS USING NUANCED ARTIFICIAL INTELLIGENCE**

(30) Priority: 11.05.2015 US 201562159800 P
(62) Divisional of application: 16793467.8
(71) Applicant: Olsher, Daniel Joseph, Arlington, Virginia 22202 (US)
(72) Inventor: Olsher, Daniel Joseph, Arlington, Virginia 22202 (US)
(74) Representative: Keltie LLP

(57) **Abstract**

A system and method providing improved computations of input knowledge data within a computer environment and managing the creation, storage, and use of atomic knowledge data developed from the input knowledge data that includes nuanced cognitive data related to the input knowledge data and enhancing the operations of the computer system by improving decision processing therein by using nuanced cognitive data storage and decision processing and then generating a controlled action output based thereon.

## Description

### CROSS-REFERENCE TO RELATED APPLICATIONS

This application claims the benefit of U.S. Provisional Patent Application No. 62/159,800, filed May 11, 2015 and entitled "System and Method for Nuanced Artificial Intelligence Reasoning, Decision-making, and Recommendation" the entire disclosure of which is incorporated herein by reference.

### FIELD OF THE DISCLOSURE

The present disclosure relates to systems and methods for using artificial intelligence (Al) and, in particular for controlling systems and methods using modeled and predicted real world object/process/political, human reasoning, belief, and emotional patterns as integral components within the Al control system.

### BACKGROUND OF THE DISCLOSURE

The statements in this disclosure merely provide background information related to the present disclosed system and method and may not constitute prior art.

In many instances in the past, computer systems, such as system for controlling functions or other systems or providing decisions and messages to other systems, have used Artificial Intelligence (Al) that aid in the process of controlling systems in view of making greater contributions to human life. Traditional approaches to Al, however, have been, to date, too context-insensitive, brittle, and unable to model nuanced, holistic, imprecise data such as the nature of real-world objects/processes, cultures, beliefs, values, needs, and goals to be able to fully meet this potential.

Ideally, Artificial Intelligence systems would be able to cover a broad spectrum of functions that currently can only be executed by human beings. Traditional systems, however, due in part to the factors described herein, cannot achieve this goal.

Traditional control systems using Al have attempted to fit the real world into variables precisely enumerate all possibilities ahead of time and/or store knowledge in symbolic and/or rule-based form, creating knowledge that can only be used in a specific context and for an exact task for which it was conceived (known as "brittleness"). Since multiple contexts tend to exist and be important to nearly any real- world problem, having enumerated knowledge only for a specific context limits the ability of traditional systems to provide useful intelligence across such varying contexts. Traditional Al systems often utilize statistical analytics that only generate correlations and do not address or support cause and effect, cannot address situations that are not preprogrammed or use knowledge in unanticipated ways, and do not support cultural sensitivities. Traditional Al systems tend also to have "silos" of data delineated by domain and/or format. Traditional Al systems do not have the capability to understand data or its relationships with other data not defined within the task or repository "silo" predefined by system AI models. Current Al systems with their data silos and predefined rules/models cannot adjust to changing circumstances and cannot provide actionable recommendations. Moreover, traditional system outputs cannot articulate their assumptions so that users know when such assumptions and beliefs are no longer applicable and system outputs are therefore obsolete. Because of this, system outputs tend to be difficult to use and apply in an actionable manner in the real world. Moreover, in the past, using purely symbolic and/or statistical tools, it has been difficult to represent deeply nuanced, highly interconnected semantics because symbols are highly granular, with bright-line separations between them. Symbolic knowledge representation (KR) often requires designers to abandon much of the information otherwise implicit in problem domains because the KR does not offer any easy nor nuanced way to represent it, and because symbols are too semantically 'large' to adequately represent and/or refrain from 'hiding' critical aspects of the modeled systems. Beyond this, such KRs cannot readily model nuanced cause-and-effect. As a consequence, purely symbolic systems are often unable to perform beyond the original intention and mindset of the knowledge engineer. That is to say, such systems cannot construe the world in new ways based on dynamic task demands. For example, a system which understands a 'table' only as a piece of 'furniture' will not be able to construe/re-construe it as being capable of serving as 'shelter '(i.e., something one can hide under) in a context which demands this.

Symbols are opaque without internal semantics or information about how various aspects of them could be reused or modified in novel contexts. Neural networks also operate at a level of abstraction too far below concepts to be able to easily replace them in everyday use, and are also highly semantically opaque.

When seeking to solve a particular problem with Artificial Intelligence, it is critical to look at the following two aspects at a minimum: a) what is the epistemology underlying the problem (how is the problem itself as well as the information supporting that problem structured semantically?) and b) Should the answer to the problem ideally be structured as statistical outputs or as recommended actions, predictions, or some other meaning/understanding-based output? If the underlying semantics of the problem structure well in terms of linear combinations of factors, and the question is truly best answered in terms of statistical measures or correlations, then the problem can be solved with traditional methods. If neither of these is true, however, then only understanding-based methods will actually be able to solve the problem.

Traditional Al systems tend not to provide actionable outputs that is, outputs at a level of specificity and embodying sufficient understanding of cause-and-effect such as to enable real-world action. An example would be asking an Artificial Intelligence system whether or not it is safe to cross the street at a particular point; the system may reply that there is a 22% chance of being struck if crossing is attempted at the present time, which may be accurate, but not actionable. Instead, the system must understand street-crossing and the current environment to a level sufficient to indicate: 'wait for the panel van to complete its turn, then you're safe to cross'. Goals include providing decision makers with defensible insights that are not inherently obvious due to the complexity of various situations and/or due to cognitive biases that tend to obscure understanding.

Therefore, there is a need for a system and method that provides nuanced artificial intelligence reasoning, decision-making, and recommendations that allow for extraction of implicit knowledge in any given domain, enables solutions to problems unlike those previously anticipated by the system, and allows for artificial intelligence solutions that better understand the problems they are solving. It is also desirable to limit the amount of knowledge-engineering and 'pre- cognizing' required to use a given system in new problem domains. These and other features and advantages of the present disclosed system and method will be explained and will become obvious to one skilled in the art through the summary of the disclosure that follows.

### SUMMARY OF THE DISCLOSURE

Traditional Al systems are highly dependent on first-order predicate calculus and predetermined factors and logic (mostly rule-based or statistical inference). Understanding human minds and real-world objects and organizations, however, requires understanding. To model the real world, it's necessary to gather and store all kinds of information, often seemingly unrelated, and develop an intuition about how these bits of information work together to generate cause and effect. Achieving such understanding requires new methods for how data is stored and reasoning is performed.

Critical human elements like culture, formal/informal organizations, norms, taboos, and trust are also impenetrable by rule/variable- based systems.

The present system and method largely overcomes the usual limitations by following an approach much more similar to human intelligence: the system makes use of all available information, in a nuanced manner, without imposing assumptions. As will be described, the present system and method can quickly and accurately reuse the information it has in new ways in real time, creating new understandings in light of newly received information with great speed and accuracy. It can easily bring multiple perspectives and theories to bear on a question and weigh the merits of these perspectives without arbitrary preconceptions.

The system and method described herein includes not only explicit information, but also takes into account subtle, yet essential aspects of decision making that a human would have a difficult time articulating: implicit knowledge, psychology, values, norms, emotion, and cognition. Hence it can anticipate and bring to the human decision maker's attention important connections and implications of greatest interest at much greater speed and without cognitive biases that human minds tend to impose.

This approach enables the construction of a universal simulation system including a universally-applicable knowledge representation language. Such a system can take what appears to be disparate 'bits' of information and model and combine them in a holistic manner.

In general, we will come to understand the real world and the human experience at a much deeper level, combining the two in a highly powerful way.

As such, according to one aspect, a system and method wherein the system provides improved performance for computing input knowledge data within a computer environment. The system and method generating a controlled action output by enabling nuanced cognitive data storage and decision processing based thereon within the computing environment having a processor, a non-transitory memory pool communicatively coupled to the processor and having computer executable instructions. The system including an input interface communicatively coupled to an input system for receiving input knowledge data, a task, and user input, and an output interface communicatively coupled to an output system for generating the controlled action output. The system also including a core processing system having a plurality of intercoupled components and a data pool for storing received input knowledge data and derived atomic knowledge data and concepts in one or more of the intercoupled components and being accessible to each of the intercoupled components. The intercoupled components include, two or more of the following system components. A core intuitive processing system having a set of computer programs including one or more reasoning algorithms, and reasoning design guides, and a simulation module for performing simulations among and between the system components related to the received task. Aa knowledge representation formalism module is configured for nuanced atomic representation of any type of knowledge data and utilized energy flows between knowledge data. A deep mindmaps module is configured to create and or store deep mindmaps that include one or more of various collections of knowledge data or atomic knowledge data. A modeling component is configured to providing one or more task models responsive to the received task. A language meaning simulator is configured to provide semantic or language interpretations related to the received knowledge data and can include one or more of a natural language processer module for determining an interpretation of the input knowledge data and a sentiment analyzer module for determining a sentiment related to the input knowledge data. A meaning extract module is configured to extract at least one of meanings from a language of the received knowledge data not only language and semantics from the received knowledge data. A tradeoff/risk analyzer module is configured to analyze one or more tradeoffs and risks as a part of the performed simulation of the core intuitive processing system. An optimization module has optimization algorithms configured to optimize one or more inter-module operations within the system. A cross-domain simulator is configured with one or more predictor algorithms. The system receives the task and generates an output command action.

According to still another aspect, a system and method providing improved computing of knowledge data from received input knowledge data within a computer environment for managing the creation, storage, and use of atomic knowledge data from that input knowledge data that include nuanced cognitive data related to the data information for improving decision processing within the computing environment having a processor, a non-transitory memory communicatively coupled to the processor and having computer executable instructions. The system includes an input interface communicatively coupled to an input system for receiving input knowledge data and an output interface communicatively coupled to an output system for generating the controlled action output. The systems also includes a core processing system having a plurality of intercoupled components and a data pool for storing received input knowledge data, and configured to break the received input knowledge data into its smallest form to include semantic and syntactic data related thereto by performing two or more of the input knowledge data analysis steps: analyzing the input knowledge data to identify semantics within input knowledge data; discovering through analyzation recurrent useful semantic patterns in the input knowledge data; discovering all relevant aspects related to, associated with, or inherent in the input knowledge data; identifying the types of information contained within the input knowledge data; analyzing the input knowledge data to identify traces of underlying processes or relations of the input knowledge data to other knowledge data and information; identifying characters and image information within the input knowledge data; identifying arrangements of characters and images as they relate to each other within the input knowledge data; extracting meaning from the input knowledge data or the language meaning simulator; extracting sentiments from the input knowledge data; and identifying syntactic structure and patterns within the input knowledge data. After such input knowledge analysis steps, the system and method provides for receiving the outputs of the two or more input knowledge data analysis steps and in response thereto performing the processes of determining a set of concepts that explain a plurality of nuanced aspects of the input knowledge data and storing the determined concepts in the memory pool. It further provides for combining two or more concepts with the set of determine concepts pairwise, creating atoms of knowledge data (atomic knowledge data) from the combined two or more concepts, and storing the created atomic knowledge data in the memory pool.

According to still another aspect, a system and method for improving the performance of a data computing system by enabling nuanced cognitive data storage and decision processing based thereon within a computing environment having a processor, a non-transitory memory pool communicatively coupled to the processor, computer executable instructions for performing processing steps and an input interface communicatively coupled to a first system receiving a plurality of input knowledge data with at each input data knowledge being associated with or representing by a singular instance of knowledge and wherein one or more of the input knowledge data represents a nuanced knowledge. The system configured for storing the received input knowledge data in the memory pool in a free-form abstract format such that each first stored input data knowledge is initially disassociated and non-related from each second stored input data knowledge. The system also configured for connecting a first set of two or more of the stored input knowledge data including at least a first portion of the nuanced knowledge input knowledge data with a first set of links to form a first knowledge concept, receiving a first initiating energy at one of the first stored input knowledge data, and responsive to the received first initiating energy, spreading an amount of first link energy to each connected first link through each of the first input knowledge data within the first knowledge concept wherein for each first input data knowledge an amount of input link energy to the first input data knowledge is replicated to each output link thereof, wherein the associated link energy for the first links binds the first input knowledge data within the first knowledge concept, and connecting a second set of two or more of the stored input knowledge data including at least a second portion of the nuanced knowledge input knowledge data with a second set of links to form a second knowledge concept, wherein either none or one or more of the input knowledge data within the second knowledge concept are input knowledge data within the first knowledge concept. The system also configured for receiving a first initiating energy at one of the second stored input knowledge data, and responsive to the received second initiating energy, spreading an amount of second link energy to each connected link through each of the input knowledge data within the second knowledge concept wherein for each second input data knowledge an amount of input link energy to the second input data knowledge is replicated to each output link thereof, wherein the associated second link energy for the second links binds the second input knowledge data within the second knowledge concept and associating the first knowledge concept with the second knowledge concept into a combined knowledge concept, and responsive to the associating, connecting one or more of the first input knowledge data to one or more of the second input knowledge data using third links and spreading an amount of third energy to the third links, and changing at least one or more of the first link energy or the second link energy as a result of the associating. The system further configured for receiving a third initiating energy into the combined knowledge concept, wherein responsive to the received third initiating energy identifying at least one additional stored input data knowledge not within the first input knowledge data or the second input knowledge data, and adding the additional stored input data knowledge and one or more fourth links to the combined knowledge concept and spreading fourth energy to the fourth links and changing one or more of the first link energies or the second link energies. The system forming a reasoning substrate from the combined knowledge concept, receiving a decision input energy at an input edge input data knowledge of the combined knowledge concept of the reasoning substrate and flowing the decision input energy through the links connecting the input knowledge data of combined knowledge concept of the reasoning substrate responsive to receiving the decision input energy. The system also configured for receiving at an output edge input data knowledge a summation of the decision input energy flowing through the combined knowledge concept from the input edge input data knowledge as an instant decision energy and comparing the receive instant decision energy at the output edge input data knowledge of the reasoning substrate with a predefined decision energy value. The system having an output interface communicatively coupled to a second system generating an output command action at the output interface responsive to the comparing.

In another aspect, a system and method provides nuanced artificial intelligence, reasoning, decision making and recommendation with the system having a computer processor, a non- volatile computer-readable memory pool, and a data receiving interface. The system includes the non- volatile computer-readable memory pool being configured with computer instructions to receive input data via said data receiving interface, transform input data into a set of concept energy tuples, wherein each concept energy tuple describes how much energy should be placed in a particular concept node, generate one or more knowledge models and propagate one or more concept energy tuples selected from said set of concept energy tuples throughout said one or more knowledge models. The system and method also configured for processing the selected one or more concept energy tuples through a reasoning substrate and generating a controlled action at an output interface responsive to the processing of the selected one or more concept energy tuples.

Further aspects of the present disclosure will be in part apparent and in part pointed out below. It should be understood that various aspects of the disclosure may be implemented individually or in combination with one another. It should also be understood that the detailed description and drawings, while indicating certain exemplary embodiments, are intended for purposes of illustration only and should not be construed as limiting the scope of the disclosure.

### BRIEF DESCRIPTION OF THE DRAWINGS

FIGS 1 and !A are schematic block diagrams of a system providing a universal task-independent simulation and control platform that generates controlled actions using nuanced Al according to one exemplary embodiment.
FIG. 2 illustrates an exemplary process flow for atomizing input knowledge information according one exemplary embodiment.
FIG. 3 is a graphical illustration of a Deep MindMap with concept nodes or data points, their association within the MindMap and the flow of energy through and between the concept nodes within the MindMap according one exemplary embodiment.
FIG. 4 is an illustration of a Deep MindMap according one exemplary embodiment.
FIG. 5 illustrates an exemplary process flow for providing nuanced artificial intelligence reasoning, decision-making, and recommendations in accordance with an embodiment of the present disclosed system and method.
FIG. 6 illustrates an exemplary process flow for providing nuanced artificial intelligence reasoning, decision-making, and recommendations in accordance with an embodiment of the present disclosed system and method.
FIG. 7 illustrates a schematic overview of a computing device, in accordance with an embodiment of the present disclosed system and method.
FIG. 8 illustrates a schematic overview of an embodiment of a system for providing nuanced artificial intelligence reasoning, decision-making, and recommendations, in accordance with an embodiment of the present disclosed system and method.
FIG. 9 illustrates a schematic overview of an embodiment of a system for providing nuanced artificial intelligence reasoning, decision-making, and recommendations, in accordance with an embodiment of the present disclosed system and method.FIG 10 is an illustration of a network diagram for a cloud based portion of the system, in accordance with an embodiment of the present disclosed system and method.
FIG. 11 is an illustration of a network diagram for a cloud based portion of the system, in accordance with an embodiment of the present disclosed system and method.

It should be understood that throughout the drawings, corresponding reference numerals indicate like or corresponding parts and features.

### DETAILED DESCRIPTION

The following description is merely exemplary and is not intended to limit the present disclosed system and method or their applications.

To start, we will provide a brief overview of some definitions as used within this description and the claims.

### DEFINITIONS

User: A user is a user of the system that has a system task that needs to be performed by the system. The user can be a single person, a group of persons, an entity or a group of entities. As described herein, a user is intended to mean one or more and to include groups of individuals or entities.

System Task: A System Task is a concrete problem representation, often including success metrics and a mapping to some real-world domain, which consists of a set of inputs and outputs and an algorithm capable of ingesting the inputs and generating the outputs.

INTELNET: INTELNET is a knowledge representation formalism, defined such that it enables nuanced, atomic representation of any type of data.

COGVIEW: COGVIEW sits on top of INTELNET and provides theoretical support for the representation within INTELNET of worldview, belief, religion, and related psychological information.

Atom/ Atomic Data: Atoms or Atomic data is data and information broken down to and represented via 'atoms' that are as semantically 'small' (containing as little information) as possible, thus generating 'pure data' capable of supporting nuanced reasoning and advanced Al processes, including but not limited to contextualized runtime combination and re-combination in support of various requirements.

Concept Node: INTELNET structures data as a graph, a term known to any computer scientist. Graphs consist of nodes and links; the nodes in INTELNET represent concepts and the edges pathways upon which energy (defined next) can flow. Concepts are typically named in uppercase English, though any language is acceptable. Examples include DOG and HAPPINESS.

Energy: Energy is a concept unique to INTELNET, and is defined as a scalar value with an associated positive or negative valence. Energy is generally held within concept nodes that is, concept nodes have energies associated with them.

Link: A link is another name for an edge in an INTELNET graph. The role of a link is to guide energy flow between nodes. Links can pass the energy traversing them unchanged, or can modify that energy based on an arbitrary function.

Energy Flow: Energy flow describes the process by which energy flows across INTELNET links (graph edges) once it has been introduced into a concept.

Energy Target: An energy target indicates a concept node that, by virtue of some aspect of the functioning of a system, 'should' be expected to receive energy due to some property of that system. Typically, an energy target will be applied to a concept node in cases where the importance of that concept node cannot be inferred from other aspects of the INTELNET graph that concept node is embedded within. As an example, in a psychological INTELNET graph, HAPPINESS may receive a high positive energy target because this is something that humans desire for its own sake (and not necessarily for what its presence provides otherwise). Similarly, LOSS may receive a high negative target.

Target Score: A target score describes the extent to which a given INTELNET graph energy configuration reflects the target scores that have been assigned to the concept nodes within that graph.

Clash: A clash occurs when energy flows of negative and positive energy meet at the same concept node. Clashes are indicative of hidden aspects of the domain that is being modeled. As an example, clashes in knowledge substrates with morally-related subject matter often indicate the inherent conflict in the overall subject matter, and the concepts where the clashes take place indicate the core subject matter of the moral conflict.

Reasoning Algorithm (sometimes referred to as CogGenie/Genie) : A set of reasoning algorithms or CogGenies, each of which solves a specific problem or task and in many embodiments are specialized application programs designed to produce a task result.

Model: A model (often consisting of a single or of a set of INTELNET graphs) can be single instances or layered models within a model architecture, or having parent or child models associated with each model. For instanced a layered model, can have a first layer, but have greater detail within a secondary layer for particular collections of concepts and atoms. One layer of a model may sometimes represent a 'metalayer' used to understand the phenomena that generate other layers of the model.

Reasoning Substrate: A set of models and/or INTELNET graphs.

Knowledge Base (KB): A reasoning substrate.

Task Model: A model that seeks to provide understanding of the inputs, outputs, and processes involved in a specific task.

Deep MindMap: A Deep MindMap is a general name for an INTELNET network. Such Deep MindMaps can be graphs or diagrams may describe in depth how another person thinks and views the world, and may include information including but not limited to nuanced objects, processes, and local cultures/viewpoints. Deep MindMaps are often intended to be straightforward to create and to understand. Deep MindMaps enable the system herein to understand information, objects, people, situations, and other entities and to create outputs tailor-made for some task.

CogDataPool: A collection of stored data that includes contexts, atoms and knowledge and changes data that can be atomized in some embodiments and stored in a common manner, often via INTELNET graphs, within any component of the system including, but not limited to the CogBase, the Deep MindMaps, the COGVIEW, or any other system component, all of which can have direct or indirect access to the data stored within any other system component which collectively is referred herein functionally as the CogDataPool.

Frames and Framing: Along the lines of how this term is defined within the field of cognitive linguistics, generally, a frame is a 'lens' through which a particular situation is viewed. In the context of the 'frame problem', a 'frame' refers to the inability of specific traditional Al approaches to predict how changes in one aspect of a system will affect other aspects, thus making it difficult or impossible to perform certain critical reasoning tasks.

Controlled action: A controlled action is an output of the system and can include any useful output or action including, a generated control message or signal, a message that is predefined and stored, or one that is created during the process, or is an output on a graphical user interface (GUI) such as a map, a set of data, an indicator, a message or a set of data or information, by ways of examples, but not limited thereto.

### INTRODUCTION

The systems and methods presented herein illustrate an implementation as to how commonsense and other forms of nuanced knowledge can be understood, theorized, stored, reasoned over and made useful in an actionable manner..

The system presented here supports manifold new possibilities for taking semantics into account within Al, Big Data, NLP, NLU, and more.

The system presented here provides powerful tools for decision making, understanding, simulating, extracting information, and using implicit knowledge in contextually- sensitive ways. The system provides for anticipatory analytics to be implemented as well as simulations with action and effects predictions. Via atomized data, dynamic simulations take into account not only current intelligence and situational details, but also information the user was not previously aware they should consider or include within the model or task. The present system can compute the consequences of various potential actions and outcomes, taking real-world people and events into account in real time. The system can include relative value and costs for each possible simulated course of action and determine and identify tradeoffs involved in generating controlled actions. The system also enables deep semantics-based natural language understanding (facilitated in one embodiment via COGPARSE), via the robust combination of semantics with reasoning techniques.

A tradeoff/risk module 176 can include an analyzer 178 can provide for receiving the various simulation results and data and models and provide additional data such as metadata regarding the tradeoffs under consideration by the system 100.

### Overview of Systems and Method

In one embodiment, a system and method wherein the system provides improved performance for computing input knowledge data within a computer environment. The system and method generating a controlled action output by enabling nuanced cognitive data storage and decision processing based thereon within the computing environment having a processor, a non- transitory memory pool communicatively coupled to the processor and having computer executable instructions. The system including an input interface communicatively coupled to an input system for receiving input knowledge data, a task, and user input, and an output interface communicatively coupled to an output system for generating the controlled action output. The system also including a core processing system having a plurality of intercoupled components and a data pool for storing received input knowledge data and derived atomic knowledge data and concepts in one or more of the intercoupled components and being accessible to each of the intercoupled components. The intercoupled components include, two or more of the following system components.

A core intuitive processing system having a set of computer programs including one or more reasoning algorithms, and reasoning design guides, and a simulation module for performing simulations among and between the system components related to the received task. A knowledge representation formalism module is configured for nuanced atomic representation of any type of knowledge data and utilized energy flows between knowledge data. A deep mindmaps module is configured to create and or store deep mindmaps that include one or more of various collections of knowledge data or atomic knowledge data. A modeling component is configured to providing one or more task models responsive to the received task. A language meaning simulator is configured to provide semantic or language interpretations related to the received knowledge data and can include one or more of a natural language processer module for determining an interpretation of the input knowledge data and a sentiment analyzer module for determining a sentiment related to the input knowledge data. A meaning extract module is configured to extract at least one of meanings from a language of the received knowledge data not only language and semantics from the received knowledge data. A tradeoff/risk analyzer module is configured to analyze one or more tradeoffs and risks as a part of the performed simulation of the core intuitive processing system. An optimization module has optimization algorithms configured to optimize one or more inter-module operations within the system. A cross-domain simulator is configured with one or more predictor algorithms. The system receives the task and generates an output command action.

In some embodiments, a task goal simulator is configured for simulating a plurality of outcomes for the received task responsive to the derived atomic knowledge data and concepts, from two or more of the following: the one or more reasoning algorithms, at least one reasoning design guides, a knowledge representation formalism of the nuanced atomic knowledge data, one or more stored deep mindmaps, provide semantic or language interpretations of the received knowledge data, one or more natural language interpretations, one or more determined sentiments, one or more extracted meanings from a language of the received knowledge data not only language and semantics from the received knowledge data, and the one or more tradeoffs and risks.

In some embodiments, an input system coupled to the input interface with the input system configured to host a graphical user interface (GUI) for interfacing with a user or a user device.

In some embodiments, the system includes at least one of the input system and the output system being selected from the group of third party systems including a third party system selected from the group consisting of a advertising system, a language processing system, a webhosting system, a network communication system, a social network system, a command and control system, a messaging system, an alerting system, a decision making system, a medical diagnosis system, a device or system controller, an environmental control system, and a game hosting system.

In some embodiments, the data pool storing knowledge data and atomic knowledge data includes a communicatively coupled cognitive knowledge database storing at least a portion of the atomic knowledge data and one or more concepts.

In some embodiments, the system includes a translator system for translating data received in, or communicated out of the data pool with other system components.

In some embodiments, the data pool is configured for storing in numerous different formats atomized knowledge data, received knowledge data, concepts the models and the deep mindmaps.

In some embodiments, the core system further includes at least one of a natural language processer module and a sentiment analyzer module.

In some embodiments, in some embodiments the optimization module includes algorithms for optimization resolution including received task-based negotiations and received task-based counteroffer creation.

In some embodiments, the core module and one or more of the core module components is configured to perform the steps of a) analyzing the input knowledge data to identify semantics within input knowledge data; b) discovering through analyzation recurrent useful semantic patterns in the input knowledge data; c) discovering all relevant aspects related to, associated with, or inherent in the input knowledge data; d) identifying the types of information contained within the input knowledge data; e) analyzing the input knowledge data to identify traces of underlying processes or relations of the input knowledge data to other knowledge data and information; f) identifying characters and image information within the input knowledge data; g) identifying arrangements of characters and images as they relate to each other within the input knowledge data; extracting meaning from the input knowledge data or the language meaning simulator; h) extracting sentiments from the input knowledge data; and i) identifying syntactic structure and patterns within the input knowledge data

In some embodiments, following the above two or more input knowledge data analysis processes, the system is configured for receiving the outputs of the two or more input knowledge data analysis steps, and in response performing the steps of determining a set of concepts that explain a plurality of nuanced aspects of the input knowledge data, storing the determined concepts in the memory pool, combining two or more concepts with the set of determine concepts pairwise, creating atoms of knowledge data (atomic knowledge data) from the combined two or more concepts, and storing the created atomic knowledge data in the memory pool.

In some embodiments, the core processing system and one or more of the modules thereof is configured for storing the received input knowledge data in the memory pool in a free-form abstract format such that each first stored input data knowledge is initially disassociated and non-related from each second stored input data knowledge, connecting a first set of two or more of the stored input knowledge data including at least a first portion of the nuanced knowledge input knowledge data with a first set of links to form a first knowledge concept, receiving a first initiating energy at one of the first stored input knowledge data, and responsive to the received first initiating energy, spreading an amount of first link energy to each connected first link through each of the first input knowledge data within the first knowledge concept wherein for each first input data knowledge an amount of input link energy to the first input data knowledge is replicated to each output link thereof, wherein the associated link energy for the first links binds the first input knowledge data within the first knowledge concept, connecting a second set of two or more of the stored input knowledge data including at least a second portion of the nuanced knowledge input knowledge data with a second set of links to form a second knowledge concept, wherein either none or one or more of the input knowledge data within the second knowledge concept are input knowledge data within the first knowledge concept, and receiving a first initiating energy at one of the second stored input knowledge data, and responsive to the received second initiating energy, spreading an amount of second link energy to each connected link through each of the input knowledge data within the second knowledge concept wherein for each second input data knowledge an amount of input link energy to the second input data knowledge is replicated to each output link thereof, wherein the associated second link energy for the second links binds the second input knowledge data within the second knowledge concept, associating the first knowledge concept with the second knowledge concept into a combined knowledge concept, and responsive to the associating, connecting one or more of the first input knowledge data to one or more of the second input knowledge data using third links and spreading an amount of third energy to the third links, and changing at least one or more of the first link energy or the second link energy as a result of the associating, receiving a third initiating energy into the combined knowledge concept, wherein responsive to the received third initiating energy identifying at least one additional stored input data knowledge not within the first input knowledge data or the second input knowledge data, and adding the additional stored input data knowledge and one or more fourth links to the combined knowledge concept and spreading fourth energy to the fourth links and changing one or more of the first link energies or the second link energies, forming a reasoning substrate from the combined knowledge concept, receiving a decision input energy at an input edge input data knowledge of the combined knowledge concept of the reasoning substrate, flowing the decision input energy through the links connecting the input knowledge data of combined knowledge concept of the reasoning substrate responsive to receiving the decision input energy, receiving at an output edge input data knowledge a summation of the decision input energy flowing through the combined knowledge concept from the input edge input data knowledge as an instant decision energy, and comparing the receive instant decision energy at the output edge input data knowledge of the reasoning substrate with a predefined decision energy value. This can include the output interface is communicatively coupled to the second system generating the output command action at the output interface responsive to the comparing.

In some embodiments, the process of flowing the decision input energy through the links and the input knowledge data of the combined knowledge concept is summed and includes no decay due to the process flow.

In some embodiments, the process of flowing the decision input energy through the combined knowledge concept is not completed until all links and all loops have been traversed.

In some embodiments, all energies are defined as a set of energy tuples.

In some embodiments, the input data knowledge that represents a nuanced knowledge is a nuanced knowledge selected from the group consisting of the group consisting of a key word, an interest, a goal, a trait, a view, an opinion, a symbol, a semantic, a meaning, an inflection, and an interpretation.

In some embodiments, the combined knowledge concept is representative of a knowledge model includes one or more of a domain model, a cultural model, a psychological model, a customer model, a customer intelligence model, a topic model, an area model, a political model, a political personage model, a government needs model, a goal model, a belief model, a worldview model, and a market model.

In some embodiments, the system can also include in response to receiving the third initiating energy, discovering a third knowledge concept having at least one or more third input data knowledge that is not contained within the first or second knowledge concepts, and associating the third knowledge concept with the first or second knowledge concept within the combined knowledge concept or with the combined knowledge concept, and responsive to the associating with the third knowledge concept, connecting one or more of the third input data knowledge to one or more of the first or second input knowledge data using third links and spreading an amount of third energy to the third links.

In some embodiments, following the associating, the system can further provide for changing at least one or more of the first or second link energies as a result of the associating.

According to another embodiment, a system and method providing improved computing of knowledge data from received input knowledge data within a computer environment for managing the creation, storage, and use of atomic knowledge data from that input knowledge data that include nuanced cognitive data related to the data information for improving decision processing within the computing environment having a processor, a non-transitory memory communicatively coupled to the processor and having computer executable instructions. The system includes an input interface communicatively coupled to an input system for receiving input knowledge data and an output interface communicatively coupled to an output system for generating the controlled action output.

The system also includes a core processing system having a plurality of intercoupled components and a data pool for storing received input knowledge data, and configured to break the received input knowledge data into its smallest form to include semantic and syntactic data related thereto by performing two or more of the input knowledge data analysis steps: analyzing the input knowledge data to identify semantics within input knowledge data; discovering through analyzation recurrent useful semantic patterns in the input knowledge data; discovering all relevant aspects related to, associated with, or inherent in the input knowledge data; identifying the types of information contained within the input knowledge data; analyzing the input knowledge data to identify traces of underlying processes or relations of the input knowledge data to other knowledge data and information; identifying characters and image information within the input knowledge data; identifying arrangements of characters and images as they relate to each other within the input knowledge data; extracting meaning from the input knowledge data or the language meaning simulator; extracting sentiments from the input knowledge data; and identifying syntactic structure and patterns within the input knowledge data. After such input knowledge analysis steps, the system and method provides for receiving the outputs of the two or more input knowledge data analysis steps and in response thereto performing the processes of determining a set of concepts that explain a plurality of nuanced aspects of the input knowledge data and storing the determined concepts in the memory pool. It further provides for combining two or more concepts with the set of determine concepts pairwise, creating atoms of knowledge data (atomic knowledge data) from the combined two or more concepts, and storing the created atomic knowledge data in the memory pool.

According to still another aspect, a system and method for improving the performance of a data computing system by enabling nuanced cognitive data storage and decision processing based thereon within a computing environment having a processor, a non-transitory memory pool communicatively coupled to the processor, computer executable instructions for performing processing steps and an input interface communicatively coupled to a first system receiving a plurality of input knowledge data with at each input data knowledge being associated with or representing by a singular instance of knowledge and wherein one or more of the input knowledge data represents a nuanced knowledge. The system configured for storing the received input knowledge data in the memory pool in a free-form abstract format such that each first stored input data knowledge is initially disassociated and non-related from each second stored input data knowledge.

The system also configured for connecting a first set of two or more of the stored input knowledge data including at least a first portion of the nuanced knowledge input knowledge data with a first set of links to form a first knowledge concept, receiving a first initiating energy at one of the first stored input knowledge data, and responsive to the received first initiating energy, spreading an amount of first link energy to each connected first link through each of the first input knowledge data within the first knowledge concept wherein for each first input data knowledge an amount of input link energy to the first input data knowledge is replicated to each output link thereof, wherein the associated link energy for the first links binds the first input knowledge data within the first knowledge concept, and connecting a second set of two or more of the stored input knowledge data including at least a second portion of the nuanced knowledge input knowledge data with a second set of links to form a second knowledge concept, wherein either none or one or more of the input knowledge data within the second knowledge concept are input knowledge data within the first knowledge concept.

The system is also configured for receiving a first initiating energy at one of the second stored input knowledge data, and responsive to the received second initiating energy, spreading an amount of second link energy to each connected link through each of the input knowledge data within the second knowledge concept wherein for each second input data knowledge an amount of input link energy to the second input data knowledge is replicated to each output link thereof, wherein the associated second link energy for the second links binds the second input knowledge data within the second knowledge concept and associating the first knowledge concept with the second knowledge concept into a combined knowledge concept, and responsive to the associating, connecting one or more of the first input knowledge data to one or more of the second input knowledge data using third links and spreading an amount of third energy to the third links, and changing at least one or more of the first link energy or the second link energy as a result of the associating.

The system is further configured for receiving a third initiating energy into the combined knowledge concept, wherein responsive to the received third initiating energy identifying at least one additional stored input data knowledge not within the first input knowledge data or the second input knowledge data, and adding the additional stored input data knowledge and one or more fourth links to the combined knowledge concept and spreading fourth energy to the fourth links and changing one or more of the first link energies or the second link energies. The system forms a reasoning substrate from the combined knowledge concept, receiving a decision input energy at an input edge input data knowledge of the combined knowledge concept of the reasoning substrate and flowing the decision input energy through the links connecting the input knowledge data of combined knowledge concept of the reasoning substrate responsive to receiving the decision input energy.

The system is also configured for receiving at an output edge input data knowledge a summation of the decision input energy flowing through the combined knowledge concept from the input edge input data knowledge as an instant decision energy and comparing the receive instant decision energy at the output edge input data knowledge of the reasoning substrate with a predefined decision energy value. The system having an output interface communicatively coupled to a second system generating an output command action at the output interface responsive to the comparing.

In some embodiments, the process of flowing the decision input energy through the links and the input knowledge data of the combined knowledge concept is summed and includes no decay due to the process flow.

In some embodiments, the process of flowing the decision input energy through the combined knowledge concept is not completed until all links and all loops have been traversed.

In some embodiments, all energies are defined as a set of energy tuples.

In some embodiments, the input data knowledge that represents a nuanced knowledge is a nuanced knowledge selected from the group consisting of the group consisting of a key word, an interest, a goal, a trait, a view, an opinion, a symbol, a semantic, a meaning, an inflection, and an interpretation.

In some embodiments, in response to receiving the third initiating energy, the process and system provides for discovering a third knowledge concept having at least one or more third input data knowledge that is not contained within the first or second knowledge concepts, and associating the third knowledge concept with the first or second knowledge concept within the combined knowledge concept or with the combined knowledge concept, and responsive to the associating with the third knowledge concept, connecting one or more of the third input data knowledge to one or more of the first or second input knowledge data using third links and spreading an amount of third energy to the third links.

In another embodiment, a system and method provides nuanced artificial intelligence, reasoning, decision making and recommendation with the system having a computer processor, a non-volatile computer-readable memory pool, and a data receiving interface. The system includes the non- volatile computer-readable memory pool being configured with computer instructions to receive input data via said data receiving interface, transform input data into a set of concept energy tuples, wherein each concept energy tuple describes how much energy should be placed in a particular concept node, generate one or more knowledge models and propagate one or more concept energy tuples selected from said set of concept energy tuples throughout said one or more knowledge models. The system and method also configured for processing the selected one or more concept energy tuples through a reasoning substrate and generating a controlled action at an output interface responsive to the processing of the selected one or more concept energy tuples.

In some embodiments, the generated controlled action is selected from the group of actions selected from the group of actions consisting of a generated control message or signal, a message that is predefined and stored, or one that is created during the process, or is an output on a graphical user interface (GUI) such as a map, data, an indicator, an alert, a message, or a set of data or information.

In some embodiments, the system also includes a goal inference process including identifying concepts, ideas, and keywords potentially indicative of user interests, processing human language keywords and concepts in order to determine other concepts that are semantically related to the user interest and to determine high-level concepts that are semantically related to the user interests, and placing energy into the concepts representing each user interest.

In some embodiments, the energy placed into the concepts representing each user interest is reverse propagated in a reverse direction to discover goals with which the user interests are consistent.

In some embodiments, the non-volatile computer-readable memory pool is further configured to execute a post-processing step system of a emotion simulation process including performing the steps of identifying one or more concepts in said generated controlled action, calculating an energy for a first concept of said one or more concepts, translating said energy into an energy polarity, and assigning said energy polarity to a second concept based on said first concept.

In some embodiments, the non-volatile computer-readable memory pool is further configured to combine said one or more knowledge models in order to generate a combined model.

### Further Embodiments and Details of the Systems and Method

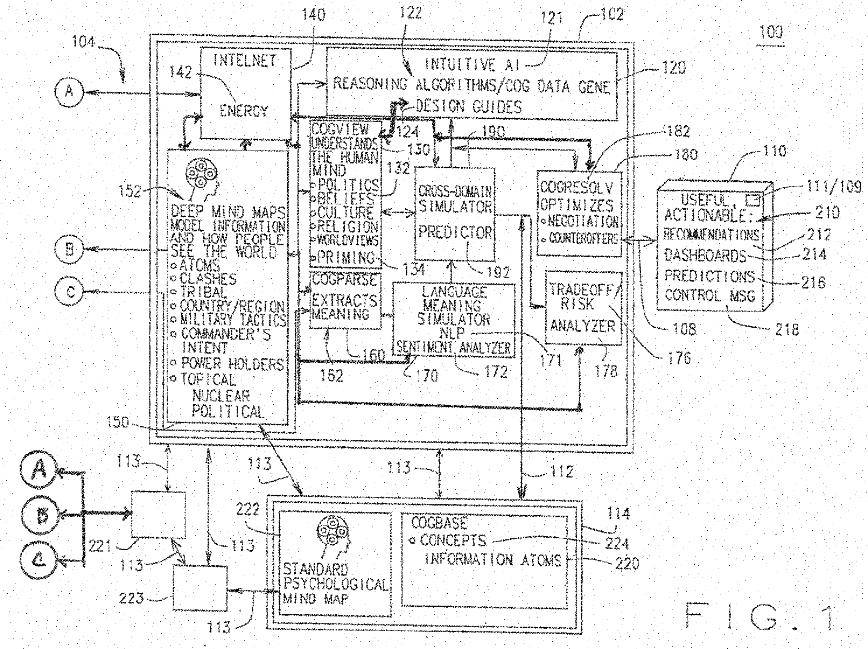

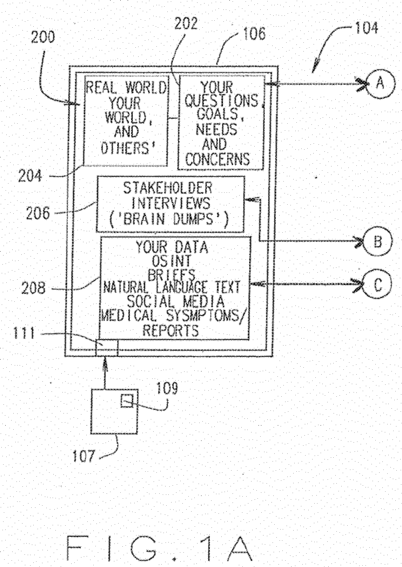

Referring now to the drawing Figures, FIG. 1 provides an overview of a system 100. It will be understood that this is only an exemplary embodiment, and that the modules, and system, and subsystems, as illustrated as well as the interconnections and information flows, are only examples and are not intended to be limiting to those shown. The system 100 includes a core system 102 or set of programs that has input interfaces 104 interfacing to one or more input systems 106 and output interfaces 108 coupled to one or more output systems 110. Generally, the input systems 106 and the output systems 110 are customized for a particular application and can be third party systems or can be user systems of any sort. The two interfaces input interface 104 and output interface 108 can be the same I/O communication interface in some embodiments as is known to those of ordinary skill in the art. The input system 106 can be a computer having an interface 111 for hosting a user system 107 that hosts or supports a graphical user interface (GUI) 109 in one embodiment. In other embodiments, user system 107 can be a third party system as well. Similarly, output system 110 can have an output user interface 111 such as a GUI 109 and output system 110 can be the same as input system 107 and the two GUIs 109 and 111 can be the same.

As shown, the input systems 106 can include input subcomponents or systems 200 such as a set of questions, goals and concerns 202, real world data 204, stakeholder interview results or "brain dumps" 206, as well as user data, OSINT, briefing data, natural language text, social media feeds and posts, medical data, all referred here as user data 208. The output system 110 can include controls for useful actions 210, recommendations 212 in the form of text or data, a GUI in the form of a system dashboard 214, predictive data 216 and control messages 218, by way of examples. Generally, these are referred herein as controlled actions 210.

The system 100 can include an additional system memory interface 112 configured for exchanging data with an internal or external or cloud based database referred to generally herein as CogBase 114. As shown in this example, the CogBase interface 112 is within the various interconnections of the system 102, but can also be general or specific to particular modules as illustrated by memory data transfer links 113. Several examples of memory data transfer links 113 are shown by way of example but others are also possible. As shown, the system can include a translator system 223 for translating data received in, or communicated out of, the memory 114. Further, as the system 100 is described, data can be stored and implemented in numerous formats such as atoms 220, 226, concepts 224, models 132 and Deep MindMaps 152, and as such, generally the memory of the system 100 is referred herein as a pool 221 or a CogDataPool 221. CogDataPool 221 is indicative of the total data memory store system and process regardless of the location or implementation within the various illustrated exemplary embodiments. As will be discussed, this is a completely different way of storing data in that the CogDataPool 221 flexibility provides each and every element and system and process within the system 100 access to any of the stored data at any time.

The system 100 can include a reasoning system 120 that includes intuitive Al instructions 121, design guides 124 and reasoning algorithms 122. These are also referred to herein as CogDataGenies 122. The INTELNET system 140 is a knowledge representation formalism module or subsystem that enables nuanced representation of any type of data, and utilizes a concept of energy 142. A Deep Mindmaps module 150 is one module or repository that can create or store deep mindmaps 152 as described herein. As noted, these can include one or more of various components and collections of data as described further herein. The COGVIEW system 130 provides a model 132 as well and performs the tasks and operations described herein. In this example embodiment, a language meaning simulator 170 can provide semantic or other language interpretations to the knowledge data of the system and can include, in some embodiments, a natural language processer (NLP) 171 and/or can include a sentiment analyzer 172 for its operation. In a related system, the COGPARSE system 162 can extract meanings from not only language but also semantic data such as visual data and expressions as describer herein.

A tradeoff/risk analyzer system 176 includes analysis tradeoff/risk algorithms, models and programs 178 that can be utilized during system simulations as described herein. The CogResolv system 180 provides optimization processes and algorithms 182 for optimizing certain common tasks for resolution such as negotiations and counteroffer creation. Finally, as shown, a cross-domain simulator 190 can include a predictor system or algorithms 192.

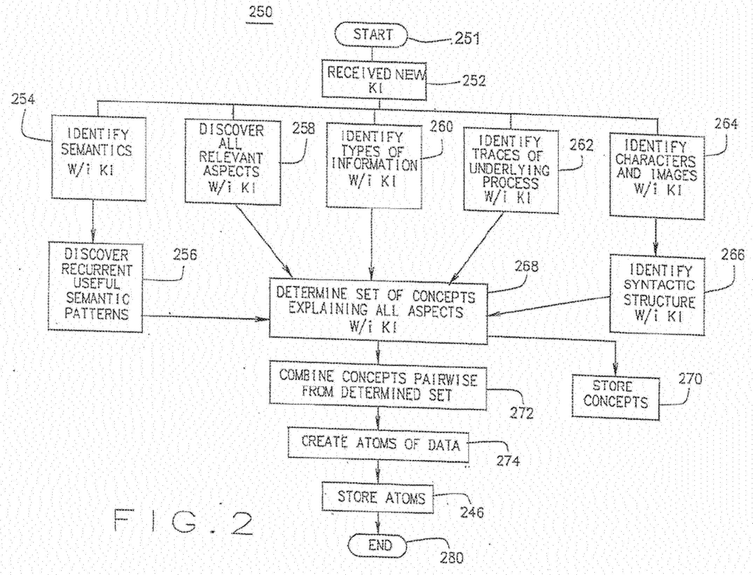

Referring now to FIG. 2, one exemplary process 250 is shown in flowchart form for atomizing data 220 within the scope of the present disclosure. This exemplary process 250 starts at 251 and new knowledge data or knowledge In (KI) is received by one or more of the numerous input interfaces 104 of system 102. One KI is received, unlike other systems that merely perform keyword tagging or storing of the text or images or symbolizing Kl, the present system 102 and process 250 considers the semantic and syntactic as well as other aspects of KI to break the KI data and information down into its smallest form of pure data (also referred to as semantic atoms or atomic data, such as identifying primitives of KI, by way of one example. To accomplish this, the KI is analyzed by a plurality of different processes. As one example, process 254 analyzes KI to identify semantics within KI. Once the semantics are identified, the system discovers through analyzation recurrent useful semantic patterns in process 256. The identified semantics and discovered recurrent useful semantic patterns are provided to a process concept collector 268 as will be explained. As another data analysis method in some embodiments, the process 258 discovers all relevant aspects related to, associated with, or inherent in the KI. In process 260, the KI is analyzed to identify types of information contained within the KI. Process 262 analyzes the KI to identify traces of underlying processes or relations of the KI to other data and information. Process 264 identifies characters and image information within the KI and the arrangement of characters and images related to each other. From this, process 266 can identify syntactic structure, patterns and the like. These are only examples of the atomization processes used by the system 102 to effectively break down all received knowledge information into the smallest possible bits and primitives of information, e.g., atoms.

The outputs of each of processes, alone or in any combination, including one or more of processes 254, 256, 258, 260, 262, 264, and 266, as well as others not shown in the exemplary embodiment of process 250 in Fig. 2, are then utilized to determine a set of concepts 224 that explains all aspects of the KI in process 268. These are stored in memory pool 221 such as CogBase 114 as concepts 224 or in other system components such as Cog View 130, Intelnet 140, and Deep Mindmaps 150. Of course additional input can also be utilized such as the output of CogParse 160 that extracts meaning from the KI or the language meaning simulator 170, sentiment analyzer 172 and the NLP 171. Furthermore, while not shown in Fig. 2, currently stored concepts 224 as well as currently stored atoms 220 can also be utilized in processes 268 and 272.

The concepts 224 of process 268 are then determined set of concepts are then combined pairwise in process 272 and atoms 220 created therefrom in process 274. The determined atoms 220 are then stored.

In some embodiments, the system and method provides nuanced artificial intelligence reasoning, decision-making, and recommendations that allows for extraction and/or use of many types of knowledge, including but not limited to implicit, explicit, real-world, cultural, psychological, practical, processual, and/or physical knowledge, in any given domain, enabling solutions to problems unlike those previously anticipated by the system and allowing for minimal pre-cognizing of problem domains. The technology described herein provides for detailed reasoning. It can represent many different forms of knowledge using the same knowledge representation, greatly facilitating the fusion of information from different domains.

According to some embodiments of the present disclosed system and method, a system provides nuanced artificial intelligence, reasoning, decision making and recommendations includes a computer processor; a nonvolatile computer-readable memory; and a data receiving interface, wherein the non- volatile computer-readable memory is configured with computer instructions configured to: receive input data via said data receiving interface; transform input data into a set of concept energy tuples, wherein each concept energy tuple describes how much energy should be placed in a particular concept node; generate and/or select one or more knowledge models; propagate one or more concept energy tuples selected from said set of concept energy tuples throughout said one or more knowledge models; and generate output data via processing said propagated concept energy tuples through a reasoning substrate.

According to some embodiments, the non- volatile computer- readable memory is further configured to execute post-processing steps on said output data via a goal inference process, generating new final output data.

According to some embodiments, the goal inference process includes identifying concepts, ideas, and keywords potentially indicative of user interests, processing knowledge substrates in order to determine what goals the user may be attempting to achieve as well as other concepts that are semantically related to user interests and/or goals.

According to one exemplary embodiment, energy placed into the concepts representing each user interest is reverse propagated in a reverse direction to discover goals consistent with a user's interests.

According to one embodiment, energy placed into the concepts representing a goal and/or outcome is reverse propagated in a reverse direction to discover means of creating that goal and/or outcome.

According to at least one embodiment, the non- volatile computer-readable memory is further configured to execute post-processing step system comprising an emotion, a psychological, and/or a reasoning simulation processes.

According to some embodiments, the non- volatile computer- readable memory is further configured to combine said one or more knowledge models and/or reasoning substrates in order to generate a combined model and/or reasoning substrate.

According to some embodiments, a method for providing nuanced artificial intelligence, reasoning, decision making and recommendation, comprising the steps of: receiving input data via a data receiving interface; transforming input data into a set of concept energy tuples, wherein each concept energy tuple describes how much energy should be placed in a particular concept node; generating and/or selecting one or more knowledge models; propagating one or more concept energy tuples selected from said set of concept energy tuples throughout said one or more knowledge models; and generating output data via processing said propagated concept energy tuples through a reasoning substrate.

According to one embodiment, the method further includes executing a post-processing step on said output data via a goal inference process, generating new final output data.

According to some embodiments, the method further includes the combination of multiple forms of graph traversal, algorithmic computations, and/or atom combination/recombination across a knowledge substrate and/or set of combined knowledge substrates and/or knowledge sources, and generating output data such an output controlled action.

According to an embodiment of the present disclosed system and method, the method further includes identifying concepts, ideas, and keywords potentially indicative of user interests; processing human language keywords and concepts in order to determine other concepts that are semantically related to the user interest and to determine high-level concepts that are semantically related to the user interests; and placing energy into the concepts representing each user interest.

According to an embodiment of the present disclosed system and method, the method further comprises: identifying one or more concepts in said output data; calculating an energy for a first concept of said one or more concepts; translating said energy into an energy polarity; and assigning said energy polarity to a second concept based on said first concept.

According to an embodiment of the present disclosed system and method, the method further comprises combining said one or more knowledge models in order to generate a combined model. The data processed in this system often involves, but is not limited to, natural language semantics, complex political and social processes, cultures, product knowledge, travel-related knowledge, and deep technical knowledge.

The system's reasoning is transparent, so analysts and supervisors can always ask the system to generate an easy-to-understand reason for particular recommendations or simulation outcomes.

The system offers "graceful" degradation so that rather than failing completely when errors are encountered, as traditional systems tend to, the system expects bad and/or conflicting data and plans for this from the outset.

The system employs error correction, so incorrect data may initially show no effect. As errors increase, performance may begin to gracefully degrade in proportion due to relative error proportion (and/or the system ceases to provide any output, thus maintaining the trustworthiness and real-world usefulness of the system).

The system handles incomplete data. Whenever and as data is provided, the system uses it to enhance specificity, accuracy, and completeness. If information is missing, however, the system may decline to make observations depending on that data; if it does make an observation, it is normally expected that it will generate correct answers.

The system processes inconsistent data in a graceful manner. Many traditional Al approaches fail when new knowledge is added to the system, especially when old knowledge conflicts with new. Under the system presented here, however, both coexist together without conflict.

One exemplary benefit of some embodiments of the system 100 is the use of knowledge to handle non- English data. Via an energy -based CogBASE commonsense database 114, the system 100 employs commonsense knowledge (which tends to be stable across languages) to derive cross-language lexical links.

Since the system is configured with the ability to model and predict human reasoning, belief, and emotional patterns, the system is capable of far better and deeper reasoning than traditional Al has been able to perform. The system is further able to solve problems that traditional Al has been unable to solve. These and other features are described in further detail in the detailed specification below. While the description herein provides details of applications ranging from travel recommendations to intelligence analysis, one of ordinary skill in the art would appreciate that applicability of the system and its functionality and methodologies could be utilized in numerous applications, and embodiments of the present disclosed system and method are contemplated for use with any appropriate application.

Embodiments of the present disclosed system and method generally relate to control systems for controlling one or more controllable actions of a communicatively coupled external system through producing control messages over an output interface wherein the control system uses an improved nuanced Artificial Intelligence control process.

Embodiments of the disclosed system and method comprise one or more of the following components: one or more knowledge models comprising computer data collectively referred to as the reasoning substrate; a process for generating knowledge models and/or reasoning substrates; an input comprised of computer data; a process for transforming inputs into concept nodes and energies; a process for combining knowledge models and/or reasoning substrates into single larger models/substrates; a process for converting knowledge models and inputs into output (the reasoning procedure); a post-processing step involving intermediate or said final results; or any combination thereof. Various embodiments are included, some of which involve application features for interacting with the output of the disclosed system and method. One of ordinary skill in the art would appreciate that there are numerous embodiments of the present disclosed system and method that are possible, and all embodiments are contemplated for use with respect to the systems and methods described herein.

The models of system 100 provide detailed, in-depth models, instantiated to portray real people, places, organizations etc., are preferred over the use of generic models, because the models of the system generate believable, understandable results that can be employed to develop plans. The system 100 further provides for a family of interacting models that can produce large numbers of suggested, plausible outcomes. However, this distribution of plausible outcomes is often difficult to understand because the different models employ and because of overlap, redundancy and inconsistencies. The system 100 provides a suite of loosely coupled models where, in other systems, they cannot be coupled because without the present system 100, it is difficult because of the variety of control parameters (inputs) that are generated. In the present system, in some embodiments, visualization techniques reduce the dimensionality of data and provide understandings of outcomes.

### System Formalisms: INTELNET and CogBase Representation

Given the myriad benefits, it is natural to ask why there has not been more widespread adoption of commonsense and semantic knowledge within Big Data, social data, ML, and natural language understanding (NLU).

One core issue has been that of representation. Traditionally, logic-based approaches have been employed in domains like those listed above. These approaches view knowledge as something expressible in the first order predicate calculus with a Tarskian semantics (McDermott, 1987), suggest that truth or falsity is central (and ultimately can be determined) and require the ability to decide whether certain statements ('logical sentences') are true or false. Deduction is the standard mode of reasoning.

Under logical methods, however, especially when considering commonsense, social, and other forms of non-propositional knowledge, important issues arise regarding construal, nuance, implicitness, truth, and cross-domain model integration, as described below.

In a general sense, the creation of knowledge involves the coalescing of otherwise undifferentiated stimuli into representable forms. INTELNET and CogBASE seek to limit the influence that this extraction process exerts on the knowledge that is obtained and to minimize the amount of assumed context that is unknowingly (and improperly) included. This is important because the more knowledge is 'pre-construed' (as described herein) and pre-contextualized, the less flexibly it can support future reasoning operations.

CogBASE and INTELNET view knowledge as collections of experience and information that can be brought together, as needed and in a context-sensitive manner, to solve problems as they arise. Creative reasoning is greatly facilitated through the reuse of the same information in diverse ways across contexts.

CogBASE and INTELNET store information at an intermediate level of abstraction (between symbols and connectionist networks). Knowledge is dynamically generated, based on the needs and restrictions of a particular context, through the combination of multiple 'bits' or 'atoms' of information. In one embodiment, INTELNET atoms take the form of (concept, energy transfer function, concept) triples connected to one another within a graph database. In another embodiment, CogBASE atoms take the form of (concept semantic primitive, concept) triples connected to one another within a graph database. As described herein, atom elements are often labeled via simple text and words.

Fundamentally different than spreading activation, which does not create new information and which often traverses first-order predicate relations, INTELNET-based systems (including, but not limited to CogBASE) involve the creation of new, highly contextualized concepts on-the-fly via the exchange of information within other concepts. In some embodiments, concepts can co-create each other and form new concepts.

Exposing the internal semantics of concepts makes it possible for Al systems to much more closely 'understand' what concepts represent.

As an example, the FACILITATE semantic primitive indicates that the presence of a particular item (such as a fork) is likely to help facilitate some other goal (such as eating). Other primitives include SPATIAL ASSOCIATION, representing, for example, the notion that students are typically found around schools, TYPICAL, indicating that some set of semantics is prototypical for a particular concept, and STRENGTH, which modulates the degree to which one concept is expected to affect another.

CogBASE and INTELNET are designed to store many different types of data and information. Geolocation data, for example, is handled via a single unified map scheme, whereby various concepts are associated with particular points. In this way, proximity is made available as an input to reasoning.

Data arising from multiple domains can be represented within a single knowledge base and integrated quickly and easily because the core representation is very flexible and does not fundamentally change across domains. Each domain (spatial, affective, etc.) can require the definition of a small number of primitives unique to that domain, but all primitives interoperate through the same energy-based mechanisms.

CogBASE and INTELNET semantic primitives are designed to hide as little information as possible and are created at a level of abstraction intended to best facilitate real- world reasoning. When adding knowledge to the system, the theory always errs on the side of splitting meanings across multiple primitives, enhancing data availability. Information is coded with the intention of precognizing (pre-interpreting) it as little as possible, (1) making it easier to reuse that knowledge in disparate contexts and (2) maximizing the ability of context to shape reasoning in appropriate ways.

Semantic primitives are intended to be as few in number and as semantically 'small' as possible, given that each additional primitive risks increasing opacity (a key quantity to be avoided). CogBASE and INTELNET primitives are intuitive and easily understandable, making it possible to use human cognition to simplify tasks where appropriate by pointing the system towards specific knowledge subcomponents known to be useful for particular types of problems. Attention to those primitives most relevant to local problems and contexts enhances sensitivity.

Under CogBASE and INTELNET, the system is aware that particular atoms may not be dispositive of any particular question, may not hold in the present context, or may be completely incorrect. The idea, however, is that when a number of contextually-selected atoms are considered as a whole, they are capable of generating accurate knowledge and providing a powerful platform for intelligent reasoning about likely states of the world.

### Task Models

In line with the Al functionalities put forth above, the system is able to automatically comprehend response-related tasks, understand their implications, and prioritize subtasks. Commonsense knowledge acts here as a storehouse of lessons learned, providing detailed information about how to handle dangerous situations.

As an example, in a response where the chemical chloropicrin is involved, the system can use its knowledge of the profile and properties of this substance to indicate what tasks, in the current response context, workers should take in order to protect themselves. The system can identify Personal Protective Equipment (PPE) that should be used, materials to be avoided, possible symptoms, and so on.

The goal is to use unobvious information and/or information that is likely to be overlooked in order to keep responders out of harm' s way. The system provides real-time task prioritization based on the computed consequences of each choice and can adjust priorities automatically. The Atom

In modeling, nuance is the key; without it one is forced to throw away information and force the problem into what the model can represent, ultimately leading to failure. It's impossible to resolve problems at a level greater than that which it was originally represented. In a preferred embodiment, the system described herein provides nuance by breaking down information into atoms that are as semantically 'small' as possibleen gendering maximum flexibility.

The atom is what makes a) nuance and b) the ability to recompute meanings and knowledge on the fly possible. One practical definition is 'a small amount of information (as small as possible) that can be reused and reconfigured on-the-fly to meet particular contextualized task demands. Atoms are embedded within semantic meaning spaces and are defined in part through their connections to other atoms. It is important to limit the amount of semantic information stored in an atom, because the more that is stored, the more that is hidden and becomes lost, and the more brittle and unworkable the system becomes. Traditional Al systems employ 'symbols', which represent large amounts of information and are completely opaque, and thus tend to be incapable of supporting true understanding and/or advanced Al.

In one embodiment, an atom can be defined in INTELNET and CogBASE, as a directed/ordered {FROM CONCEPT}- {LINK}- {TO CONCEPT} tuple, where the LINK can be an energy transfer function (in INTELNET) or a primitive (in CogBASE). During reasoning, energy is introduced into the FROM CONCEPT, modified/copied across the LINK, and then that modified/copied energy is delivered to all the TO CONCEPTS. The use of the word 'copied' indicates that if a certain amount of energy enters a FROM CONCEPT, the same energy will be delivered to all TO CONCEPTS linked to that FROM CONCEPT.

In another embodiment, atoms could consist of potentially identifiable extracts of some information that are identified by regular expressions or other means.

During the atomizing process, the knowledge engineer considers a large, interconnected field of information and asks how that may be most effectively broken down in order to obtain atoms that are as semantically small as possible and with as much link density as possible (an import contributor to nuance).

In one embodiment, INTELNET graphs can be built as follows:
1. Find/discover the conceptual extent that set of concepts that are sufficient to characterize the influences on the overall system we wish to model. That is, we discover what set of concepts is at least sufficient to explain all relevant aspects of the phenomena that need to be studied to answer the question at hand. As an example, in some domains, this might mean enumerating what sorts of information and/or underlying processes are involved in a particular task. In complex data processing domains, in some embodiments the system 100 determines and understands how the 'traces' of the underlying processes appear in the data that is being examined in the task.

In cases where data is being studied that has inherent syntactic structure (that is, the order and/or configuration of the characters making up the input contribute in some way to meaning), the first step involves the discovery of useful aspects and recurrent semantics. Useful aspects mean regularities in the syntax that tend to contribute meaning. Recurrent semantics mean patterns in the ways in which semantics tend to 'show up' in syntax.

2. We then connect concepts pairwise, thus creating atoms, and generating the INTELNET graph/Deep MindMap.

In another embodiment, the following process can be followed to decompose information:

Primitive Determination Development (what semantic primitives, as small as possible, when taken together, will best characterize the input data?). This could mean primitives/edge labels in a CogBASE-like approach, concepts for COGVIEW-like models, or syntactic atoms (discovered via regexes or other means) for problems where those are appropriate. The goal of primitives is to provide a usefulness-sufficient (defined next) and semantically-sufficient (defined next) substrate for recombination and reasoning. 'Semantically-Sufficient' means that the semantics of the substrate are such that all necessary semantics can be represented. Usefulness-sufficient means that the level of semantic detail is sufficiently small that maximal 'surface area' is available to provide contextual sensitivity and nuance during reasoning.

In some embodiments, related questions include:
Recombination How do we combine and recombine atoms in order to perform the task asked of us?
Reasoning How to best use the knowledge (atoms) we have to perform reasoning responsive to the user?
Result generation How do we read off the result after the energy has stopped flowing and the reasoning algorithms have finished?

Matching If I have a set of X things, and I want to choose Y of them based on some criterion, how do I do that? In one shopping-related embodiment, the system might choose those items that the customer most wants/will buy. based on goals/personality, etc.

In one embodiment, simulation-based matching simulates aspects of the mind by introducing energy into an INTELNET graph, analyzing the final state of the graph after propagation is complete, and then making a decision based on that.

In one embodiment, attribute-based matching uses a portion of some sort of user profile information to perform one or more of the following: compute starting energy levels, introduce energy, run a simulation, analyze final energy states, and generate a choice. Other embodiments use the system derived herein to create choices, make decisions, and generate recommendations in other ways.

In one embodiment, the optional model generation step is performed via CogBASE. The links between CogBASE concepts in the CogBASE graph can be used as INTELNET links. In a preferred embodiment, only certain of the CogBASE links are followed, namely those that tend to have higher entropy, such as FACILITATE and GOAL_CHANGE, and noise-reduction algorithms (that seek corroboration for hypotheses) along the lines of those presented herein are employed.

Another embodiment uses any sort of input text and a database, including but not limited to CogBASE, as an input to the two-step process. This may be accomplished by: identifying concepts that tend to reappear in the target domain for which the knowledge model is being built; discovering the contexts (defined as other groups of concepts) in which concepts appear; and linking these together based on proximity and co-occurrence.

One way of achieving concept identification is to first collect high-entropy lexical items via statistical analysis of the target domain and then query these via CogBASE, collecting the most frequent or most energetic results after energy is introduced into identified concepts, crosses CogBASE links of interest, and reaches new concepts.

In another embodiment, the optional model generation step is performed via human mental analysis. Expert and/or general knowledge is translated directly into knowledge models.

In another embodiment, the optional model generation step is performed via human mental analysis and collaboration with informants. Informants are used to provide specific knowledge, which may optionally be integrated with other knowledge.

In another embodiment, the model generation step is performed via posing questions to the user.

When posing questions to the user, in a preferred embodiment the system and method can use a series of presented questions, including but not limited to those related to personality and interests, and then insert the answers to these into a mathematical function, from which part or all of the models in the reasoning substrate can be generated or modified, and/or energy can be introduced into particular concepts. In one sub-embodiment, the following questions are used together with sliders to indicate degree of agreement: "I am the life of the party", "I like to talk about feelings", "I pay attention to detail", "I make plans and stick to them", "Life can be irritating!", and "I am full of ideas."

### System Exemplary Embodiment Big Data

In this embodiment, the system, and in particular the CogBASE, provides a nuanced, atomic, statistics and machine learning-friendly, noise-resistant, nuanced knowledge core for cross-domain commonsense, lexical, affective, and social reasoning. The present version contains approximately IOmillion atoms, and approximately 2.7 million concepts, used in conjunction with a set of theoretical principles regarding database construction and use and a set of reasoning algorithms. As described herein, CogBASE supports nuanced reasoning within a computer system environment that is a significant improvement over prior systems and that provides new forms of data and makes such available to machine learning, Big Data, and social Al through the introduction of a semantic prior, enabling (potentially noisy) knowledge and models to accurately support concept-driven learning and understanding.

A cross-domain simulator 190 with a predictor module 192 can provide for simulating any cross-domain issues with the predictor 192 including the impacts of the identified cross-domain issues during the simulations or for generating additional concepts and data.

CogBASE' s nuanced, primitive based knowledge representation enables system users to add new data, including conflicting data, without affecting existing algorithms.

Through the use of the INTELNET Energy-Based Knowledge Representation system and process as provided by the present inventor in 2013 and using semantic primitives (discussed below), CogBASE provides for representing a wide range of semantics, including nuanced commonsense world knowledge, narratives, emotion/affect, stereotypical situations and scripts, human goals and needs, culture and the effects of context on reasoning, decision making for control and messaging systems that is not capable of being produced by prior art computer systems, including prior art Al systems.

CogBASE, optionally together with other system components, generates contextually-accurate expectations about the world, enabling systems to "fill in the blanks, reconstruct missing portions of a scenario, figure out what happened, and predict what might happen next" (Mueller, 2006).

As will be described for this exemplary embodiment, we will describe the application of the system and method as described above for the application, sample algorithms, and output for the capabilities and provide the some of the concepts of nuance and semantic surface area and demonstrate how the present system and method provides for improved computer system functionality through new and improved reasoning and machine learning that benefits from knowledge systems maximizing these properties.

For the Big Data and machine learning application exemplary embodiments, semantics represent an important frontier within machine learning (ML) and Big Data. Without semantics, ML systems lose access to an important source of lexical information and implicit knowledge about the world. Semantics enable systems to relate lexical items that share no surface similarity (enhancing recall), to reject states of the world that are semantically inconsistent/'don't make sense', improving precision, and to make predictions about the world, enhancing performance overall. CogBASE, optionally together with other system components, is able to reason about the past and future, infer goals, decompose concepts, induce and test lexical item senses, gist documents, and much more. Semantics facilitate identification of the real-world practical implications of lexical items, especially critical for social Big Data where inputs tend to assume significant shared context, much meaning is implied and the presence or absence of a single lexical item in particular contexts can radically change overall conclusions.

CogBASE and INTELNET offer straightforward integration with natural language processing (NLP) and machine learning techniques, aiding deep reasoning. Semantics can assist greatly with sense disambiguation, opinion mining, reference resolution, and other key NLP tasks. Syntactic processing benefits as well; real-world social/Big Data texts are often ungrammatical or otherwise difficult to parse, and semantics facilitate the identification of meaningful text spans and particular concepts of interest from which important information can be extracted.

Data domains intemperate under CogBASE and other system components- data from one domain can be readily used in conjunction with information from another, and reasoning processes can straightforwardly consider data from multiple domains at once. As an example, a conceptual model could deliver INTELNET 'energy' (a form of information) to a spatial model, enable that model to perform reasoning, and then transfer the results back into the original conceptual realm. The structure of INTELNET makes cross-domain information transfers easy to visualize and to achieve in practice.

Big Data and social media content often involve opinion, culture, emotion, and other conceptually and psychologically mediated domains. CogBASE and INTELNET are especially well optimized for data of this nature. In summary, CogBASE and semantic priors enable ML systems to extract and make use of important new sources of information. Together, CogBASE and the associated COGVIEW formalism can model worldviews and commonsense knowledge, reasoning about both in an integrated fashion.

The unique nature of the system 100 implementation of INTELNET provides for semantic pipelining by linking of sub-reasoning components from different subdomains. This pipeline can be accomplished by transferring energy across concepts that those subdomains have in common. If there is domain data in one domain and psychological data in another, the system 100 provides for the discovery of which concepts those domains have in common and perform unified reasoning across them.

Larger problems may be decomposed into smaller ones, each of which is (optionally) connected by energy transfer.

### System Nuanced Data Representation

The present system utilizes and is capable of representing nuance that heretofore has not been utilized in/available to computer system processing. Of the concerns raised above regarding traditional Artificial

Intelligence, nuance underpins most, facilitating the accurate modeling of social and other data, including that relying on complex contextualizations, deeply interconnected frames and concepts, and implicit reference to preexisting shared knowledge. The present system, in some embodiments, stores numerous complex tasks and context knowledge, but enables a simple method of adding new data to the knowledge pool. Knowledge data need only be entered once within the system data pool 221 and once entered, all data is immediately accessible, usable, and reusable across all system modules via the system data pool 221.

Context and construal. In any knowledge representation, phenomena must be represented such that they can be viewed from diverse viewpoints cross-contextually. As an example, in a standard ontology TABLE would typically be represented as a type of FURNITURE, and reasoning would be based on this perspective (that is, a table can be bought at a furnishings store, it is something that a consumer or user would likely have in their home, and so on).

If it starts to rain, however, a user must be able to reconstrue (change his/her viewpoint about) that TABLE, construing it instead in this context as a form of SHELTER. The user can then reason using the latter viewpoint: if the user goes under the table they will not get wet, other people may want to huddle underneath with the user, and so on. Any knowledge representation that only contains information about TABLE as FURNITURE will not be able to make the leap to the second perspective, an issue termed 'pre-construal'.

Another example of pre-construal is an entry the inventor hereof once found in a knowledge base: (country X 〉 is a problem. Clearly, such a statement can only be interpreted as narrowly limited to one particular context, intention, and perspective.

In order to make the 'messy' outside world fit into standard knowledge representations, traditional approaches often fit the world into a standard construal and encode that. This creates brittleness, however, because it is difficult to automatically adapt the resulting knowledge to new contexts. Such knowledge is also difficult to use as support for statistical methods, because it tends to only cover cases that have been strictly enumerated in advance, and statistical techniques are often brought to bear on novel (and noisy) data. Generally speaking, representation formalisms must enable access to enough 'raw' information to permit the generation of appropriate construals in specific contexts. It is always optimal to leave construal to runtime; CogBASE and INTELNET make this a computationally-tractable prospect.

Truth values. Traditional KR systems generally aim to define and discover truth values. In practice, however, and very often in the social world, truth is highly subject to context and probabilistic at best. It is often unclear what it actually means for a statement to be true or false. As an example, the question of whether chocolate is good to eat hinges greatly on whom you ask and when. Dogs cannot afford to eat chocolate, and, even though humans can, they are less likely to want to in a context where they have already eaten a number of other sweet foods. There are generally no single answers to most social and many practical questions- these depend on the context in which a statement is interpreted, what has happened before, the attributes of the person making the decision, what a person considers to be delicious, what one might be allergic to, and so on.

Commonsense data can be impossible to codify in a logical manner and is often only partially correct or simply wrong (especially if the data comes from unverified sources). Moreover, real-world commonsense KBs can never be logically complete. Commonsense reasoning is not monotonic in nature, and results from an incredibly wide range of interacting objects, upon all of which there are no a priori requirements in terms of coordination or similarity. It is impossible to maintain the consistency of one part of a database vis-a-vis any other when data is drawn from a wide range of domains and subcontexts that have many concept interactions, but not many concept dependencies that would push the overall system towards consistent definitions. This is especially true when data is not pre-construed and data from multiple contexts is mixed together; in such cases, contradictions are nearly assured (i.e. today is Tuesday only in the 'yesterday was Monday' partial context).

Opacity. Issues also arise with opacity- traditional KBs store data such that, beyond placing objects in relation to one another, all of the meaning of what is referred to is extrinsic to the database. The sentence 'The cat is on the mat' can be transformed into the statement on(cat,mat), but none of the three symbols cat, mat, or on contains any information about their deeper semantics, leading to the frame problem, or the inability to determine what remains constant when things change (and under what conditions). For example, if in the previous context we fill the air around the mat with catnip, the cat will likely not be on the mat for long, but this is no longer the case if we change the cat to a dog. In general, it has traditionally been difficult to predict exactly how reasoning should change when input changes, or to determine the general behavior of a concept under transformation without referring to some external source of information.

### System Deductive Mode of Reasoning.

Deduction as a mode of reasoning requires strictly correct premises on which to base conclusions. Yet, often, such premises do not exist in the right form, they are wrong, or they are contextually inappropriate. It is generally believed that, in reasoning, a (traditional) deduction of the data is not sufficient as the requirement is too easy to meet. There can be millions of deductions leading to the observed conclusion, most of which can be absurd. In real-world artificial intelligences it is usually more important to reason towards that which can contribute to explanation, expecting noisy data that requires contextualization, than to deduce from given premises.

The system understands explanation as elucidating causes, context, and consequences, and from such it is clear that the CogBASE and INTELNET inference process are inherently well-suited to reason towards explanation, for at least the following reasons: The system and processes combine multiple pieces of information, all of which point to various aspects of causality, enabling the exact nature of that causality to become clearer as more and more pieces of information overlap; and the information is selected based on input context, and is thus more likely to point towards contextually- appropriate outcomes. Once concepts are selected, consequences can be readily determined and checked, and only those concepts that recur across multiple semantic atoms ultimately chosen, removing less-probable outputs and noise.

Multi-domain data. Lastly, it has traditionally been difficult to mix knowledge from different domains (spatial and conceptual, for example) because the representations for each domain are often quite different and there is no obvious way to determine how, say, spatial changes should affect conceptual data (a form of the frame problem). Taken together, the above issues point to the need for an inherently nuanced knowledge representation, capable of working with noisy knowledge, performing contextualized deduction to the best inference, and avoiding preconstrual and frame problems, but that still remains tractable in practical cases. In the following, these notions are made more concrete.

### System Formalizing Nuance

As suggested earlier, of the concerns above, nuance is the most fundamental. This is because maximizing nuance in turn enables representations to avoid issues involving pre-construal, knowledge extemalization, and symbol opacity. High nuance enables reasoning mechanisms that can handle noise, reason sensibly, and maximize the contribution of implicit knowledge. Nuance facilitates creativity by enabling systems to reuse knowledge differently across tasks (the very core of intelligence) and avoids the loss of domain-specific information during model building and domain knowledge translation.

As addressed herein, there can be four key indicators of nuance. First is the ability to dynamically construct a contextually- appropriate version of a concept, referred to here as 'Concept in-context' If we conceive of concepts as 'fields of meaning', then both the generation of Concept in-context and the notion of context sensitivity translate into the ability to discover the most contextually-relevant information we have about particular concepts. As an example, consider the concept DOG. In a PET context, concept components such as 'man's best friend' would best constitute Concept in-context. In a camping context, however, HUNT ANIMAL and CARNIVORE might be much more appropriate.

To formalize this notion, the system 100 can determine or it can be observed that, intuitively, there are two preconditions for the successful determination of Concept in-context. First, the 'denser' the information generated by a particular representation scheme, the more content there is for an algorithm to select from during the contextualization process.

Second, there must be sufficient surface area (information exposed to easy introspection) within a graph to enable reasoning algorithms to extract maximal information. A representation must be built in such a way that context-relevant retrieval can access whatever information is available without that information being buried inside the structure of the formalism.

Concretely, the system 1 [-00] can define the Surface Area for Contextual Influence, or SACI, of some graph G as:
SACIG oc HconceptsG II · IledgesG II · connectivityG .

Here, HconceptsG II and IledgesG II represent the number of concepts and edges in G and connectivityG is a measure of how densely connected the nodes within G are to one another.

The system and method can usefully approximate connectivity G by the Beta Index, defined as βü = IledgesG ||/||conceptsG II .

The system and method can then substitute this approximation into the SACI formula above, the HconceptsG II terms cancel, and we are left with the result SACI oc IledgesG II 2. This interesting result suggests that the number of concepts in a graph does not matter with respect to determining surface area; rather, it is the number of edges that counts, and exponentially so.

The system and method can understand this as suggesting that, ideally, knowledge should be highly distributed across multiple primitives (i.e. multiple edges) instead of being concentrated within particular symbols.

Third, a nuanced representation must be able to support the generation of a maximal number of potential inferences (otherwise, the representation itself becomes a bottleneck). Maximal inferences occur when surface area is high, data is highly distributed, and primitives are sufficiently 'small' that a given concept generates many of them, making a maximal number of permutations possible. It should be noted that in some embodiments CogBASE and INTELNET do not perform any kind of search and are able to manage a very large space of permutations in a highly tractable manner.

More precisely, the system and method can define the Inference Generating Capacity of a representation graph as IGCG oc SACIG/(SUM OVER i=I to IPI σ(Pí)) where P is the set of edge primitives in use within G, and σ (p) is the semantic entropy of primitive p (defined next).

Semantic entropy, the amount of information implied by or contained within a particular primitive, can be understood by way of analogy to pixel size in images, with large semantic entropies corresponding to large pixels, and vice versa. As an example, the ConceptNet 4 relation Desires contains more semantic entropy than the CogBASE primitive FACILITATES, because Desires implies a significant amount of contextually-grounded information about the needs and goals of a sentient actor, while FACILITATES indicates just that a particular concept is often useful (in some unspecified way) towards the achievement of another goal/concept.

Substituting the definition of SACI into the formula above, we obtain:
IGCG oc | |edgesG| |2 (SUM OVER i=I to IPI o(Pi)).

Thus, in order to obtain maximal inference generating capacity from a knowledge representation, the system and method maximizes the number of edges (primitives) across which information is encoded and minimizes the semantic entropy of primitives.

In some embodiments, the system and method do not worry about primitives being too small, because there is no real penalty for using more of them in CogBASE and INTELNET, and smaller primitives facilitate more nuanced reasoning.

The system and method can also define the overall expressivity of a segment of a representation as its average IGC. If the unit of analysis is the entire graph, then expressivity is equal to IGCG .

Finally, it should be noted that properly nuanced representation within the system and method requires not just small primitives, but those of the 'right' semantic size to fit the data at hand. Continuing with the pixel analogy, if pixels are too large, 'blocky' images result that poorly represent the original source. Each overlarge pixel adds a significant amount of noisy information (termed waste entropy here) arising solely as an artifact of the representational system itself, biasing representation.

Mathematically, if we sum the squares of the waste entropy added by each primitive within some particular concept field, we obtain a useful measure of how well our representation is able to match the nuance present in the source domain. Of course, this measure implies that we have some way of accessing the original 'source'. Unlike an image, currently the only way to know whether we have found the optimal way of representing, say, the concept DOG, is to use our human judgment. It is conceivable that automated means, perhaps related to learning systems, could achieve this in future

If we consider a number of knowledge atoms that are intended to represent a particular concept, the system and method can check that all of the important (to us) aspects are there and that, perhaps most importantly, we have not added anything extraneous by way of too-large primitives. We could run the category component decomposition algorithm in order to determine if the components returned there appear sensical and whether or not anything significant has been added or omitted.

In summary, the key determinants of nuance (\|/G) may be combined in one embodiment as follows:
IGCG (SUM OVER g £ G (o(g-represented g-actual))2) where
G is the graph for which ψ is calculated, g £ G represents the individual concept-primitive tuples, or 'knowledge atoms', comprising G, g- represented are the knowledge atoms as actually represented in the KB, and g- actual are those atoms as they 'should' be according to a human oracle.

From the above, in order to maximize overall representation nuance (\I/overall), the system and method can be arranged with desired primitives with minimal semantic entropy, primitives that best fit the data, and graphs containing highly distributed information (with many edges).

The above precisely describes the design decisions underlying CogBASE and INTELNET. Primitives have been chosen in keeping with the wide range of semantics evidenced in the cognitive linguistics, psychology, and other literatures in order to provide the best fit for the widest number of scenarios.

### System Inference

As described herein, in some embodiments, CogBASE and INTELNET utilize energy- and data- guided inference as opposed to traditional methods such as modus ponens/tollens, offering a number of novel, important properties such as noise resistance.

CogBASE and INTELNET enable knowledge from disparate portions of KBs to work together and enables reasoning within concepts, permitting us to separate the various subparts of a concept and to reason independently about them. The idea is to enable 'computing at the level of the computer', whereby the system can mix and match semantic building blocks on- demand in order to meet dynamic task needs. System Intrinsic Representation

CogBASE and INTELNET atoms offer a meaningfully intrinsic form of representation in that a meaningful amount of the semantic structure of the world outside is mirrored within the database. This enables us to 'evolve' concepts and senses and to create new, contextualized concepts based on current needs.

In CogBASE and INTELNET, implicit knowledge is drawn from the interconnection patterns between concepts and the wider semantic atom interactions that these interconnections catalyze, as well as annotations on graph links, including semantic primitives, information about typicality, strength of expectations, and so on. The way in which any of these might become relevant during reasoning is determined dynamically based on knowledge and information needs at runtime, and indeed cannot be predicted until a particular contextualized edge-guide traversal of the semantics within the KB graph is undertaken.

Because CogBASE and INTELNET semantic atoms are easy to construct, and new knowledge implicitly benefits from old, the knowledge engineer need only insert relevant information about the most salient concept fields. It is not necessary to attempt to envision exactly which information will be needed or the ways in which that information might be used, as the system will determine this during runtime.

### System Semantic History and Influence

CogBASE and INTELNET provide strong mechanisms for distributing semantic influence across reasoning processes and across time. As an example, during the processing of natural language texts, semantics are often expressed in the opening portions of dialogues which propagate to later portions. This includes argumentation strategies, introduced by the use of sarcasm or phrases like 'critics claim that', which tend to weaken the effect of following text. Also included are cases where certain concepts are made salient early on during processing and exert more influence than usual on future reasoning (for example, a topic sentence about pets might generate a context giving more importance to related concepts such as dog, cat, and so on).

Moral disapproval works the same way; when introduced in early stages of a dialogue, disapproval tends to spread to later concepts. Concepts discussed together are more likely to be disapproved/approved of together.

INTELNET energy provides a mechanism for representing semantic spread and modulating the semantics of knowledge encountered during processing. In some embodiments, such fine-grained semantics support opinion mining, perception modeling, and summarization tasks.

### System Framing Issues and Problems

In CogBASE and INTELNET, frame problems are avoided in part by delaying full concept characterization until runtime, when sufficient context is available to change the course of reasoning. As an example, consider the well-known 'gun in the oven' frame problem scenario. Normally, guns are capable of firing bullets. This is not true, however, if the gun has previously spent time in a hot oven, enabling it to deform. Traditionally, in order to determine this one would need to explicitly layout all of the potential conditions and axioms under which a gun can and cannot be fired, a combinatorially difficult proposition.

Under CogBASE and INTELNET, however, the concept GUN (denoting the semantic field of the named concept) would be not characterized until runtime, when it would become amenable to influence by contextual forces. If the system has knowledge that melting deforms objects, a gun is a mechanical object, and that mechanical objects generally lose their function when melted, the system could infer that the main function of a gun may not be operative in this particular case. It could, for example, use the CogBASE Category Component Decomposition algorithm to automatically discover that the concept SHOOT is the best concept handle for the prototypical result of the operation of a gun (in that this is the related action receiving the most INTELNET energy). It could then use a variant of the CogBASE Concept Facet algorithm to remove data related to shooting from the gun concept space. Reasoning could then proceed using this modified version of GUN, avoiding the need to explicitly specify axioms or conditions.

In other embodiments energy can be introduced based on the system task rather than the energy sources themselves.

### System CogBASE and INTELNET design

CogBASE and INTELNET are configured to make data available, meaning that it should be represented at a level of abstraction enabling maximal usefulness to reasoning (high surface area). All explicit and implicit deep semantics present in databases should be maximally exposed to the processes that run on top of them.

Data is standardized, such that an algorithm does not need to consider the source of information before drawing on it and algorithms need not be changed when new data is added. Performance should simply be expected to improve, as has been qualitatively borne out during development of the algorithms described below. Primitives enable fusion of data from different sources; after data becomes part of the system, it is irrelevant from which source it originally arose.

Data importation is automated as far as possible, so that once a translation has been decided between data source relations and semantic primitives, importation may proceed without further human intervention.

Lastly, while they are likely to be accessed through purpose built software, the contents of the database are comprehensible via direct consultation. This is mainly achieved by selecting semantic primitives that are independently comprehensible, and by using a graph layout that is easy to visualize.

Prior art suggests that traditional symbolic Al concerns itself primarily with deliberative rationality (i.e. analytical knowledge), such as that contemplated by Newell and Simon's Physical Symbol Hypothesis. In his view, this has led to a state of affairs where Al has not yet fully accounted for intuition and situation dependent reasoning, in which some traditional scholars suggest deliberative rationality must ultimately be rooted. The prior art belief is that without these factors, pure symbolic manipulation will not qualify as intelligence. Further thought considers that holistic, "holographic" similarity plays a large role in intuition and that, with holographic similarity's distributed nature, more 'connectionist' models may be better able to model intuition that which symbolic Al fails to capture.

CogBASE and INTELNET are intended in part to provide a substrate wielding the power of connectionism, capable of calculating such "holographic" similarities and drawing upon them during reasoning. The system and method provide a platform for a numerous algorithms related to concept decomposition, reductionism, atomization, holism, characterization, causes, and consequences, representing steps in this direction and providing an interlocking system of algorithms for calculating extended interactions between concepts.

Taken together, the above features offer strong support for advanced reasoning of social, commonsense, and natural language data.

### System CogBASE and CogDataPool Knowledge Core

In one embodiment, covering over 2.7 million concepts and 10 million pieces of information, CogBASE currently contains more than two gigabytes of data drawn from multiple sources, all translated into an INTELNET- based core representation.

The presence of a wide diversity of concepts in the knowledge base (KB) makes CogBASE effective for nearly any English-based task. Other languages can be added at a first level of approximation via the provision of cross-language links between lexical items. Even though lexicons may differ significantly between languages, the commonsense realities those languages describe do not differ nearly as much, making this an effective technique.

The KB and/or other reasoning substrates can also be integrated with the COGPARSE Construction Grammar-based parser, which employs semantics during parsing to enable the extraction of information and data from grammatically-incorrect and meaning-dense documents.

As indicated earlier, CogBASE and INTELNET are organized according to a 'semantic atom' principle whereby observations about the world, including traditional logical relations (Is A, Part Of, etc.), are decomposed into smaller primitives which are then placed into a graph network. At runtime, atoms are bound together depending on task needs.

CogBASE and INTELNET knowledge integrates directly with cultural, emotional, and social models providing an immediate 'plug-and play' knowledge layer.

While the current CogBASE KB is generated automatically from input sources, from a theoretical perspective CogBASE knowledge atoms are created by considering concepts pairwise and choosing the primitive that best describes how the first concept interacts with the other. As an example, when considering FORK and EAT, it is clear that FORK FACILITATES EAT. This process is generally quite straightforward, making KB creation a low-effort proposition. Existing predicate calculus relations may be broken down into CogBASE primitives and then translated in an automated fashion.

In CogBASE and INTELNET, concept nodes act as 'handles' to the concept fields of individual concepts, and all concepts are generally seen as having internal structure (described in some embodiments) as fields. Concept nodes appear only once for each concept-related lexical item per language, providing points of common contact across disparate data sources. Data for all senses of each lexical item is aggregated together, moving sense disambiguation tasks from the time of data input to reasoning, easing KB creation and facilitating accurate context-based sense disambiguation (as described herein). If such disambiguation had been attempted at the time of data import, this would have limited the system to using default or most common senses, needlessly curtailing reasoning capabilities.

Wherever possible, the system makes maximal use of knowledge implicitly present in knowledge bases and/or reasoning substrates- that is, information that is not explicitly mentioned but which can be derived through the combination of multiple pieces of information or through the creative reuse of existing information in new ways. This property acts as a 'knowledge multiplier', assisting in generating more intelligent behavior from lesser amounts of data and maximizing the potential number of inferences that can be made from the data practically available in any given context.

In one embodiment, CogBASE presently runs on top of the Neo4J graph database, with most algorithms written in Python and particularly performance-critical portions such as first-time database batch insertion and certain data retrievals coded in Java. The KB is accessible externally via a REST API.

### System CogBASE and CogDataPool Semantic Priors

A key contribution of the present work is the Semantic Prior (SP), which transforms CogBASE data into probability distributions immediately usable in machine learning and statistics.

A Semantic Prior implements the intuitive notion that, given the presence of particular concepts or items within a certain context, we can infer something likely about the past, present, or future state of the world in that context. An SP might deal with intentions and goals (for example, if a user seeks out a fork and knife, the user probably intends to eat) or with the likely content of the world (if something explodes, a user or person would expect that in future some debris will result; if a user's oven is hot, someone must have previously turned it on, plugged it in, and so on).

The idea is that, given the world and the objects that appear within it, there is an inherent underlying 'commonsense prior' implicitly reflected in language and other AI-relevant domains. CogBASE enables us to begin to access this underlying distribution and to take it into account during processing.

CogBASE provides a family of SPs, each of which predicts within one particular realm of prediction (ROP). Each ROP in turn predicts answers to one fundamental problem of commonsense or semantic reasoning. As an example, the User Goals realm answers the following query: given that a user has shown interest in items X and Y (say, fork and knife), determine what goals the user likely intends to execute (eat, or eat off of a plate, for example).

More formally, a Semantic Prior (SP) is a function which, for some realm of prediction (ROP) R, maps an input subset Cl of the overall set of CogBASE concepts C to a dynamically-generated probability distribution space (PSP) PRI That is, SP(R, Cl) I→ PRI.

PRI provides the probability that a certain concept will form part of an answer to the fundamental question posed by realm R under the context implicitly created by the input concepts Vi. For example, if we let Vi = {eat} and R represent the 'state of future world' prediction realm, we might have PRI (lack of hunger) =0.8. That is, if I eat now, it is fairly likely that afterwards I will no longer be hungry.

If we were to set R to 'Action→ Emotion Prediction' and Vi to {praise}, we might then obtain PRI (happiness) = 0.95. Under 'User Goals', an Vi of {fork, knife} might generate PRI (eat) = 0.98.

The output of PRI is often used as input to further reasoning algorithms. Generally speaking, PRI will be highly sparse, in that most concepts in C will have (effectively) zero probability.

Theoretically, the set C is understood as consisting of all concepts present as lexical items in any natural language. In CogBASE, C is practically defined as the union of two sets: (1) concepts already present in CogBASE and (2) concepts provided within additional domain models. CogBASE already contains some limited technical knowledge, and domain models are generally only required in the case of highly technical domains (chemistry, physics, manufacturing, and so on). Current concept coverage is quite extensive and should be sufficient for most general problems. When required, domain models are easy to build, consisting of concept nodes straightforwardly connected to one another and to preexisting concepts using standard primitives.

In some embodiment, CogBASE concept node labels in C are not case-sensitive (practically speaking, all concepts are processed in lower case where this is sensible).

In the case of polysemous lexical items, data for all senses is connected to a single concept node (i.e. senses are not separated). In one embodiment, generally, the system reasons based on the most common sense (implicitly identified through frequency and ubiquity of common semantics). The flexible design of CogBASE enables the data associated with particular senses as well as the semantic definitions of senses themselves to be automatically induced from the database, and reasoning may be adjusted based on this. Specifically, atoms associated with the dominant sense may be suppressed if the system discovers that an uncommon sense is the most appropriate one in the current context.

Depending on the application, Cl might consist of concepts and data extracted from input documents, user queries, the output of another SP, or some other problem- specific set.

Each realm employs separate prediction algorithms based on underlying realm semantics and the kinds of CogBASE information that are relevant there. Depending on the specific primitives involved, one or more noise- reduction techniques may be employed.

As indicated above, CogBASE algorithms 'fail safely' in the sense that when information is returned, it can be trusted. Should insufficient data obtain within the database, or another error condition occur, no return value will be provided.

### System CogBASE and CogDataPool Realms of Prediction

As will be descried, various realms for which CogBASE provide prediction algorithms. The system provides the 'lay of the land' for reference; extended discussion and sample outputs for each realm are discussed herein.

Each realm will find applicability to a wide range of machine learning and natural language processing tasks; in some cases, predictions will be useful for expanding the semantics of particular lexical items so that further regularities can be identified; in others, especially with respect to goal-related realms, the predictions themselves are sufficient to drive particular tasks.

In CogBASE a default context constructed anew for each CogBASE query can be create or generated.

### Additional System Enabled Features

COGPARSE integration. CogBASE data can be used to induce syntactic-semantic pairings from text which can then drive the COGPARSE parser (ideal for semantics and knowledge extraction from noisy text). COGPARSE employs knowledge during parsing, enabling the system to extract significant amounts of information for which syntax alone would not be sufficient (if correct syntax exists at all).

Under COGPARSE, each language requires a corpus of constructions (form-meaning pairings). Using CogBASE, these constructions can be induced from text in an unsupervised manner, termed construction mining. Under that algorithm, a set of unprocessed texts Vi is transformed into a set of sequences of semantic categories, which are then identified during parsing. The algorithm is quite effective; after only a small number of input texts common constructions such as 'the 〈object 〉' can readily be identified.

Information extraction. An algorithm has been developed for determining the likelihood that a selected phrase in a document fits within a particular semantic category (such as 'Barack Obama' and 'President', or'l went to France' and 'Travel').

### System CogBASE Reasoning

CogBASE reasoning processes are intended to quickly and efficiently discover, filter, connect, and synthesize contextually relevant information from large, interconnected knowledge bases. CogBASE facilitates three main modes of reasoning: COMMONSENSE, COGVIEW, and HYBRID.

The COMMONSENSE reasoning mode (the mode used most frequently with CogBASE), consists of three phases: 1. Information Gathering finding contextually-relevant information; 2) Core Extract extracts core information from the gathered information; and 3) Task Completion can include numerous actions that are fashioned in a response, message or control that is appropriate, required and/or predefined for the particular system and process task.

The Information Gathering stage performs retrievals of particular concept and primitive data from CogBASE based on the contents of the input I. Retrievals may be limited to edges in a certain direction/number of edge hops, and other conditions (such as shared inbound/outbound primitives) may be specified.

The next stage, Core Extract, executes a core-generating function (CGF) in order to build an initial set of useful information from the raw data gathered at the previous stage. A CGF might, for example, return the most commonly-appearing concepts in the data. Noise filtering and pattern detection typically also take place at this stage.

Finally, Task Completion transforms core information into a result acceptable for the task at hand, often by performing inference on the data contained in the core.

In the Cog View and Hybrid reasoning modes, interesting reasoning outcomes may also be achieved by combining CogBASE data with the COGVIEW worldview modeling formalism (the HYBRID mode), or by using COGVIEW reasoning with CogBASE augmentation (the COGVIEW mode).

One way in which these modes can work together for a conceptual input stimulus S is to simulate S through a COGVIEW network, collect intermediate and final concept energy levels, and then choose some subset of these concepts as input for CogBASE and/or INTELNET queries. This enables 'the best of both worlds'- integrated commonsense and social/psychological worldview models.

### System Semantic Prior Output Examples

Examples are now given of outputs for various CogBASE realms. In each example, for a specified concept/lexical item input vector Vi, the Output' set
O = {clc efoo C, PRI (c) 〉 0} is given.

Results are given as produced by the CogBASE system. In a very limited number of cases, some offensive or non-English result terms have been removed for publication, but outputs as given are accurate and have not been otherwise edited. System Possible Worlds: Past and future

In one embodiment, given that a certain concept is salient now, this realm determines what some of the likely conditions are that could have given rise to this state of affairs. Similarly, given a concept in the present, it makes predictions about the future.

In one embodiment, the Possible Worlds SP takes two arguments: Past/Future and Telic/Atelic (for Future queries only). Past/Future determines whether the algorithm is to look backwards or forwards in time. An Atelic query assumes that a particular action (eat, for example) is still in progress and returns information relevant during and after the action is complete, while Telic queries are concerned only with what is likely to happen after action completion. System CogSOLV User Goals and Interests through Goal Inference

In one embodiment, in this realm, Vi may consist of either a set of concepts or a single concept. In the case of a set of concepts ({ham, bread}, or {fork, knife}, for instance) the algorithm determines what goals the combined presence, use, or acquisition of the concepts in Vi is likely to support. Vi = {ham, bread} produces the probable concept set O = {sandwich}, and Vi = {fork, knife} generates O ={eat food, eat food off plate, eat}. With appropriate commonsense knowledge regarding terrorism, Vi = {oil, fertilizer} could generate O = {bomb}.

In one embodiment, during processing, the system dynamically creates a 'minicontext' ζ from Vi, and determines how the concepts in Vi interact with one another and with multiple potential goals under ζ The semantically-structured nature of CogBASE removes the need for exhaustive search during this computation.

In one embodiment, Vi may also take the form of a single concept representing an object, action, or state. For each case, the system generates appropriate probability distributions.

In one embodiment, when Vi consists of a single concept, the algorithm interprets that concept as an object which has been acquired to help achieve some (unknown/unstated) set of goals and determines what those goals could be. The input set Vi = {dog}, for example, generates O = {love, comfort elderly, protect belongings, play, guard property} .

In one embodiment, in the case where Vi contains a single action, the system as signs nonzero probability to goals which have that action as a component; the input Vi = {kick} returns O = {swim, make mad, swimmer fight move ball, soccer}.

In one embodiment, in the case of world states (happy, for example), the algorithm discovers goals that could have generated those states and/or that involve objects that can take on those states. In the latter case, the system may also return facilitation nodes indicating specific actions that can be taken in order to generate those states.

### User goals and interests: Additional Concept Interests, Search Augmentation

In one embodiment, the prediction algorithm for this realm takes an Vi consisting of a concept in which the user is interested (perhaps the user has entered this as a search query) (ViINTEREST), an optional sub-concept facet selector concept (described below) (ViFACET) and parameters UseCategories, InCats, OutCats, ConfScores, and UseFacet.

In one embodiment, during prediction, the system draws on KB knowledge to create a set O containing concepts which, given the user's interest in VilNTEREST the user is also likely to find important. As an example, given the search term ViINTEREST = conference, the user is likely to also be interested in terms like workshop, speaker, keynote, venue, presenter, and so on. This algorithm can be used in search augmentation; the set of search queries {(ViINTEREST QIC £ 0} should a priori be expected to collectively yield more relevant results than VilNTEREST alone.

In one embodiment, when the parameter UseCategories is set to true, and either InCats or OutCats is also true, the algorithm expands the data search space using either the inbound (children→ parent) or outbound (parent→ child) semantic categories of which ViINTEREST is a member.

In one embodiment, the parameter ConfScores determines whether or not the confidence values of the CogBASE data atoms from which O is derived are used to help determine final probability values.

In one embodiment, in this realm each concept C in O is augmented with additional information about the number of times that C has appeared throughout the distributed data retrieved for ViINTEREST the aggregate confidence value of the information contributing to the probability value for C within PRI and an overall 'sort score' which is used to rank C £ O and generate final probability values.

In one embodiment, this realm provides an excellent source of low-noise accuracy enhancement for general algorithms as well as data for concept semantic expansion.

### Facets of System Concepts/Concept Nodes

In one embodiment, when the parameter UseFacet is set to true, ViFACET specifies a selector concept used to intelligently narrow the results of data retrieval relative to ViINTEREST. In one embodiment, this narrowing can serve two use cases, Sense Disambiguation and Concept Breaking, detailed below.

In one embodiment, under both use cases, the system will automatically infer the semantic contribution of the selector term and determine the breadth of data that must be retrieved from the knowledge base.

Sense disambiguation. In one embodiment, in this use case, a concept ViINTEREST with multiple senses is narrowed down to only one, specified by ViFACET (a single concept). An excellent example is 'bank', which can refer either to an institution that manages money or to the side of a river. In this case, if ViFACET is money-related (account withdrawal, etc.), that sense will be selected and O will be filtered accordingly.

Knowledge engineers need not specify which selectors correlate with which senses; the system is able to use the totality of the knowledge base to automatically determine selector-data boundaries.

Concept breaking- facet selection. In this use case a single, complex concept with many facets is broken up and data related to one particular facet is selected for output in O. In essence, ViFACET is treated as pointing to a semantic 'field' (range of interrelated concepts). As an example, the concept 'China' refers to many things: a physical country located in Asia, a government, a people, various provinces and languages, and so on.

In one embodiment, the selector term enables the user to choose which aspect of the larger concept they are interested in, and the system will automatically tailor knowledge to just that aspect.

As an example, in one embodiment, with VilNTEREST set to China, an ViFACET of government generates the concepts {govern, authority, money, organization, information, system, records, president, country, property}.

With the same ViINTEREST and Vi FACET set to 'Asia' , we instead obtain {continent, united] state[s], nation, border, queen, America, origin, tropical country, continental area, popular destination, develop country, rapidly develop economy, earth, regional market, geography, property market, Hong Kong island}.

From a natural language processing perspective, these capabilities provide programmatic methods for accessing the semantics and concepts associated with various lexical senses, enabling the construction of systems with much finer-grained semantic sensitivity.

### Category Component Decomposition

In keeping with the INTELNET/CogB ASE view of concepts as having internal structure and being defined by combinations of and connections to other concepts, in one embodiment this realm uses KB data to identify a set of core concepts defining the field of a single concept of interest. The algorithm is especially useful in NLP (sense disambiguation, deep semantic processing), category matching, metaphor processing, and as part of most any algorithm concerned with concept and word meanings.

In one embodiment, for this realm, Vi consists of a single concept, and O is a set of concepts which, taken together, can be considered to semantically recreate the Vi concept.

In one embodiment, this algorithm also provides a low- entropy mode (used when data is especially sparse with respect to particular concepts in the database). Concept Interests denotes the low-entropy version of the User Interests/Search Augmentation algorithm (included for reference).

### Semantics-driven Category Membership Determination

Accurate category matching is useful across a wide range of Al/NLP algorithms. In COGPARSE, as an example, the system must be able to determine whether various lexical items match specific categories present within linguistic constructions.

In one embodiment, the Category Membership realm provides a semantics-based matching mechanism for determining the probability that a concept Vi would be considered as belonging to the semantic category ViCAT.

In one embodiment, the algorithm works for any concepts and categories for which a minimal amount of data is present in the knowledge base. As augmentation to the matching score provided as part of O, specific information is provided on why items match, how they match, and how well they match, data highly valuable in metaphor processing and other applications.

Because category membership is determined semantically, matches can take place not only across traditional subcategories such as chair and furniture, which are most familiar to ontology based modelers, but also via concepts such as meat and tasty, which draw directly on the deeper semantics of the concepts involved.

For example, in one embodiment: Vi = {meat tasty} generates an O containing the following two semantic comparison touchpoints: {[food, 2.0], [animal, 1.73554] } and a (very high) match score of 1.86777. These touchpoints, comprised of concepts and energy scores, indicate the shared core concepts which the categories and query concepts were found to have in common. Energy scores indicate the relative amount of semantic content shared by both concept and category with respect to each touchpoint. For match scores, anything greater than 1 represents a significant match.

In one embodiment, the query also returns the following augmentation list illustrating the intermediate bases of comparison relied upon by the algorithm, together with energy values indicating the relative salience of each: [food, 110], [animal, 100], [mammal, 50], [pork, 50], [beef, 40], [farm animal, 30], [bird, 30], [barn animal, 30], [lamb, 30], [goat, 30], [bone, 30], [chop, 30], [sheep, 30], [barnyard animal, 30], [ham, 30], [turkey, 30], [pig, 30]. Each concept listed is constitutive of the typical semantics of both the input category (tasty) as well as the specified lexical item (meat).

### System Topological Concept Characterization

In one embodiment, for a given concept Vi, this realm generates an O containing concepts that are both the recipient of and originator of links to Vi within CogBASE (i.e. there are links in both directions). This realm provides a good approximation to the Category Component Decomposition (CCD) realm, is faster in some cases, and can sometimes provide results when CCD does not.

For example, in one embodiment, given Vi = fire, O = {cover, conflagration, blaze, blast, grate, burn, fiery, burning, ember, cinder, flame, light, fuel, ash, wood, smoke, heat, danger, combustion, spark, hot, something, heat source, harm, damage, burn hot, person, worker, sun, inferno, furnace, camp, fireplace, light match, burn wood, vehicle, power, house, water, department, earth, air, firing, rapid oxidation, huge fire}.
For Vi = perfume, O = {smell, scent}.
Action- 〉 Emotion prediction.

This realm predicts the emotions and perceptions that will arise when a particular action is undertaken with respect to another human being.

In one embodiment, drawing on the HYBRID reasoning mode, commonsense knowledge is used to determine how a psychological model will be affected by the input action, and the outcomes of that effect are then simulated by the system.

Energy values are interpreted as relative strength values for each felt/perceived concept.

Concepts should be interpreted from the 'self point of view- i.e. Dominance refers to dominance asserted against self by others.

### Concept Intersection

In one embodiment, given two concepts ViI and Vi2, this algorithm determines other concepts which the two inputs have in common (that is, nodes that both ViI and Vi2 share links to).

As an example, in one embodiment for Vi = {acid, base}, we obtain O = {theory of dissociation, aqueous liquid, reaction parameter, bile salt, chemical liquid, inorganic chemical, electrolyte, ammonia, conductive material, reactive chemical, environment, program, fuel, ingredient, mixture, combination, material, chemical concept, deamination, reagent, compound, desirable quality, chemical substance, term, function, traditional general chemistry topic, form, brand, catalyst, constituent, raw material, list material, key word, oxidize agent, stabilizer, inorganic catalyst, volatile compound, agent, ionic compound, topic, volatile organic compound, harsh condition, feature, chemical, parameter, product, object, ph modifier, optional component, chemical compound, water treatment chemical, ionizable compound, class, alcohol, ionic species, chemical additive, liquid, metal, element}.

### Utility function: concept semantic specificity

This utility function, calculated in one embodiment based on the ratio of inbound to outbound category links, determines the specificity of a particular concept.

For instance, in one embodiment "place" (semspec 0.00314) is less specific than "United States" (semspec 11.0).

### Automated word sense induction/membership determination

This realm covers word senses; CogBASE knowledge enables both the automated discovery and induction of word senses as well as semantic sense membership checking.

In one embodiment, for the concept 'mouse', for example, the system is able to discover that there is one sense involving a computer product and another involving a living, moving creature.

The system is also able to check which of a number of senses a particular word usage is associated with.

### Gisting/document-representative lexical item extraction

In one embodiment, given a document, this realm extracts those lexical items most likely to be semantically representative of the document as a whole. It discovers which semantics recur throughout and then selects only lexical items including those semantics, thus using the document itself as a base for filtering. This provides accurate semantic gists of document contents, with the frequency of individual lexical items within the gist indicating the importance of those words to overall document semantics.

In one embodiment, in this realm, Vi is defined as a vector containing the lexical items contained within a single input document. If a given lexical item appears multiple times within a document, it should also appear the same number of times in Vi (that is, multiplicity matters).

In one embodiment, as an example, with Vi set to a 'morality' newsgroup posting, an O is generated that can be further compressed by counting the frequency of each lexical item present therein, as follows:
{moral: 6, ask: 6, question: 5, right: 4, make: 4, wrong: 4, position: 4, certainly: 3, better: 3, state: 3, one: 3, answer: 3, good: 2, implication: 2, degeneracy: 2, correct: 2,}.

### Document topic prediction

For an input vector of document-derived lexical items Vi, this realm determines the concepts most likely to describe the topics present in Vi.

In one embodiment, this involves extracting semantic features from each lexical item in Vi and then applying clustering methods, such as Group-Average Agglomerative Clustering (GAAC), to the result.

### Polarity augmentation

While CogBASE provides reasoning-based methods for opinion mining, CogBASE data may be used to augment concept polarities, extending concept coverage and enhancing contextual accuracy.

### Raw semantic feature generation

CogBASE data can facilitate the generation of raw semantic features from concepts and lexical items.

In one embodiment, a naive algorithm for generating such features is simply to collect the CogBASE graph neighbors for each input concept. Under this method, however, noise is reproduced unchanged, accuracy enhancements are not performed, and primitives are not taken into account (thus generating mixed output semantics).

In one embodiment, outbound graph edges generate features through which input concepts define themselves via reference to other concepts and vice versa.

The graph structure enables following the graph in a semantic process that is considerably deeper than a semantic network itself. Graph traversal is a system 100 semantic operation and process that can use the semantic edge guided transversal. Sample System and Reasoning Algorithms

Herein, we consider two sample CogBASE algorithms under the COMMONSENSE reasoning mode.

In the following, the Out categories of a concept X are defined as those that X participates in (i.e. X = dog→ animal), and the In categories of a category Y as those concepts that participate in Y (Y = dog- retriever). Note that CogBASE does not distinguish programmatically or theoretically between concepts and categories; the two are expected to blend into and cross-constitute one another. Thus, any such distinctions made here are strictly expository.

In semantic atoms, the starting concept is referred to as the primitive FROM concept and the end concept as the TO (i.e. FROM - 〉 TO).

Below, the semantic atom X→ FACILITATE→ Y indicates that X can often be used to achieve the state of the world described by Y.

### Examples:

vocal cord→ FACILITATE→ sing.
hammer→ FACILITATE→ build.

The atom X→ GOAL_CHANGE→ Y indicates that when X is encountered, people often change their immediate goal to Y.

### Examples:

hungry→ GOAL_CHANGE→ eat.
see money→ GOAL_CHANGE→ pick up money.
X→ CONCEPT _ASSOC. CONSTITUENT→ Y indicates that X is loosely associated with being part of Y X may not always be part of Y but it is often enough so that it is worth noting.

### Examples:

heating element→ CONCEPT _ASSOC. CONSTITUENT → heater.
engine→ CONCEPT _ASSOC. CONSTITUENT→ car.

Primitives beginning with Tare temporal in nature, with T-0 atoms, for example, indicating process prerequisites (i.e. fuel is required for a fire), T-I primitives contributing information about initial process stages, and T- DURING primitives indicating information relevant as processes advance. In the algorithms below, the notation + denotes addition assignment (+ =).

### User additional concept interests

In one embodiment, we consider the User Additional Concept Interests algorithm.

Data: Input Concept, Use In/Out Categories (bool), Include

### Sort Score in Sorting (bool).

Include Confidence Score in Sorting (bool).

Result: Augmented Additional User Concept Interests.
UseConcepts Input Concept ;
if Use In Categories is True or Use Out Categories is True then RawCats 〈-Retrieve In/Out Categories of InputConcept FilteredCats 〈- x £ RawCats such that category node degree 〉 min (there must be minimal data for each to enable noise filtering, and extremely sparse concepts are likely noise);
UseConcepts (-+ FilteredCats;
end.
Collected Data ^ {};
for c £ UseConcepts do
   Collected Data (-+ all TO concepts for atoms of specific primitives (outbound FACILITATE, inbound GOAL CHANGE, inboundCONCEPT_ASSOC_CONSTITUENT, others) where FROM=concept c;
end.
   Collected Data (+-all inbound nodes for c;
FinalData- clc £ CollectedData, count (c) 〉 threshold; (where count (c) is the number of times c appears in CollectedData); OutputAugmentation (- {SortScore(c), ConfScore(c)lc £ FinalData} ;
O 〈- {sort (FinalData), OutputAugmentation};
User goal inference

In one embodiment, we examine User Goal Inference.
Data: Input Concepts Vector
Result: Goal Vector O
RetrievedData ^map(retrieve following primitives for c: inbound GOAL CHANGE, INCREASED_LIKELIHOOD_OF, outbound T-0, T-I, T-LAST, T-DURING, FACILITATE) over Input Concepts Vector;
O (- nSGRetrievedData S;
New System Properties: Noise-resistance, Gracefulness, and Openness to new data.

The use of energy -based reasoning enables CogB ASE and INTELNET to offer further unique properties.

Firstly, CogB ASE and INTELNET are highly noise-tolerant and noise-accepting (though the two may achieve this in different ways).

Currently, CogBASE contains a significant amount of incorrect and invalid entries arising from the original sources, yet it generates highly precise results. CogBASE and INTELNET' s atomic designs enable techniques such as choosing the most commonly recurring semantics within particular contexts, traversing graphs based on task constraints, seeking similar semantics across multiple graph locations, selecting specific kinds of knowledge primitives (each of which embodies differing noise levels), and adjusting retrievals based on KB entropy (retrieving less data when entropy is high and vice versa), all of which, taken together, enable highly efficient noise reduction and removal.

CogBASE and INTELNET enable new data to be added without affecting old. In traditional KBs, new facts often interact with pre-existing information in unpredictable ways, meaning that if new information is inconsistent, previously functioning queries may no longer continue to operate. Under CogBASE and INTELNET, adding new information does not exert significant influence on pre-existing capabilities.

CogBASE and INTELNET reasoning demonstrates graceful/gradual degradation in the face of noise. In traditional KBs, a single incorrect fact is capable of generating arbitrary results. In many Big Data, complex modeling, and social media contexts, however, noise is ubiquitous and no particular set of assertions can be held to be correct.

CogBASE and INTELNET 'gracefulness' can be understood as gradual degradation such that performance does not decline due to bad data if sufficiently accurate data is present elsewhere in the KB until a majority of noise is present; even then, inferences simply become only slightly, gradually less and less accurate. In addition, bad data only affects inferences drawing on that specific information and is averaged out during data collection, so negative effects do not spread. The presence of inconsistencies is expected and accounted for during reasoning, and the system does not generate wildly inaccurate conclusions in cases where there may be relatively small errors. CogBASE and INTELNET algorithms are 'fail-safe' in the sense that, if they cannot answer a particular query, they will return nothing rather than provide erroneous information. It is therefore not necessary to sanity check return values.

One way CogBASE (especially) and INTELNET achieves all this is to generally look for both evidence and corroboration of that evidence before making inferences. An example would be algorithms which consider information about what categories a concept is likely to participate in together with information about concepts participating in that concept as a category. In this way incoming category information provides evidence and outgoing information provides corroboration once the two are juxtaposed against one another. Tractability and scalability: executes quickly, scales naturally to large knowledge bases

Even though they may potentially draw on gigabytes of data during reasoning, CogBASE/INTELNET algorithms can generally be straightforwardly optimized to run on standard commodity hardware with moderate RAM.

One key reason for this is that, while in INTELNET all data is immanently available should it be required, in practice the reasoner only needs to consider a small part of the available space, and the representation itself makes it easy to determine what this space is without search. Specifically, contextualized energy flows guided by concept interconnections based on underlying commonsense semantics make it easy for the reasoner to determine what information to consider when. In essence, the reasoner does not need to 'think' in order to determine what data is relevant; the database and/or reasoning substrate has already implicitly performed this task in significant part by providing links between concepts that could affect one another. These links constitute but do not describe, in some embodiments. The need to catalog the potential diversity of interactions between concepts is in meaningful part handled via database structure.

Traditional deduction can be difficult to scale on large knowledge bases, because it seeks to determine everything that is possible. CogBASE and INTELNET, however, work to determine the most likely explanatory data, combining knowledge atoms within specific contexts in order to determine what is most likely to be true given knowledge of the world.

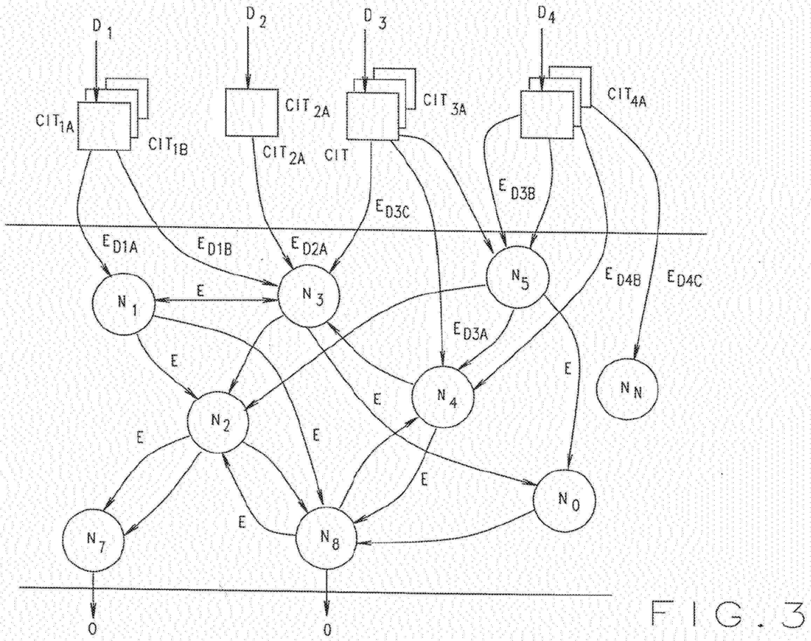

Referring now to FIG. 3, a graphical illustration of a Deep MindMap 152 with concept nodes 224 (as shown in FIG. 2) or data points, along with their association within the MindMap and the flow of energy through and between the concept nodes within the MindMap according one exemplary embodiment. As shown in this example, each concept node 224 is identified as N_{X} (such Ni, N2 , N3 , N4 , N5 , N6 , N7 , N8 , No and NN , by ways of example.

The process flow of the MindMap in this example has input data D (DI, D2, D3 and D4) each of which enter Concept Input Templates CITNX such as CIT1A , CIT1B , CIT2A , CIT3A , CIT4A , and CIT, by way of examples. As described herein, concept input templates CIT are also referred to as models 130. From each of the CIT model, energy flows EX Y shown as (EDIA , EDIB , ED2A , ED 3C, ED3B , ED3A , 3D4B , and ED4C flow into the linked concept nodes N that are linked within the Deep MindMap 152 directly with each CIT model or that are indirectly linked to each CIT via an intervening concept node N_{X}. The input energy and data flows through the Deep MindMap 152 consisting of the concept nodes Nx and the links E sometimes in a single directional flow and sometimes in loops to produce and output O at the edge of the Deep MindMap 152, as shown for concept nodes N7 and Ns in the present example. As described herein, the energy E can also be input from what is shown as output O, in a backward flow for such processes as the impact of certain goals on the concept nodes and the energy flows within the Deep MindMap 152. As noted, Fig. 3 is just one example illustrating of a very simple Deep MindMap for illustrative purposes only and is not intended to be limited or a complete explanation of a Deep MindMap 152 that is otherwise described in detailed within this present disclosure.

### Implementation in Computational Systems

Embodiment (the notion that our experience as physical beings exerts significant influence on cognition and our understanding of the world) plays an important role in cognitive psychology, linguistics and robotics and has arguably affected the very development of mathematics itself.

In practice, however, operationalizing this concept and integrating embodiment into computational systems can be difficult.

Much CogBASE (and INTELNET) data is inherently embodied in the sense that it encapsulates insights deriving directly from bodily experience (i.e. hot→ scald, burn, feel comfortable, intense, sweat pain, ice→ cool off). It can also link various objects (fork and knife, for example) to the embodied goals they facilitate (such as using hands to fulfill the key goal of eating) via algorithms like those described herein below.

CogBASE and INTELNET are designed to maximize the ways in which a given piece of information can be used in diverse contexts, and can be adapted to support a large number of tasks, paving the way for it to act as an embodiment enabler for already-existing techniques.

### System Tools For Deep Conflict Resolution and Humanitarian Response

Truly understanding what others need and want, how they see the world, and how they feel are core prerequisites for successful conflict resolution and humanitarian response. Today, however, human cognitive limitations, insufficient expertise in the right hands, and difficulty in managing complex social, conflict, and real-world knowledge conspire to prevent us from reaching our ultimate potential. The system described herein is capable of understanding how people from other groups view the world, simulating their reactions, and combining this with knowledge of the real world in order to persuade, find negotiation win-wins and enhance outcomes, avoid offense, provide peacekeeping decision tools, and protect emergency responders' health.

In one embodiment, this system enables governments and local NGOs to use expert culture and conflict resolution knowledge to accurately perform a wide range of humanitarian simulations. In one embodiment, this system assists responders with training, managing complexity, centralizing and sharing knowledge, and, ultimately, maximizing the potential for equitable conflict resolution and maximally effective humanitarian response.

### Further Conflict Resolution and Emergency Response Background

Humans have proven themselves to be remarkable conflict resolvers, persuaders, and responders to humanitarian disasters of all kinds. Practically speaking, however, responders find themselves confronted by a myriad of cognitive and organizational limitations. Humanitarian contexts are characterized by complex, difficult-to-predict social systems grounded in psychology, culture, and deep knowledge bases. The information needed for response is often distributed across multiple experts, and is difficult to synthesize in ways sufficient to guide response. Countless fragments of information interact in unpredictable ways, making it exceedingly difficult to obtain the 'big picture' and truly understand what is going on. Moreover, NGOs, local groups, and government agencies alike often lack meaningful access to conflict resolution, cultural, and other key knowledge. Therefore, successful conflict resolution and humanitarian response often tend to require a certain amount of luck having the right people come together with the right information.

One reason for this is that, often, critical knowledge is unconscious and not easily accessed or standardized, including cultural and other social knowledge as well as expert knowledge. Nowhere is this more true than when responders must work with those holding worldviews different than their own; the tendency to fall into ethnocentric traps and ignore key aspects of the other side's worldview is very difficult to avoid. Yet, when seeking to work with and/or convince others who think differently from us, we will only achieve success if we design appeals with respect to the other side's true (and often unexpressed) point of view.

Furthermore, it is easy to overlook conflict solutions that appear to be equitable but in fact ignore key needs and values for the other side. In disaster response, perceived cultural insensitivity may cause survivors to ignore official communications such as evacuation orders, and the inability to manage complex chemical, equipment-related, and other practical knowledge often gives rise to critical health risks.

In the past, factors such as these have led to missed opportunities, renewed conflicts, suboptimal outcomes, structural violence, and, ultimately, the loss of life. In the case of peacekeeping missions, characterized by the sending of signals that must be correctly understood by those with diverse worldviews, failure may mean the breaking of a ceasefire, rioting, or the resumption of war. Many knowledgeable commentators suggest that the failure of UNOSOM II (the mission upon which the movie Black Hawk Down was based) was due precisely to factors such as these.

When peacekeeping leaders 'get the call', there often isn't sufficient time to undertake deep study of the cultures they will be working within. As demonstrated by UNITAR training scenarios, it can be difficult indeed for peacekeeping commanders to determine how to proceed in culturally-appropriate ways. Given the demonstrated need to devolve ever-increasing amounts of decision making power to the field, future commanders are likely to find themselves more and more dependent on incomplete information.

As an example, one such UNITAR training scenario, set in Africa, imagines an ex-soldier who has climbed a fence and broken into a UN MOVCON warehouse. Breaking his Rules Of Engagement (ROE), the fictitious peacekeeper shoots the ex-soldier. A crowd begins to gather outside the base, demanding the ex-soldier's body, and the commander must decide what to do. Using models developed in conjunction with a Ugandan informant, simulations have shown that, in such a situation, it would be essential for the UN to engage to some extent with local conflict resolution processes if further bloodshed were to be avoided. It is most probable, however, that under such a scenario the necessary knowledge would not be available to local decision-makers and they would not be aware of this.

Generally speaking, computers hold immense potential for helping humans overcome difficulties such as these. Unfortunately, however, in the past they have been unable to do so, as mainstream Artificial Intelligence (AI) has not had the ability to store and handle nuanced social data in a way that would enable it to in some sense 'understand' and productively model these types of complex systems.

With the recent advent of the atom-based approach to Al described herein, however, this has now become possible. This school of thought represents a fundamentally new perspective on the discipline. COGVIEW enables computers to conduct simulations grounded in complex psychological and cultural worldviews. COGVIEW models /Deep MindMaps are human-readable and machine -processable at the same time, meaning that they can be created with only minimal training and used by personnel without significant specialist expertise. The exact same data that is entered into the computer can be easily used for teaching and discussion purposes.

It is known that social systems sometimes labeled in the literature as soft systems or ill-defined systems where the usefulness of traditional mathematical representations are questioned. In contrast, the system described herein provides a new modeling of complex human situations while retaining their nuance, using flexible, brain-inspired algorithms to effect processing. Ultimately, the present system enables the generation of remarkably new predictions across complex social systems.

The system described herein is optimal for the type of data found in humanitarian environments; in such contexts, the 'softer' aspects make all the difference. COGVIEW is able to integrate disparate forms of information (such as emotional and practical/commonsense knowledge) quickly and effectively.

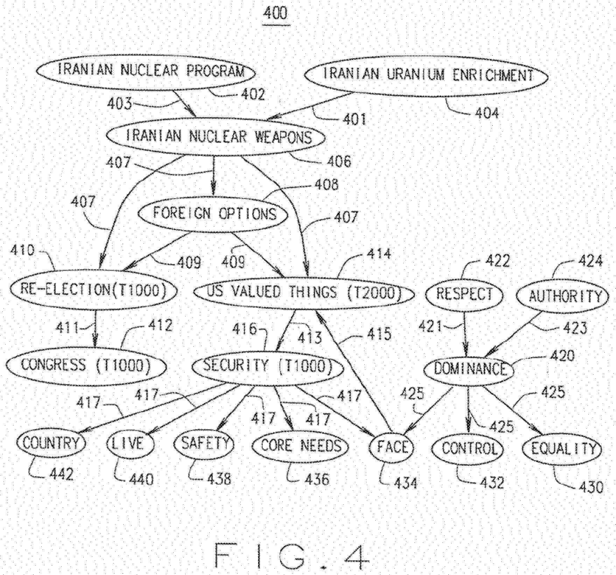

Referring now to FIG. 4, an exemplary Deep MindMap 400 is illustrated. As described, these MindMaps 152 generally are diagrams that describe important aspects of how information is viewed and how the information is used by humans. MindMaps 152 enable the system 100 to simulate the needs and selected aspects of simulated intelligence patterns to create new and improved system processing of information and data. In one embodiment, MindMaps 152 are built in two or more stages. First, relevant concepts are identified, and then second, the identified concepts are connected in a pairwise manner. In the example MindMap 400, each of the circles represents a concept node 224 having an energy or energy/concept tuples, as described herein. In this example, the first two concepts are Iranian nuclear program 402 from which energy 403 flows and Iranian uranium enrichment 404 for which energy 401 flow. Each of these energy flows 401, 403 flow into the Iranian nuclear weapons concept node 406 and flow through node 406 and become concept node 406 output energy 407 which is based on the input energy flows 401, 403 as it flows through concept node 406. As indicated, the output energy 407 is the same for each output energy flow 407 from concept node 406. A first energy flow 407 flows into foreign options concept node 408, with a second flowing into re-election (T1000) concept node 410, and a third energy flow 407 flowing into US valued things (T2000) concept node 414. As shown, foreign options concept node 408 has its own output energy flows 409 that also can flow into the re-election (T1000) concept node 410 and the US valued things (T2000) concept node 414. The re-election concept node 410 has an output energy flow 411 that flows into the congress concept node 412. The notation T denotes an energy target associated with a particular concept node 224.

As shown, as separate originating concept nodes for MindMap 400, there are two other independent concept nodes 224. One is the Respect concept node 422 with output energy flow 421 and the second is the authority concept node 424 with output energy flow 423. Each of these output energy flows 421, 423 are received by dominance concept node 420. Dominance concept node 420 has output energy flow 425 that goes into the equality concept node 430, the control concept node 432 and the face concept node 434. Each of output energy flows 425 from the dominance concept node 420 are a function of the input energy flows 421, 423 and the influence of the dominance concept node thereon, but each of the three output energy flows 425 are equivalent in energy.

As shown, the face concept node 434, while receiving energy flow 425 from dominance concept node 420, generate output energy flow 415 which is an input energy flow into the US valued things concept node 414. The US Valued things concept node 414 receives energy flows 407, 409 and 415 and has an output energy flow of 413, which is based on a function of the received energy flows 407, 409, and 415 as well as the influence of the US valued things concept node thereon. Security concept node (T1000) 416 receives the energy flow 413 from the US valued things concept node 414 and generates output energy flows 417, each being the same and each being provided to each of the core needs concept node 436, the safety concept node 417, the live concept node 440 and the country concept node 442.

It should be understood that the flows shown for the energy are only examples. Further, the flows could be backward or from bottom up or in reverse to that as shown in Fig. 4 and still be within the scope of this exemplary embodiment. Humanitarian Solutions

In conflict resolution, negotiation, advocacy, persuasion, peacekeeping, disaster response, and other key humanitarian processes, simulations facilitated by the system described here provide precise guidance as to how to respond, pointing out actions that should be undertaken or strenuously avoided. In one embodiment, CogResolv, the conflict-focused component of the system, can store and simulate expert conflict resolution techniques, automatically integrating these with situational/cultural models developed by field and HQ experts.

CogResolv acts as a trusted advisor and ally before, during, and after the mission, centralizing cultural and practical data. In protracted conflict or when stalemates arise, the computer helps find ways around blockages.
CogResolv simulates the effects of actions and the perceptions that they will create for other parties, identifies hidden win-wins and potential problems, circumvents biases, and helps discover actions that can reinforce the resulting peace. It helps meet needs in creative ways, maximizing 'deep' (integrative) justice.

In line with GRIT (Gradual Reduction In Tensions) theory, CogResolv can suggest potential concessions that may reduce tensions while maximizing value for all sides. It makes the hidden explicit, models critical psychological factors such as pain and determination, helps increase decision quality, and models the ripple effects of small decisions across large, complex social systems.

CogResolv helps conflictants separate issues during negotiations, making all parties aware of the totality of the world in which they operate. Its Integrative Justice Scores provide a quick, concise metric of the extent to which the deep needs of all parties are being taken into account and hidden biases addressed.

Facilitating situational awareness, CogResolv enables practitioners to work together to manipulate a shared vision of a current situation and to visually indicate points of reference or areas of concern.

The system described herein and CogResolv also support training and situational awareness; officials sent to conflict sites on a moment's notice, peacekeepers, and students can all benefit from the system' s ability to quickly and easily facilitate understanding. The system enables team members to quickly appreciate the existence, importance, and consequences of critical knowledge, helping to get everyone on the same page.

The system described herein provides decision-makers with critical tools for making socially-nuanced life-or-death decisions.

### Core Humanitarian Focus Areas

Some of the current humanitarian focus areas include, by way of example only: Conflict modeling/prediction, including protracted conflict, Persuasion (especially emotionally/subconsciously-driven: beliefs, values, religion), Social media analysis, including sentiment/topic detection and modeling, Knowledge/culture-based deep analysis of extremist messages, Nuanced conflict understanding and training, Peacekeeping, Disaster response, and Conflict early warning (grounded in analysis of prevailing social scenarios and social media inputs).

### Users

In one embodiment, the system described herein and CogResolv can be applied to a wide range of humanitarian and conflict- sensitive domains, including providing a) Peacekeeping: Interactions with local populations, calming tensions, mission design, gender sensitivity to Field battalion leaders, UN Department for Peacekeeping Operations (DPKO) personnel HQ. for the development: Locally- sensitive intervention design, anti-discrimination advocacy, empowerment of sex workers, gender sensitivity, calming of tensions.

In another embodiment, the system can provide an early Warning/Data Mining/Machine Learning solution for natural language and social media processing point the way to a capacity for early warning of conflict hotspots or likely social ruptures. The system and the associated CogBASE knowledge base together can support data mining, machine learning and deep learning, as well as other processes for discovering patterns in input data.

In another embodiment, the system can provide a support system for diplomacy such as international negotiations, cooperation in international organizations (ASEAN, UNSC), human rights (especially elements oriented towards values, religions, cultures and other intangible variables). This can include resource-oriented conflicts, especially when multiple issues may be traded against one another to those credited to international fora, human rights personnel, and cultural attaches. This can also, in some embodiments, for DoS/DoD/Foreign Ministries/States include public information, de-escalation, cultural exchange, locally-sensitive project design, and anti-extremism. Further users/applications include Public Information Officers (PIO), liaison personnel, and NGOs. In some embodiments the system provides Advocacy, antidiscrimination, gender/culture/religion-responsive planning, and prediction of local areas of discontent with particular policies, used by (for example) local field personnel, HQ planning personnel, USAID Innovation Lab, and FEMA and Emergency Responders.

By facilitating culture and task-aware disaster response, the system brings Al and deep knowledge management to bear in critical
environments. In some embodiments, users can include any organization where having access to the right knowledge (lessons learned, chemical response models, etc.) at the right time can make a significant difference. As further examples, in addition to companies that want to avoid local conflict and plan project development in locally-sensitive ways, the system can be used to aid in negotiations with local communities and can be used by those at HQ responsible for overall peace and project continuation, including project planners.

### Further Theoretical Grounding

Embodiments of the present system 100 can be different than traditional knowledge representation (KR) formalisms that view knowledge as something expressible in first order predicate calculus with a Tarskian semantics, assuming that truth or falsity is important (and ultimately can be determined) and requiring decisions on whether a certain statement ("logical sentence") is true or false. In traditional systems, deduction is often the standard mode of reasoning. In contrast, in some embodiments the system described here views knowledge as something which is dynamically generated in a contextually-sensitive way, via the agglomeration of multiple "bits' or "atoms' of information. Any one atom (such as plates facilitate eating, or students are typically found around schools) may not be dispositive of any particular question, may not hold in the present context, or may even be incorrect. When a significant number of atoms are considered as a whole, however, they provide an immensely powerful platform for intelligent reasoning about likely states of the world.

In some embodiments, the present system 100 and method can enable the reasoner to efficiently consider more of the available knowledge space and bring hundreds or thousands of nuanced knowledge primitives to bear, expanding potential inferences in a controlled manner. Using the system described herein enables a shift towards understanding knowledge as more than lists of facts. The system models knowledge as collections of experience and information that may coalesced, as needed and in a contextual manner, to solve tasks that are not yet known. Creative reasoning is greatly facilitated through the reuse of the same information in diverse ways in different contexts and for different tasks. As implemented in some embodiments of the system 100, the system described herein is optimal for extraction of semantics from Big Data and social data processing, given that this type of data exhibits computational properties such as nuance, deep interconnectedness, implicitness, and deep dependence on other concepts, all of which can be hard to model in traditional paradigms.

The system described herein is 'nuanced' in part because it is able to store information at a level of abstraction intermediate between symbols and neural networks, covering "pieces' of larger wholes that are intended to be placed into relation with other pieces. As such, the system 100 can provide a minimal level of opacity, ensuring that information is not hidden behind complex primitives.

As implemented in some embodiment, the system 100 nuance is sufficient such that KB knowledge is combinable and precisely selectable. This means that specific aspects or "regions' within extended concept knowledge can be highlighted and then these regions combined with specific regions of other concepts in order to create new knowledge, on-the-fly, that is responsive to dynamic goals, contexts, and other general needs and tasks.

Methods for providing nuance include is semantic primitives, interconnections between the various larger semantic aspects that build up particular concepts, and annotations such as TYPICAL, ASSOCIATED WITH, by way of example, each of which may be combined in order to build accurate yet complex semantic wholes.

Further, the system 100 addresses the related issue of intrinsic vs. extrinsic knowledge in a new manner. Prior traditional systems employed extrinsic representation, meaning that detailed knowledge exists 'outside' the knowledge base. There, KB knowledge places objects in the outside world, referred to through via symbols, in relation to one another (such as 'the CAT is on the MAT and 'a BACHELOR is an UNMARRIED MALE').

Intrinsic representation, on the other hand, employed in some embodiments of the present system, stores more information within the reasoning substrate/KB itself. In the system described herein this information is rich enough to be reconstrued and reused in novel contexts and scenarios.

In the system described herein, ways in which implicit knowledge is stored include within the interconnection patterns between concepts and the wider energy interactions that these interconnections catalyze, as well as annotations on graph links, including semantic primitives, information about typicality, expectation strength, and so on. The way in which any of these might become relevant during reasoning is determined dynamically based on knowledge and information needs at runtime, and indeed cannot be predicted until a particular contextualized traversal of the KB graph is undertaken.

Wherever possible, the system 100 makes maximal use of knowledge implicitly present in knowledge bases knowledge that may not be explicitly mentioned but which can be derived through the combination of multiple pieces of information or through the creative reuse of existing information in new ways, such as looking at the ways in which information is structured. This enables the system 100 to act as a "knowledge multiplier', assisting in generating more intelligent behavior from lesser amounts of data and in maximizing the potential number of inferences that can be made from the data practically available in any given context.

In the present system 100, data domain origin is not important as the data from one domain may freely interact with information from others, and reasoning processes may take data from multiple domains into account at once. Examples include combining information that particular items tend to be found at particular locations with other knowledge or when the proximity of two objects (inferred via the single map) contributes useful information during reasoning.

INTELNET represents complex concepts (as well as the larger systems these concepts underpin) in part by setting up pathways upon which information (conceptualized as energy) flows between semantic elements. Rather than simply use standard symbolic representations, the idea is that complex representations can be built up from simpler subnetworks by connecting them together via energy flows. Each element reached by a certain quantum of energy flow participates in and becomes part of the wider concept representation. Through this mechanism, conceptual connections between simple elements deeply affect the modeling of larger systems. This technique is optimal for modeling domains characterized by nuanced, interconnected semantics (cultural information being a prime example).

Under the system described herein, the workload on knowledge designers is lowered because such paradigms also demand less work on the part of the knowledge engineer to come up with a particular "cognizing" of how the universe operates and to translate this into usable knowledge.

Under the system described herein, the knowledge engineer need only insert as much salient information as possible about the most salient concept fields; she does not have to try to envision the entire semantic space or the ways in which that knowledge may be used, as the system will determine this during runtime.

In some embodiments, the system described herein seeks to generate inferences that best fit the data before it. These inferences are generally those most likely to be true given the knowledge distributed across the knowledge base.

Successful "inference to the best explanation" requires the recombination of various pieces of knowledge and knowledge about how probable certain explanations are likely to be vis-a-vis others. This is facilitated by the nuanced structure of information within the system described herein.

### Geographical Analytics

In one embodiment, we may identify cultural hotspots and critical areas (areas requiring special consideration during decision-making) on maps.

In another embodiment, the systems may indicate areas where likely allies are to be found.

In some embodiments, the system can enable building cultural maps or opinion maps, demarcating areas where similar cultural and/or opinion profiles obtain. As such a user can demarcate expected conflict areas, security risk areas, and areas where development aid would be helpful (areas of greatest social/political need). A user can identify sensitive areas where the use of force is contraindicated, and areas where more information should be gathered. In some embodiments, the system may also point out ongoing processes that are likely being ignored.

In some embodiments, a user can obtain "diplomacy maps" indicating that certain diplomatic technique X should be used in location Y.

### Budgeting

In some embodiments, tor budgeting support, the system can use the tradeoff analyzer 178 to automatically suggest budget tradeoffs and lessen the need for manual elements. Deep MindMaps: Further Discussion

In some embodiments, Deep MindMaps help the system described herein understand people and the world in which they live. Deep MindMaps diagrams include, but are not limited to, information about the concepts used to structure particular worldviews and how those concepts interact. Simple to create and to understand, Deep MindMaps enable the system described herein to simulate the needs and selected aspects of the thought patterns of others, among other aspects. This in turn enables the system to perform complex tasks, such as for example, creating counteroffers and persuasion strategies tailor-made for them, predicting in useful part their likely reaction to certain actions, and assisting users in 'getting into the minds' of others.

Deep MindMaps can include nuanced information about local cultural and conflict resolution practices, including religious practices and viewpoints.

In one embodiment, Deep MindMaps can be built in two stages. First, relevant concepts are identified. Then, concepts are connected in a pairwise manner. The structure of Deep MindMaps makes it easy to test small areas/regions for correctness and work outwards. In some embodiments, Deep MindMaps, together with task-built algorithms, are sufficient to solve important system tasks. There are many different types of Deep MindMaps (DMMs) any type of information can be stored in a DMM. As some examples, in some embodiments cultural DMMs describe the way in which people from particular cultures see the world. Conflict DMMs tell the computer who is participating in a conflict, what each party's goals are, and how those goals affect the parties, and which Cultural and Psychological DMMs should be used to understand the parties' worldviews. Psychological DMMs describe the way in which minds work in general, but the user normally doesn't need to create them, as the system described here is normally licensed with a psychological DMM good for most any purpose.

As one example, in some embodiments, for a persuasion task, one would only need one Deep MindMap for each involved culture or subculture. In some embodiments, for conflict resolution, one might need one overall Conflict MindMap and at least one Cultural MindMap for each participant. Deep MindMaps can be reused across conflicts; it is envisioned that, in some embodiments, for field use, prebuilt libraries of Deep MindMaps could be created at HQ in conjunction with informants and then made available for reuse in the field.

In some embodiments, algorithms described here generate recommendations. In some others, they present the results of analysis or present new or relevant information. Deep MindMaps provide a new knowledge multiplier in that the information they contain is no longer locked inside the heads of experts rather, it may be disseminated across the enterprise where it is able to influence decision making processes.

In some embodiments, cultural/worldview models tell the computer how a specific group of people (as defined by the user) tends to see the world. Built by or in conjunction with informants, they help remove a significant source of inaccurate decision-making: ethnocentrism. In some embodiments, psychological models provide cross-cultural insight into the human psyche, drawing on cognitive and social psychology. In some embodiments, in conflict contexts, conflict models provide a simple means of informing the system about the specific content of the conflict at hand. Because humans can read and understand the exact same models that are presented to the computer, there is no need to engage in time-consuming model translation between development and deployment stages.

### CogSOLV/CogResolv enabled understanding

The system described herein makes it easier for users and other systems to understand and take social factors such as religion, culture, values, and history into account.

In some embodiments, the system's combined visualization, collaboration, and modeling capabilities enable a user or accessing system to spatially comprehend the identities, psychological dynamics, and structural factors undergirding the complex relationships between disputants, stakeholders, and community and interest groupings, including: a) the in-depth nature of the relationships between parties, specifically focusing on psychological dimensions such as emotional connections, past history, past grievances, ethnic and clan concerns; b) social, economic, political, and power-related structure issues, including resource contestation, political access, and intergroup rivalries and power imbalances; c) general psychological principles, such as trauma that needs to be resolved, and community integration that may be required, d) the dynamical nature and potential relevance of community-based reconciliation methods (such as mato- oput); and e) general related historical circumstances and events.

Through clarity and nuanced simulation, the system presented herein provides for making the hidden explicit, increase decision quality, and model psychological factors such as pain and determination.

The system presented herein can model the unobvious effects on complex systems of single changes, including the dynamic effects of changes and perturbations over time.

In some embodiments, essentially, the system 'gets into the head' of participants, modeling subjective experience at a deep level.

In some embodiments, the system enables negotiators to discover which parts of the conflict 'space' are more fixed and thus less amenable to negotiation and areas where there may be more room from the other parties' perspectives.

### CogSOLV Peacekeeping Exemplary Embodiment

As alluded to above, in many ways peacekeeping is inherently constituted by signaling, especially so because peacekeepers often cannot resort to force to achieve their goals. This means that most actions troops take are calculated to send certain messages, using indirect methods calculated to have certain psychological effects. The system can model these.

Specifically, for local perspectives in some embodiments the system assists users in answering questions like those below:
1. 'Minimal understandings' : Can we establish a minimal set of knowledge we must gain about local perspectives in order to properly design a peacekeeping mission? How should local culture modulate our peacekeeping actions?
2. Modulating emotions/fear/mistrust: how can we calibrate our messages to improve these factors?
3. How can we use local conditions to adjust the messages we send?
4. How can we maximize the legitimacy/correctness/appropriateness of our actions relative to cultural and local standards?
5. How do the 'peacekept' differentially perceive message form and content in different cultural/conflictual contexts?
6. What sorts of messages are sent through what actions?

### Training and Situational Awareness

In some embodiments, the system described herein significantly enhances training and situational awareness capabilities.

In some embodiments, trainers can use the system to quickly brief parties who have just entered the field of influence (consultants, military personnel, media, academics, and so on). Multiple-party access to a common picture enables new forms of teamwork and shared access to knowledge.

In some embodiments, the system described herein enables trainers to include a greater totality of information not easily provided via other modalities, including relational and psychosocial factors, systems, structure, relationships and psychology. In some embodiments, Deep MindMaps enable interested parties to visually arrange, drill-down and spatially understand the true nature of the situation at hand. Grievance details and possible 'angles' of resolution can be understood and simulated using spatial intelligences in addition to purely rationalistic or sequential methods.

### CogSOLV Improved Situational Awareness via Story Building

Varied research suggests that storytelling is an important part of how humans make sense of their world. The example story below demonstrates the system's ability to automatically convert analysis into story form.

We are unhappy that you are engaging in Outsider Interference (-100), which is against our Religion ...

One must not cause Fear (-100).

One must not interfere with Honor (-100).

Supporting Others supports Masculinity (1000), which is an important part of Tradition.

As an example, this functionality can be useful when the story-based perspective is of interest and a user wishes to understand the other side via that lens, or when one wishes to understand the impact of particular goals on the other side from that side's perspective.

### Additional Sample Reasoning Algorithms and Their Inputs

In some embodiments, the system includes reasoning algorithms (referred herein to CogGenies), each of which solves a specific problem or "task," referred herein as the Task or entered task. Some sample CogGenies listed here operate solely on Deep MindMaps, while others also accept simple inputs describing a specific task scenario for which the system will utilize the CogGenies to perform a simulation. In some embodiments, the CogGenies are specialized application programs each designed to produce a result based on complex data and complex task situations. In some embodiments, the system 100 includes a set of predefined CogGenies available for reuse and/or use in some combination when a new task is received or requested by the system 100.

As noted, in some embodiments a CogGenie can be a small computer program that offers suggestions, makes predictions, or answers particular questions. In some embodiments CogGenies are provided for specific tasks such as negotiation, conflict resolution, persuasion, and psychological tasks. Sample CogGenies include:
1) Negotiation: a) Fully Automated Worldview- Aware Smart Negotiator Simulates entire negotiations from both parties' perspectives, automatically generating counteroffers and offering more as negotiations progress; b) Counteroffer Generator Creates counteroffers most likely to be viewed positively by the other side while not overly damaging the offeror; c) Offer Appraiser Scores offers based on how the other party would view them; d) Offer Believability How believable is it that a party would propose some particular offer? e) Find Clashes Between Worldviews and Differences of Opinion Determine points for negotiation emphasis; f) Detect Incompatibilities within Proposals from the Other's Perspective Avoid unforeseen mistakes find hidden issues within proposals; g) Find Concepts/Issues Where Opponent will likely be more open to Budging Use system to discover points of movement.
2) Persuasion: Indirect appeals are often more powerful and useful than direct ones.: In one embodiment, an AutoPersuader algorithm provides concepts to be included and avoided in messaging for maximum impact on particular audiences; using CogBASE, the system also provides additional concepts that indirectly evoke the original target concepts, drawing on cognitive principles to add even more power.
3) Conflict Resolution and Peacebuilding: In one embodiment, a) Generate Deep Win- Win Options Using deep needs analysis, generate new Win-Win options that conflict resolvers may likely not have thought of; b) Calculate 'Resolution Score' (degree of true conflict resolution) useful for discussing conflict with others; and c) Discover the concepts and ideas truly at the heart of the conflict the 'essence' of the conflict. Find out where the conflict may be most amenable to change.
4) Persuasion-Related Psychological Theories In one embodiment, CogDataGenies offer insight from specific persuasion-related psychological theories: a) Social Judgment Theory Discover the core ideas driving socially-driven and other 'anchors' in decision making in order to identify those ideas most important to the other side; b) Dissonance Reduction Find out where cognitive dissonances are being created as a result of the conflict, so you know what to focus on and what to avoid; c) Directed Dissonance Reduction Via INTELNET/COGVIEW graphs, redirect the process of dissonance reduction in order to change beliefs in desirable ways and d) Story Crafting Automatically generates a story describing the other side's point of view an important alternative way of gaining understanding.

The above represent only a few of the CogGenies that are enabled by the system, and one skilled in the art will understand that others are also possible and enabled hereby.

### Interpretation of Negotiation- Related Outputs

In one embodiment, with respect to negotiation-related outputs, we highlight two important concepts: energy/concept pairs and acceptance scores.

Energy/concept pairs assign energy values to concepts (such as happiness or 'computer'). Energy values are numbers and can be positive or negative. Positive energy values attached to a concept indicate that the attached concept is desirable, is present in some context, or is a goal that should be pursued. A negative energy value indicates concepts that are undesirable, not present, or should be avoided.

As an example, the energy/concept pair -150/Fear could indicate that fear has been or should be lessened, or that fear creation should be avoided. Concepts are understood from the 'receiving perspective' thus, the pair 100/Dominance indicates that 100 units of dominance are being applied from the outside to the party whose perspective is being described.

When interpreting energy values, 100 is a 'typical amount', so -150/Fear suggests that Fear has been or should be reduced 1.5 times 'a reasonably typical amount' that one might encounter in practical everyday life.

The second concept, acceptance scores, indicate how likely someone would be to accept or reject a particular proposition. Normally, scores range from -1 (absolute rejection) to 1 (absolute acceptance), but they can be much larger or smaller depending on simulation outcomes. As an example, one might assign the score +1 to the proposition Obtain food and shelter and -1 to the proposition Experience starvation.

In one embodiment, the output of the algorithms can be displayed in 'word clouds' with concepts in that can be shown in various colors such as red and green colored text and of different sizes. Words can e sized in proportion to the energy they have received. Depending on the CogDataGenie being used, by way of example, a green-colored colored concept can represent those that the user should attempt to augment. In the dissonance-induction context, the green-colored concept can be those creating dissonances that are foreseeable but whose impact is likely to be misunderstood due to cultural factors. In this context, in one embodiment a colored red item can denote critical concepts that are currently being ignored but should be more carefully considered in order to create positive change.

### System CogSOLV Advocacy and Persuasion Exemplary Embodiment

The system described herein provides significant functionality for advocacy and persuasion. In one embodiment, related CogGenies help users employ deep knowledge about beliefs, cultures, and cognition during the persuasion process. The system indicates exactly what to emphasize and how (and what to avoid) in order to maximize persuasive effectiveness from the other side's point of view. In one embodiment, in line with Social Justice Theory, the system can also discover the specific 'anchor' concepts across which opinions are formed on specific issues.

In one example, the system explores how Western governments could go about handling the recent wave of anti-LGBT sentiment in Africa. The system suggests an approach quite opposite to that currently in use, namely one focused on local dignity, religion, and tradition. The example simulations suggest in part that differing versions of happiness, as well as concepts regarding politeness, sociality, and suffering are ultimately at issue.

Ultimately, indirect appeals are often the most powerful. During persuasion, the system can provide Potential Invoking Concepts (PICs), - alternate concepts capable of evoking core concepts that the system recommends users include in their persuasive communications. In one embodiment, PICs are drawn from the CogBASE commonsense knowledge database.

Sample text format data supporting the above (concept=energy, T denotes target energy values): Happiness=10500/T1000, Core Emotions=-5900/T1000, Power=-5600, Local Cultures=3300, Respect=3300, Ideologies=3300, General LGBT Perception=-3300, Communitarianism=3300, Ego=3300, Tradition=3000, Morality=2600, Face=2500, Masculinity=2000, .Honor=1000, Conflict=800, Offended=800/T-1000, Local Dignity=700, Equality=-700, Christianity=-500, Religion=500, Christian Values=-500, anger=400, trauma=400...

### System CogResolv: Fair, Needs-Focused Conflict Resolution

As mentioned above, CogResolv focuses on resolving conflict in ways that are truly just in the sense that deep emotional and practical needs are met. CogResolv' s access to the core needs of each party enables it to determine to what extent any particular resolution is actually just.

In some embodiments, for conflict-driven contexts,
CogResolv includes the following selected features:
System CogSOLV Justice Score

In one embodiment, a conflict may be considered to be justly resolved when 1) target scores are maximized and 2) no significant clashes result. Target scores, defined in this context as values attached to specific COGVIEW concepts (such as family, safety, and belonging) indicate the core importance of certain concepts to a party's fundamental well-being. Clashes, in turn, in this context indicate when a particular phenomenon violates fundamental, deeply-held values. The location of the clash within the Deep MindMap indicates the cause and nature of the incompatibility. CogSOLV's Integrative Option Generator inherently generates options leading to truly just results.

Normal Justice Score values range from -1 to 1; values outside this range indicate particularly just or unjust resolutions.

### System CogSOLV Integrative Option Generator

When it is unclear how a conflict may be resolved in an integrative (highly equitable) manner, previous resolution attempts may have failed, and new ideas are required, this subsystem is able to find new ways of meeting old needs. The subsystem helps separate issues and reframe conflicts.

When the system generates options, each option can be interpreted as follows: a concept is given together with an associated energy. If the energy is positive, policy choices/actions that facilitate that concept should be chosen, and the reverse for negative. As suggested above, 100 units of energy is the 'normal' amount.

As an example, 'Equality/700' suggests that strategists would do well to focus judiciously on that concept. 'Linking of Development Assistance/-3000' suggests that strategies should not significantly invoke this concept, and may do well to explicitly disclaim it.

Relative to one embodiment, sample Options for Ameliorating 500 units/Colonialism (from relevant perspective):
Western -Country could undertake: Equality/700, Sociality/4300, Local Cultures/700, Linking of Development Assistance/-3000, Strength/1000, pleasure/1000, mad/-1000, anger/-1000, mean/-1000, trauma/-1000, hate/-1000, despise/-3400, scorn/-1000, embarrassment/- 1000, Support Others/1000, empathy/1000, enjoy/1000, angry/- 1000, Local Dignity/1000, unhappiness/-1000, joy/1000, like/1000, guilt/-400, regret -400, remorse/-400, Outsider Interference/-3000, Religion/1000, Colonialism -6000, happy/1000, Social Discomfort/- 1000, Human Rights Discourse/-3000, care/1000, Love/1000, Dominance/- 1000, Aggression/- 1400, heartache/- 1000, Support Others/1000, Psychological Drives/1000, Strength 1000, Religion/ 1000, Local Dignity/1000.

### Discover Concepts in Conflict (Find Conflict 'Essence')

This functionality helps a user understand the 'essence' of a particular conflict, explain the core of the conflict to others, and gain new perspectives on existing conflicts.

In one embodiment, the subsystem presents a list of core concepts that are most responsible for driving the conflict at hand. For example a red-colored concept can be particularly problematic concepts (concepts that are not being properly addressed by the conflictants), and green-colored concepts represent those that, if taken properly into account, could help push the conflict in the right direction. Protracted Conflict

Untangling the complex issues leading to protracted conflict represents a very difficult task for humans. CogResolv can provide major support in that it is able to simultaneously 'compute all the angles' and point users towards the best solutions. CogResolv' s Integrative Option Generator and Automated Negotiator Agent automatically generate nonobvious ways forward that simultaneously address all practical and psychological aspects of conflict and equitably maximize benefits for all sides.

### System CogSOLV Automated Negotiation Embodiment

The ability to understand counterparts' worldviews, goals, needs, and so on, leads to the ability to automate and predict potential flows for entire negotiation processes.

CogResolv's Automated Negotiator Agent helps discover options that optimally maximize both sides' perceived value. The agent is able to automatically simulate opinions, needs, and goals on both sides of a conflict.

Relative to one embodiment, Sample Clashes:
Christian Values vs. Christianity, via: Human Rights Discourse [-100], Outsider Interference [-300], Equality [700.0].
Communitarianism vs. Ideologies, via: Colonialism [-100], Equality [700.0], Christian Values [500.0],
Christianity [500.0],
Religion [1500.0], Local Cultures [700.0],
Empathy vs. Morality, via: Colonialism [-100],
Face vs. Core Needs, via:
Equality [700.0], Christian Values [500.0],
Christianity [500.0], Religion [1500.0],
Local Cultures [700.0], Respect [700.0].

At each round, the agent chooses options that have been determined to best meet the needs of the other side while avoiding overly negative costs for one's own side. Potential offers that would be insulting to or overly damaging to either side are automatically suppressed.

From Iran's perspective:
Proposal Iranian Nuclear Weapons/-300 receives desirability score -4.5658 (i.e. quite low).
Reasons: -3600/Security, -2700/Values, -2700/Power, - 1880.0/Safety, 1600.0/Dominance,
-1600/Country, -900/Control, -675/Equality, -600/Freedom, -600/Honor, - 600/Respect ...
Agent chooses proposal Trade/132.3725, Diplomacy/65.0, Sanctions/100, score 1.3915. Example Odious Proposal':
3000/ Attack (i.e. enable other side to attack even though this may offset other factors, US can't offer this as it too negatively affects its interests).

The system' s ability to calculate the value of various offers enables it to offer progressively more value as negotiations continue.

As confirmed via human evaluation, the system's provides are remarkably human-like. In the case of CogResolv's simulation of the Iran/US conflict over nuclear weapons, CogResolv's recommendation was in fact nearly identical to a settlement which took place in 2013 (that is, some months after the initial simulation was run). See Fig. 4 by way of example in this regard.

### Automated Cooperation and/or Command and Control

In this embodiment, robots, Unmanned Aerial Vehicles (UAVs), and other autonomous or semi-autonomous systems (referred to as clients herein) can be provided via INTELNET with a common operating picture, general, reusable, repurposable knowledge about tactics, objects in the world, enabling the clients to automatically discover ways to handle changes and emergencies as they arise. The system enables clients to predict the behavior of other clients. There are many instances when clients may find themselves out of contact with the human operator, such as in denied environments and/or when communication is only available over low-bandwidth channels, or when communication is insufficient to enable coordinated response to changes and emergencies. By providing a common knowledge representation formalism enabling the UAVs to make maximally useful, nuanced inferences about the world and their operating environment, and to communicate with one another, this embodiment can enable that coordinated response and allow the client to make good decisions about how to respond to emergent situations.

### Culture- and Knowledge-Aware Disaster Response

Experiences from the field clearly demonstrate the importance of cultural sensitivity to effective disaster response. Moreover, incident commanders are subject to a wide variety of forces that can complicate response, such as information overload, unavailable expertise, or severe time pressures.

The benefits of the system described herein for human decision making apply here as well it can manage detailed task and threat information and help responders triage and avoid emerging threats.

The system 100 can compute, in real-time, the most important things for a commander to take into account. As intelligence comes in, the system can automatically ingest it and update these priorities.

The system can determine how responders should act in order to be viewed positively as well as the process by which viewpoints are generated on the survivor side. As shown in research by HHS and others, if responders fail to cater to cultural needs, survivors won't trust them and may not evacuate or follow other directions.

The system simulates cultural perception both with respect to: 1) responder actions; and 2) Tweets and other social media data discussing the actions that responders take. Sentiment and task models are used to extract opinions being expressed. The latter capability enables the system to automatically discover, for example, that messages about explosions affect human safety (including possibly eyes and hearing). This can include a sentiment analyzer 172 directed as receiving and analyzing and generating sentiment data from the other data and can also include a sentiment concept extender that extends the sentiment into other concepts and related models and data.

Leveraging the system's deep culture and domain knowledge base enables it to provide scores for response activities across various cultural and practical dimensions, including but not limited to Capability, Responsiveness, Correctness, Values Alignment, Solidarity, and Legitimacy.

The system enables responders to master counterintuitive aspects of response, including the need to take specific actions for particular ethnic groups, which could include, for example, providing information through messages from friends and family instead of formal sources for Vietnamese communities. During response, intelligent actions build solidarity.

### Tweet/Social Media Processing for Disaster Response

CogResponder includes a powerful opinion mining engine capable of using deep semantics, and various elements of the system described herein to determine the real-world effects of events using commonsense knowledge and, in turn, the pleasantness and emotional effects (including cultural and other perceptions) of raw social media textual content.

As an example, if an incoming tweet suggests that an explosion has taken place, the system understands that this is likely to cause pain and unhappiness, which will be viewed negatively and will also reflect poorly on responders as they did not prevent this from occurring.

In the sentence 'l have no shoes', the system's knowledge enables it to understand that a shoe is an article of clothing, the lack of which affects the health of the individual, which in turn affects perception of response. The system contains significant knowledge about what health is and what affects it.

This knowledge also enables the system to determine that bomb has semantics related to those of explosion, so social media users can employ a wide range of vocabulary to describe the things they see.

The system brings particular Tweets to responders' attention based on the semantics described therein, such as someone being trapped, family members in distress, unhappy statements and so on. The sentiment engine in this integrated system is the first to use deep semantics to this extent.

In one embodiment, outputs include 1) trending topic and valence detection (i.e.'l love FEMA'→ positive sentiment towards FEMA; 'Thankfully there was no explosion'→ negative energy into explosion, which provides positive sentiment for responders as well as the Tweet itself), and 2) semantic concept histories (bomb and explosion would trigger the same trending topics).

The system can also discover trending locations so that hotspots may be quickly identified and resources diverted.

Relative to one embodiment, results of processing of the sample input sentence: 'l got chemicals on me.':

### Key Concept: Chemical

Computed Semantic Consequences and Dimensions Affected:
Explosion/600, High Temperature Explosion/400, Pain/200, Explosive Decomposition/200,Heat 200, Burn(Medical)/200, Fire/200, Oil/100, Combustibles/100, Eyes & Skin -200.0,
Cultural Dimensions:
Physical Effectiveness/-600, Personnel/-600, Physical Security/-600, Core Needs/- 600,
Responsiveness/- 1200, Infrastructure/- 1200, Health/-1700, Legitimacy/- 1700,
Correctness/- 1800, Capability/-3500.0.

### Cvbersecurity application

In this embodiment, the system described herein is used to model various holistically-related aspects of cyber systems, including but not limited to people, software, systems, firewalls, vulnerabilities, assets, and any other object or entity that would be attached or related to cyber systems (collectively referred to as cyber information). In this embodiment, INTELNET models are used to store this cyber information, reason about it, and recommend actions, identify risks, mitigate risks, and generate other actions and/or control signals.

### Investing application

In this embodiment, the system described herein is used to model various holistically-related aspects of financial markets, including but not limited to people, currencies, countries, commodities, equities, assets, and any other object or entity that would be attached or related to financial systems (collectively referred to as financial information). In this embodiment, INTELNET models are used to store this financial information, reason about it, and recommend actions, identify risks, mitigate risks, and generate other actions and/or control signals.

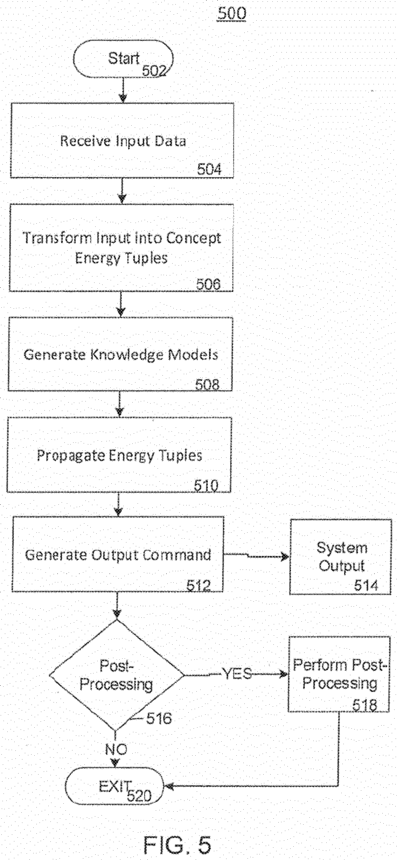

Turning now to FIG. 5, a summary of a general process 500 provided by at least one embodiment of the present disclosed system and method is shown. In this embodiment, the process 500 starts at step 502 with the system being engaged. At step 504, the system 100 receives input data for processing. Data types appropriate for input are numerous and described throughout the present application. One of ordinary skill in the art would appreciate that there are numerous methods for obtaining and/or receiving data types for processing as input, and embodiments of the present disclosed system and method are contemplated for use with any appropriate method for obtaining and/or receiving data types.

At step 506, the system 100 transforms the input data into a set of concept node/energy tuples describing how much initial energy should be placed in particular concept nodes. At step 508, the system 100 executes a knowledge model generation process (if present). The knowledge model generation process is detailed later herein. Once the knowledge model(s) have been generated, the system may execute a model combination process (if present), generating a combined model, or if no model combination process, consider single said model to be combined model.

At step 510, with reference to said tuples, the system 100 places said energy into said concepts and allow said energy to propagate throughout said combined model.

At step 512, the system 100 executes reasoning procedure, generating output command, as described and defined above and herein. This can include generating an output command over system output 514.

A decision is made at step 516 as to whether an optional post-processing step is to be executed. If so, the system 100 executes the post- processing step 518 on said output data or command, generating new final output data and the process ends at step 520. If the system determines no post-processing is desired or necessary, the process 516 skip the post-processing step 518 and terminates the process 500 at step 520.

The following describe each of the process steps above in greater detail.

### INTELNET graphs (also Deep MindMap)

In some embodiments, an INTELNET graph contains information, optionally expressed in the INTELNET and/or COGVIEW formalism, about any topic or domain, potentially including but not limited to aspects of human beliefs, feelings, emotions, religion, thoughts, needs, goals, wants, psychological functioning, business processes, products, destinations, restaurants, attractions, other travel- and business-related topics, political policies, and general objects, and general systems.

Knowledge models are sometimes referred to as Deep MindMaps or COGVIEW Deep MindMaps. The following knowledge model embodiments are included. All of the below model types (and any and all model types not listed here) may interoperate and work together, and may be combined during the model combination process.

Psychological Models: A psychological model describes aspects of human emotional and psychological functioning, such as the notion that frustration can lead to anger, the conceptual components and cause-effect building blocks of emotions such as shame and happiness, and so on.

Cultural Models: Cultural models include important cultural and religious concepts. Past models have covered the US and Iranian nuclear dispute, sub-Saharan African conflict resolution, the origins of the 'good luck' status of even and odd numbers in Chinese (published), and suicide terrorism.

Belief and Worldview Models: Belief and Worldview models include information on how people see the world. As examples, they might include information on religious belief structures, moral beliefs, beliefs about conflict, and so on.

Customer Models: Customer models describe the general needs, goals, desires, beliefs, culture, wants, and other aspects of a) a particular customer, b) a particular set of customers, or c) a general group of customers (including all customers) in some set of markets (possibly all markets).

Embodiments of the present disclosed system and method may also utilize a sub-embodiment of a Customer Model, known as an Intelligence Customer Model. In a preferred embodiment, intelligence customer models describe customers in the national security and intelligence space. In addition to general needs, goals, desires, and so on, these models include information on what topics customers may be interested in, including but not limited to particular regions, countries, policies, objects, and weapons (represented in one possible embodiment via INTELNET+COGVIEW concept nodes) Such models may also optionally include information regarding the content of various bureaus' portfolios, information sources that bureaus may have responsibility for/ ownership of, and other internal government information facilitating reasoning.

Market Models: This type of model encapsulates information about the dynamics of particular economic markets ranging from the micro to the macro. Included is information, at various levels of detail, about objects and the ways in which objects interact within that market. At the micro level, for example, a market model might contain information about home gardening, such as the objects involved (rakes, garden hoses, shovels, etc.). The example model could include information that shovels make holes, facilitating planting, and that garden hoses deliver water, that plants need and benefit from water, and so on. Using the mechanism described in this application, the system could use such a model to infer from purchases of gardening gloves and shovels that a customer has an interest in gardening.

Domain Models: Domain model is a general term for a knowledge model containing information tending to be at a greater level of specificity and to be concerned with information regarding the practical world (less so human beliefs and emotions).

Topic Models: This type of model includes specific domain expertise. Examples include (but are not limited to) various types of weapons, chemicals, and so on. Its function is to encapsulate detailed knowledge necessary to support nuanced reasoning.

Area Models: This type of model covers details about geographic, geopolitical, and political areas, as well as areas delineated by any other means. Examples include (but are not limited to) regions such as East Asia, Sub-Saharan Africa, Ummah, and Nigeria. In one embodiment, such models may include concepts and processes of interest to the public, academics, students, intelligence analysts, and/or other government officials.

Political Models: Political models describe general political processes (including to but not limited to bill making, elections, and ongoing hostilities.) Such models may include details of how various political parties are linked, the specific details of issues and other important parts of political processes, and, like all other model embodiments, may link to domain and other knowledge in other models.

Political Personage Models: Such models cover elements including but not limited to relevant parties, aspects of personalities, beliefs, and so on, political and other ties, and the connections between persons of interest and other parties. In one embodiment, these models come into play when certain personages (such as Yanukovych in Ukraine or Putin in Russia) exert particularized effects on broader political systems of interest. They may also cover individual persons of interest such as terrorists.

Segmentation Modeling: In one embodiment, a large amount of information about customers is used to generate marketing segments and profiles of the people in those segments. Both the segments and profiles are nuanced and draw on the deep human understanding capability of the system presented here.

Business Investing Models: In one embodiment, an investor models a number of business models and receives a recommendation from the system as to which one is most likely to succeed in a given business environment.

Government Needs/Goals Models: These models describe general government/national security needs and goals. Such models assist in generating "Key Alerts' (which may optionally be displayed on a dashboard or GUI interface 111), which in many implementation will be a combined input user interface 109 running on a user system 107 also having and performing the functions of the system output 111 via output GUI 111, and in enabling the system 102 to calculate the impacts of various events and pieces of information on key security processes, actors, and states of the world of interest.

The system GUI interface 109, 111 on user system 107 or output system 110 can provide the user the ability to define or enter a task 117 that can include an object of the task, an action related to the task, possible steps to accomplish the tasks and items needed to accomplish the task. These task items 119 can be changed as required for the present or future operations of the task. The system 100 can also provide the user a notification of a change to one or more of the task items 119 based on a simulation or based on an identified change in a related or associated task item 119, model 152 or atom 114 or other system information, such as a change in an environmental condition, by of example. Task goals, and task items 119, as with other data items, are assigned ratings as described otherwise herein. As one example, this can include a modeling of a real-time cultural perception. For example, in an emergency situation if survivors perceive the first responders or the context of the situation negatively, the survivors may not comply or comply in a slower manner than if positively viewed. As such, others may not volunteer to help, donate or view the first responders in a positive manner. The present system 100 can determine in real-time the impact that certain actions of the first responders may have on the perceptions as to their capabilities, responsiveness, correctness, alignment of common or perceived values, solidarity and legitimacy. If the simulations indicate a negative perception is possible, the system 100 can adjust calculations by comparing simulated scores which can result in a determination to direct a different message, action or plan that would result in a more positive perception in nearly real time. This can include a rating based on various cultural factors to provide an extended cultural- semantic simulation and resulting generated instruction, decision, or projection.

### Customer Reasoning Substrate: Further Embodiments

According to an embodiment of the present disclosed system and method, a reasoning substrate could be comprised in part of a set of knowledge models containing sufficient knowledge to enable the system to make inferences.

In another embodiment of the present disclosed system and method, a reasoning substrate could be comprised in part of a set of knowledge models describing the beliefs of a core group of interest, an optional set of religious or cultural knowledge models used in conjunction with belief knowledge models, one or more psychological knowledge models, and one or more domain knowledge models. The goal of such domain knowledge models is to provide practical real- world knowledge that, when used together with the other knowledge models, enables the system to generate inferences about the world and compute the nuanced consequences of phenomena. Inputs

The system described here is capable of answering an innumerable range of questions, working with an innumerable range of tasks, and solving innumerable problems. The task, question, or problem being addressed at any given moment can be considered as the Input as described above.

### Input Transformation, Translation and Conversion

Many reasoning procedures require an input in the form of energy/concept tuples. Consistent with INTELNET theory, there is no limit to what can be expressed in this form. The conversion procedure depends on the type of input being considered. The system 100 can support many different questions being asked and solve questions related to many different tasks. For many conflict resolution applications, concept/energy tuples are set by GUI presented "sliders" next to graphically presented concept names.

Common sense data and information is converted into atomic data for general system use. Atomic data is data as its lowest form. For example, system component 223 or data translator can translate various forms of knowledge and data into to system data that can be atomized and stored in a common manner within the CogDataPool 221 that can include the CogBase 114, the Deep MindMaps 150, the COGVIEW 130 or any other system component, all of which can have direct or indirect access to the data stored within any other system component which collectively is referred herein functionally as the CogDataPool 221.

In the case of the travel-related application described in this filing, in one embodiment concept/energy tuples can be generated by the goals the user indicates to the system.

In general, the 'two step' method described earlier can be used to decompose any Input into concept/energy tuples.

### Process for Knowledge Model Combination

One simple embodiment of this process is to align all model graphs within the knowledge substrate using the concepts as alignment points. As an example, if one graph had the structure A -) B -) C, and another the structure Y -) B -) Z, the combined graph would read as A -) B, Y-〉B, B-〉C, and B-〉Z.

This process is quite efficient, and even more so if a Natural Language Processing stemming technique is applied to concept names before alignment. In some embodiments, a language concept extractor can be implemented within the system 100, such as within the language meaning simulator 170 to extract concepts that are inherent in the received language.

### Process for converting knowledge models and inputs into output (reasoning procedure)

One embodiment (the most common) is general energy flow. Energy is introduced into concepts based on the input (in amounts also given by the input), energy flows through the reasoning substrate, and then the final energy distribution of the reasoning substrate (the energy in each concept) gives the initial output. This output is then converted to a final output via a process that depends on the problem being solved but generally includes a message or control message for controlling or initiating an external system action, but can also include initiating a screen presentation or data on a user interface such as a GUI 111 coupled to or hosted by output system 110.

In another embodiment, the general energy flow procedure just described is run in reverse, allowing the system to discover causes for various effects.

One of the key benefits of forward and reverse propagation (and the approach in general) is that it uses semantics (the information in the reasoning substrate) to convert from the input domain (often difficult problems and concepts) to a more-easily-processed output domain (the energy held by each concept in the reasoning substrate after propagation is complete). Data in the output domain is especially easily processed by computer programs, in general far more easily than that of the input domain.

One embodiment of the optional post-processing step is goal inference. This embodiment is especially useful in product selection and advertisement recommendation, as it allows the system to discover important parts of the user's mental state, including but not limited to what they are interested in, goals they may need/want to fulfill, and/or processes they may be undertaking.

The goal inference embodiment can optionally be facilitated via the use of CogBASE, domain/belief and other knowledge models, if desired. These models are often necessary because detailed real-world knowledge is necessary in order to connect indicators of user interest to goals. As an illustrative example, such models might contain information about home gardening, such as the objects involved (rakes, garden hoses, shovels, etc.). Example models could include information that shovels make holes, facilitating planting, and that garden hoses deliver water, that plants need and benefit from water, and so on.) The system could use such a model to infer from purchases of gardening gloves and shovels that a customer has an interest in gardening.

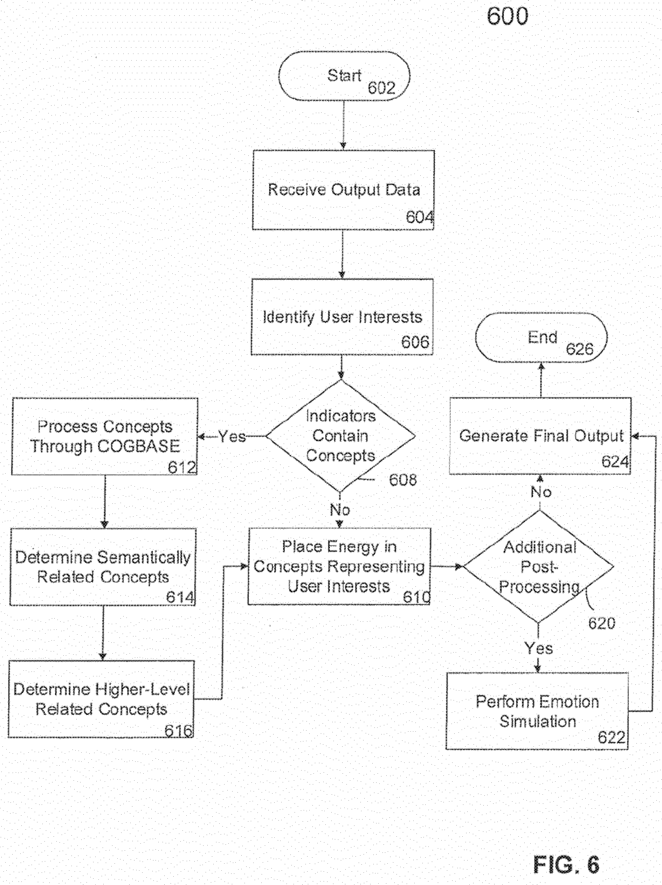

Turning now to FIG. 6, an exemplary embodiment of the post-processing goal inference embodiment method is described. The process 600 starts at step 602 with the system 100 being engaged for post-processing. At step 604, the post-processing portion of the system 100 receives the output control message or data for post processing. At step 606, concepts, ideas, and/or keywords potentially indicative of user interests (also referred to as user indicators) are identified, by observing the user's past buying habits, entered search keywords, customer profile, other user-related information, or by some other means.

A decision is made at step 608, where if user indicators are provided in the form of human language keywords or concepts (collectively known as concepts), these can be processed by system 100 or subsystem using CogBASE 220 or another system data resource within the system CogDataPool 221 in step 612. At step 614, during the system 100 processes and determines whether there are any other concepts that are semantically related to the user indicators. At step 616, the system 100 determines if there are any higher-level concepts that are semantically related to the user indicators. These additional concepts can help improve the accuracy of the goal inference process.

Whether the indicators contain concepts or not, the process 600 moves to step 610 where, in one embodiment, once a set of user interests is identified (possibly augmented as above), then energy is placed into the concepts representing each user interest. In some embodiment, this energy can be forward propagated or reverse propagated (that is, propagated in the reverse direction) with the later used to discover goals that these interests are consistent with. The goals with the most energy at the end of propagation are likely to be accurate reflections of user goals.

A decision is then made at step 620 as to whether an optional post-processing step is to extend the final reasoning output into new domains. If optional post-processing is desired, the process 620 moves to the optional post-processing step of emotion simulation in step 622. Because the system 100 has access to psychology and belief models as well as models of the practical world, it is able to calculate the emotion that would result from particular states of the world, and vice versa. As an example, it can calculate that positive energy in MONEY and positive energy in SUCCESS is likely to translate to positive energy in HAPPINESS, (i.e. money and success tend to somewhat enhance happiness).

Regardless of whether post-processing in step 620 is completed or not, the system 100 generates final output control, messages, actions or data resulting from the aforementioned process. At this point the process 600 terminates at step 626.

### Application Embodiments General ranking and/or recommendations

In one embodiment, the system provides general capabilities for ranking and recommendations, in that it allows for the computation of a goodness score for each item in a set. These are derived from final energy scores. Depending on the models used, the highest energies can translate into the highest scores; in other cases, a more nuanced function can be required.

Optionally, the general ranking/recommendation functionality can employ one or more of the additional post-processing steps described in this application, including but not limited to goal inference for products, emotion simulation, or any combination thereof.

### Rank and/or recommend products

In this embodiment, in addition to other types of models, the system employs domain models consisting of information about various products, including but not limited to what they are, how they can be used, what they are capable of accomplishing, who tends to use them and why, and so on. These can be created in part or in whole by the methods described here, or via some other means.

In one embodiment, domain and other models allow the system to infer goals and interests from keywords, browsing history, purchasing history, and other sources the goals that the user may be trying to achieve, objects they may be interested in, and information about their personality. In one embodiment, this goal inference can be achieved via the methods described earlier. From this data, the system can again use model data to recommend specific products that the user may also likely be interested in. In one embodiment, this can be achieved by forward-propagating energy from goals into product and other models. When energy reaches product-related nodes, those nodes should be considered as recommendations (subject to prevailing fitness functions).

In another embodiment, the system 'tracks' the cognitive state of users as they use a shopping or other type of Website. Based on what the user does, the system adapts the user experience, in real -time, of the Website so as to maximize revenue.

In one embodiment, the system can be enhanced in that it can differentially process temporary, semi-permanent, and replenishable goods, such as products that are likely to be bought once in a while (cars), products that are reused on a regular basis (baby wipes), products that only begin to be used once a particular event occurs and/or for a limited time period (i.e. baby food), and so on.

Differences in types of goods can be taken into account by connecting concept nodes for each type of good to nodes indicating various aspects of those concepts. As an example, links could be made from CAR to EXPENSIVE and TRANSPORTATION.

### Recommend and/or rank activities, restaurants, destinations and other aspects of travel.

This embodiment supports the making of recommendations g external information, models, and/or data including but not limited to interests, age, socioeconomic status, race, religion, country origin, travel duration, personality, and psychology for restaurants, attractions, destinations, and other aspects of travel and purchasing activity.

In one embodiment, this can be achieved using a reasoning substrate creation method (a question-based method works well), optionally asking further questions about interests, country origin, religion, and the other factors described herein, combining this with data from domain and other types of models, and then calculating a score for each potential restaurant, attraction, product, and so on. This embodiment can optionally be further enhanced by drawing on data including browsing/search history, advertisement click history, billing address, type of credit card used, and other data points providing information about the factors described herein.

In one embodiment, score calculation is achieved via the energy flow mechanisms described above. In one embodiment, multiple factors can, via energy flows, be coalesced into intermediate concept nodes, which can then share their energy with downstream nodes. These downstream nodes are then used to compute the contents of recommendations.

### System and Method Generated Advertisement Exemplary Embodiment

The systems and methods described herein can, in some embodiments, be used for improved marketing and advertising. This advertising system can, for example, utilizes the present system's the goal inference processes to select ads that are most likely to be useful and/or of interest to targeted users. In a related embodiment, this mechanism can also be sensitive to product types.

In one embodiment, the COGVIEW method described here utilizes a combination of collected atoms of information that can include culture, psychology, and customers (generally referred herein but intended to include targeted potential buyers, both retail and wholesale) goals and interests combined with atoms of information related to a wide range and nearly unlimited set of potential products and services (targeted products). The system and method provides one or more customer reaction prediction as to how groups of targeted customers or individual customers will be impacted by a proposed or actual advertisement. The system can also collect and analyze these customer reaction predictions for generating a control message at its system output as to the system recommended advertisement. In this manner, the system recommended advertisement is an improvement over the targeting, placement, presentation and timing of advertisements as performed today, by identifying and generating an advertisement control message with the system recommended advertisement that is the right advertisement at the right time to the right customer.

To accomplish this, as described by the systems and method herein, initial models 109 are established within the system user input system 106 such as the graphical user interface 111. The system 102 further receives the potential advertising messages that are also converted into atoms 226. The system 102 utilizes these models 109 and the stored atoms of information 226 as determined by COGVIEW 130 to build one or more Deep MindMaps 152 that simulate the effects of each potential stored advertisement to generate the system recommended advertisement or advertisements. To determine the appropriate advertisement for a particular time and channel, the model of the user 109 is updated and based on the system recommended advertisements.

As one of skill in the art would understand, through this described process and using the present system, the system generated control message with the system recommended advertisement can therefore, not just be personalized as many current systems and processes that utilize click data and the like, use, but are actually personal to the individual customer.

By way of example, the initial model 109 is received and further defined to form the Deep Mind Map 152 by COGVIEW 130 that models the psychology and simulates the targeted customer behavior through utilizing the atoms 220 stored in the CogBase 114. This can include atoms 220 related to products or services such as a product being a car or a computer and a domain such as a job, transport, and relationship. Each of these can be built within COGVIEW as a separate COGVIEW model 132. Further, the system and process utilizes nonspecific atoms and models as well as applicable specific models. For instance, within CogBase there are predefined or standard group models and cultural models, by way of example. Further, COGVIEW models 132 can include individual customer models that are developed (predefined or obtained on the fly) based on obtained customer data (that can be atoms 220) such as website URLs, website clicks, customer data such as customer profile data based on demographics, by way of example, but not limited thereto. The source of these customer data atoms 220 can be from any available source and the customer models 132 for each customer can be predefined or defined based on the particular system action in process.

The system and process than applies for each of the potential advertisements a simulated effect of each potential advertisement and determines the psychological and domain effects of each potential advertisement. Unlike other targeted advertisement selection systems and processes, the present system, through the use of the atoms 220 and the models 132, utilizes data nuances that most systems cannot utilize or even have knowledge. For instance for a potential car buying customer, the atoms 220 included in the models 132 of CogBase and the COGVIEW Domain Model for a particular customer can include nuances such as the potential advertisement for a particular car has a beautiful blue sky with sporadic clouds, a green landscape background with trees and water, and with a person with sports equipment located away from the city. This is a sample of the nuance atoms for the proposed advertisement that is not considered by other systems. By having this type of nuance atom based model 132 for each proposed advertisement message, the system utilizes the customer model 132 to determine a system recommended advertisement.

However, at the time desired for making the advertisement, the system 102 updates the customer model 132 based on the prior system recommended advertisement. This updating of the customer model 132 can include, identifying the group or culture of the targeted customer, identify the specific targeted customer, and identify any known atoms or information related to the targeted customer at the present or desired advertisement. Each advertisement 132 is then updated such as using current context factors such as, by way of example, keywords, recent buying history, external events, etc.). From this the system 102 determines or calculates a fit between the proposed advertisements including the creative effects of the advertisements on the current and updated user model 132. The system 102 then generates an output message identifying the recommended advertisement from the calculating and determining that based on the nuanced data, has the greatest or most likelihood of addressing the targeted customer needs such as creating the best perception and feeling about the advertisement to that particular targeted customer at that particular time and place.

As described herein, the system 100 provides a general new capability across much of the content below: move to psychometrics understand the customer at a much deeper psychological level, understand what relevant processes are going on in their life, what goals they have.

This includes an advanced predictive analytics system and capability that utilizes the systems as described herein that here before did not exist and as such the analytics were not possible. With the present system 100, the system 100 can simulate human lives, thinking, psychology. As such the system 100 can provide analysis capabilities on the fly with the ability to access and analyze all sorts of data that could affect shopping, including not only customer preferences, but weather, time of day, that day's stock performances-anything at all. This can include events that are happening on the ground (i.e. hurricane), automatically adjust product ordering/delivery scheduling. The system 100 can collect and infer customers' favorite colors, locations, hobbies, for advertising and sales tasks. One such example might be an automated salesperson' for website, or in-store kiosks that asks the customer what they want to achieve today, what are you looking for, is it for a special occasion (birthday, etc.), how much are you looking to spend, by way of examples. From this, the system 100 can run simulations to as a result generate suggestions message of products or services based on deep understanding and trending purchase data for certain special occasions. This is not simply based on looking at past purchases and making decisions, even though these are considered, but consideration can be made to other purchase products and services at other times, for other occasions. This general product recommending capability can be used also on in- store/online purchasing patterns to infer various goals, attributes of purchasers, to look at what product does/is for actually infer deeper meaning/purpose/psychological attributes. For example, if a customer buys a rake, mulch, and a shovel, the system can infer they like gardening, and push their psychological profile along the direction of sellers with an interest in making an advertisement to that person. This can also include an output that suggest other products that are part of the goal the user is trying to achieve, are used by people with those experiences/at that place in their life or are often liked by people with that personality profile.

In one embodiment, as described above, Ad targeting that determines what ads are optimal for each customer based on deep data, price points, and value vs. cachet/name brand/most expensive.

Another capability of the system 100 is the data mining of the CogDataPool for developing customer reviews that are responsive in an automated fashion, in a timely manner to provide the customer with a feeling of connection and long term gains that will be positively perceived by the customer. The system can also mine manufacturer-provided product descriptions to extract the information needed to support the deep modeling processes described in this document. From a seller's perspective, the system 100 can determine when the seller (in store or on line) should charge certain users more or provide discounts for certain products.

The system 100 can include a product recommendation engine that generates product recommendations to customers based on what they bought before, and what they will likely buy in future. A purchasing prediction engine can provide from past purchasing performance, and indication of per- product stock levels that are likely to be most profitable. Another service that can be enabled by the system is a personal concierge that supports the customer or user during buying process in a highly personalized way. Another enabled feature is a deep-knowledge fraud detection that can identify potential fraud before it happens. For example, by use of the herein methods, it can question why is an 80-yr old woman is buying rifle shells or why she has changed her past payment trends, or why is she purchasing in a way that looks like she's trying to max out the card that has never been maxed out before. Finally, in this range of embodiments, the system 100 can automatically place products into categories in support of product placement decision making based on the customer factors, the date, and the customer or user profile, or external events and data.

### Mood Creation

This embodiment involves selecting an overall mood, made up of components such as (but not limited to) Excited, Happy, Surprised, Relaxed, Cultured, and Romantic. These can be selected via GUI presented sliders, via the GUI interface 109 in which some subset of these are chosen and then combined via a graphical or other interface.

In one embodiment, from the chosen mood components, the system uses INTELNET reasoning to compute individual scores for each potential recommendation component (restaurant, destination, etc.) to determine which would be best suited to creating that mood.

### Consequence-Based Reasoning and Prediction

This embodiment includes but is not limited to prediction of cultural, practical, and perceptual implications.

Practical implications are those that involve the real-world consequences of stimuli or states of the world. Some examples: after one sleeps, one is likely to be more rested. If one punches someone else, the recipient of the action will most likely not like the actor as much as they did before. If one gets a new job, one will likely be more happy. The latter example is more complex, as intermediate domain, emotional, and other types of reasoning are involved.

Examples of perceptual implications include the following: If a diplomat were to publically suggest that a foreign country's food was inedible, that country would be displeased and offended. The reasoning mechanisms described in this application cover the reasoning paths required to so determine.

Cultural implications can be understood as those effects (from a cultural perspective) of particular stimuli or states of the world. As an example: If a disaster-response agency uses culturally-inappropriate means of reaching those affected by a disaster, its score on the Sensitivity domain can decrease, and it can also be viewed as not Responsive.

Geopolitical/policy implications: As an example, if a newspaper were to mention an event in Beijing, the system could infer the consequences of that for trade talks in Bulgaria. In one embodiment, this is achieved by utilizing relevant knowledge models covering all of these events that, when combined via the techniques described in this application, provide a knowledge substrate enabling the system to discover the 'big picture' by inserting energy into the concept nodes relevant to the event in Beijing, running forward energy propagation, and noting that eventually energy reaches nodes relevant and/or connected to the Bulgarian talks.

### Action/Effects Simulation and Recommendation

This embodiment, using the ability to calculate the effects of actions via forward propagation through a knowledge substrate, undertakes simulation of the effects of actions and recommends actions that have particular effects. It is often difficult for a human to perform the cognitive analysis required to discover the deep effects of actions and/or to predict actions exerting precise effects on complex realities.

In one particular embodiment, by discovering concepts such that, when energy is introduced into them and propagated throughout the knowledge substrate, positive and negative energy, respectively, is introduced where desired in the graph (as determined by matched target scores, minimal clashes, and other measures), the system is able to discover intermediate concepts that should be promoted or avoided. In a related embodiment, by then running forward propagation from various potential options and observing their effects on said intermediate concepts, the system can discover actions that should be promoted or avoided. System and Method for Improved Disaster Response

Brief descriptions and outputs of selected disaster response- related embodiments will now be explained in view of the above discussion. As will be described in these examples, the system 102 provides or generates system control and messaging outputs through use of a Disaster Response knowledge model 152, that can contain, information stored in the CogBase 114 as atoms 220 that can include atomized information such as, by way of example, chemicals, health, disaster response practice, and available first responders, using the system and method capabilities described herein. For the disaster response task, the task reasoning is achieved via a disaster response task model 152. This can also include inputs obtained from news sources, from individuals such as through feeds from Twitter (Tweet) and social media posts and processing. Further, outputs can include recommended actions or messages including those to first responders as well as via similar Twitter, social media, SMS text and email messaging as well as to other interested or affected persons. Each of these can include the use of a natural language processing (NLP) system and method, coupled to the system 102 such as an output system 110 coupled to output interface 108, or as can be integrated within system 102 depending on implementation model (for instance is system and process 102 were implemented within a host system such as a FEMA or DHS or similar system such as IPAWS OPEN or the like.

In one embodiment, the system 102 can use an integrated NLP system 171 such as integrated within the COGPARSE module system 162, by way of example. However, unlike other NLP systems, the present system processes the received language or text using nuanced and semantic meaning within, not mere text or word matching and pre-identified definitions. From the input and received text, the meaning of the text is identified, not merely the words such that the system 102 determines a desirability of the overall received text and its outcome. For example, a received text message such as "my pet is sick" does not merely state a fact that the pet is sick, but rather a determined state of the sender that they are unhappy or worried about the health of their pet due to its sickness. The present system 102 goes beyond that available to other prior art systems and methods.

For example, leveraging information in a health and safety model 152, a received text from a social media feed in posting that says "I heard it explode" does not merely mean there was an explosion, but that the there is a situation that is of concern and that first responders may need to be notified as to an explosion occurring. By monitoring communications from one or more sources, semantics in the communications can be used for semantics trending across multiple communications and multiple communicator and multiple communication sources. These can utilize associated terms, that are not the same but semantically similar, such as for the "explode" could include explosion, detonation, discharge or hear for example. The system 102 provides knowledge-augmented expansion from a single text or word to expanded component semantics. Once the expanded component semantics are determined by the system 102, the system 102 develops patterns from other communications being received. In some embodiments, the system 102 uses a syntax-based method, such as for extracting location-bearing information and elements from received text, but further can provide for adding associated semantic elements (such as the heard or sound components of the received message) to provide context as a nearness to the event or explosion and a location identification, that was not provided in the actual received message itself as sound of an explosion only travels a certain distance. A syntax extractor module can extract concept/energy pairs from syntax-structured text or languages.

The NLP system and algorithms translates received text into simulation inputs to the system 102 to determine the actual meaning of the communication such that the models 152 and the system 102 can perform a simulation to determine a recommended output such as a message or control. As discussed in this disclosed system and method, the reasoning outputs or analysis of system 102 and/or system 120 can, in some embodiments, utilize a rating system. For instance, for a received message "My pet died", ratings or model outputs can include meanings that generate various emotions plus atomized knowledge 220 and concepts 224 from the CogBase 114 to determine and provide an actual meaning to the received text. These can include, by way of example, ratings as follows: happiness -900; main-face -100; anger 100; core needs -2320;
unhappiness 100; and trauma 100. Other Applications can include the following, by way of examples:
Persuasion: As a general statement, it can be helpful to persuade indirectly by including concepts which tend to evoke other concepts seen as important to one's audience. One embodiment includes the capability to automatically suggest the content of persuasive campaigns. Under a preferred embodiment, concepts derived from values, beliefs, religion, and other psychological domains are selectively invoked or avoided based on the effect that placing energy in them has on the overall energy balance Via this process, the system is able to devise communications that are persuasive from other parties' perspectives (assisting in avoiding ethnocentrism).

In one embodiment, starting from a reasoning substrate consisting of the persuasion target's worldviews and beliefs, this is accomplished by traversing backwards (backward propagation) from input concept nodes to find other concept nodes such that, when energy is added (or avoided from being added) to the latter concept nodes, the desired energy balance (as specified by the input) is achieved in the party to be persuaded.

In one embodiment, recommended concepts can be augmented with others from CogBASE; these CogBASE concepts are used to indirectly evoke the recommended concepts, facilitating indirect persuasion.

This embodiment allows campaigns to be built that are maximally persuasive for the recipient (and don't overly privilege the persuader's point of view).

Public Diplomacy: This embodiment draws on the persuasion embodiment, offering two sub-embodiments. In the 'how do we create a belief sub-embodiment, desired foreign party persuasion goals are fed into the system, expressed via concept/energy pairs. Cultural and related models for the persuasion target are loaded into the system. In one preferred embodiment, energy is then reverse propagated from these goals, traversing the just-loaded models. Eventually, energy will reach terminal nodes. Terminal nodes that receive negative energy should not be included in diplomatic appeals, because these will not ultimately cause the desired effect. Concepts that receive positive energy should be included in appeals for the opposite reason.

In the 'predict action outcomes' sub-embodiment, proposed public diplomacy actions (again encoded into concept/energy pairs) are input into the system. Energy is entered into the input concepts, propagated across the interconnected cultural, domain, and other relevant models, reaching output (terminal) nodes. The energy balance at the end reflects the perception that the input action will cause.

Teaming: In this embodiment, the system 100 can be used to aid in teaming by ensuring that all members of a team have knowledge of other team members and their activities as relevant factors, and status. The team leader can utilize this information to leverage the strengths of the team and to build stronger ties within the team or to best and most effectively assign resources that provide for the timely and efficient completion of the team's tasks or goals.

Psychological Operations: The foregoing embodiments create a capacity for psychological operations using persuasion embodiments. Reverse engineering of pre-existing campaigns is possible via goal inference mechanisms, action effect prediction, and other embodiments.

Conflict Resolution: Conflict resolution-related embodiments are detailed herein in more detail. These are implemented via the reasoning mechanisms detailed in this application.

Early Warning: One early-warning related embodiment introduces energy into the concepts discovered within incoming intelligence (with optional assistance from CogBASE in decomposing incoming lexical items into sub-concepts). The output of these flows can then be analyzed and patterns detected. In a preferred embodiment, as energy flows through the connected pathways in domain, area, and other related models, energy 'hotspots' (concepts with increased energy levels) arise. Warnings arise when hotspots involve customer priorities.

Intelligent Analyst Advisor: Guidance on Meeting Customer Needs: In this embodiment, once an intelligence customer recommendation is made, or an analyst selects a particular piece of content, the system can suggest to the analyst which aspects of that content (and which framings) will be of most interest to particular customers.

This is achieved by using a reasoning substrate with government- and agency-relevant information and then forward propagating energy from the concepts making up the incoming intelligence. To the extent that concepts in the models of a particular customer and/or models containing concepts of that customer's interest, that customer should be said to be interested in that intelligence. The framing is discovered by looking at the specific concepts that obtain energy in the customer-related models; these are the ones that generate the framing.

This embodiment can rank potential customers by ordering based on total energy flow and energy target fit, as well as provide guidance on which content can be more safely excised for brevity. In the latter case, those concepts that receive little or no energy can be safely excised.

Choosing Customers: In this embodiment, the system identifies events and trends and pairs them with likely interested information customers. This is achieved via the use of customer models referencing concepts customers are interested in. Target scores can be set on concepts of particular interest. If, when energy flows are run using concepts from intelligence, significant amounts of energy (either negative or positive) ends up in concepts with high customer target scores, then the input is likely of interest to that customer.

Data-Driven Hypothesis Tester: Test Ideas Against Data: In this embodiment, analysts can provide hypotheses which will be tested for plausibility against the data the system has seen. In a preferred embodiment, this is achieved by forward propagation from the hypothesis and comparison (optionally comparing energy values, clashes, and energy targets, and/or other qualities) of the resulting energy state with the energy state that has been achieved by forward propagation of the concepts from historical intelligence.

Alerts and Trends: Under this embodiment, the system can discover semantic key trends, 'hot spots', and so on. As a result, consequence- based reasoning mechanism can discover which potential trends are most damaging to national security and/or customer interests and flag these.

Under one preferred embodiment, this is achieved by 1) applying high target scores to important concept nodes and 2) using reverse propagation and graph searches to determine concept nodes which influence those important concept nodes.

To discover trends, in one embodiment the system is able to highlight concepts that have reoccurred broadly across input documents, helping to discover trends that may not be easily identifiable by human analysts. This is achieved by forward propagation from concepts appearing in intelligence documents (including optional augmentation via CogBASE as in the embodiments above). In a preferred embodiment, this forward propagation will create energy hot spots pointing to trends in the input data. This process converts the semantics of input concepts, via the reasoning substrate, into hot spots which can easily be discovered by looping through all concept nodes in the final reasoning output, looking for large positive or negative energy values. Special attention can be paid to concept nodes with large target score magnitudes.

Correlate data: In this embodiment, the energy+concept results of forward propagation from the concepts present within incoming intelligence generate 'profiles' of the meaning of individual pieces of intelligence. These profiles can be correlated via comparison of which concepts hold energy and how much.

Predict surprise events: This embodiment is able to determine the importance of incoming intelligence, and/or discover potential crises and/or patterns. In a preferred embodiment, this is achieved by combining other intelligence-related embodiments listed above in order to determine how important concepts are affected by the concepts contained in incoming intelligence. In a preferred embodiment, potential crises can be discovered via time-series analysis of the energy reaching important concepts. Especially noteworthy is the case when energy begins to reach new important concepts that it has not before reached.

Locally- sensitive international development and intervention design: This embodiment draws on the system's ability to predict how particular concepts/ideas will affect local realities on the ground. This is achieved by using knowledge models of those on-the-ground realities and employing forward propagation and emotion computation to discover policy effects. Recommendations can be made via backwards propagation from important on-the- ground concepts.

Natural Language Processing (NLP) Embodiments: NLP embodiments include gisting, social media processing, and computation of the effects of various words. As an example of the latter, for the input 'kick', CogBASE, together with psychological and domain models, provides sufficient information to compute that the action 'kick' applied to a person will cause pain, which will ultimately cause dislike and unhappiness.

For gisting, input lexical items are processed through data from CogBASE and relevant domain, psychological, and other models. Those concepts that repeatedly receive energy and/or receive the most energy provide the core components of the gist.

Cross-language linking: Under one embodiment, drawing on the insight that the commonsense world operates in very similar ways across borders (i.e. dogs bark in any country in the world, and water always relieves thirst) CogBASE information and knowledge models can be used to provide an automatic language- alignment function by observing the connections between cross-language lexical items. As an example, if GOU is observed in a Chinese- language document to be related to DOG, the cloud of CogBASE knowledge atoms around GOU can provide links to other related concepts, thus allowing the system to discover that TOU can be linked to HEAD.

Operations Other Than War (OOTW) and Peacekeeping: The persuasion and action effect prediction/recommendation embodiments support the use of this technology in OOTW and peacekeeping. When commanders don't know what to do, they can use these functionalities to test the effects of proposed actions and obtain recommendations.

Anti-terrorism: Knowledge models enable the development of effective anti-terrorist strategies; as an example, knowing the processes by which radicalization occurs enables us to intervene in those processes. Models and reasoning show us that if we place energy in a particular concept, a radicalization strategy can be prevented from functioning. The model can show us that we should seek to delete a particular link between two concepts, or create links between others, because doing so would prevent acts of terrorism. Knowledge models enable all of these strategies, and other strategies, to be planned out and simulated before execution.

Data mining: CogBASE contains sufficient data to support many semantics-based data mining tasks. In an embodiment where CogBASE data is combined with knowledge models and energy flow, deep-semantics data mining is enabled as described herein.

Destination/Travel Recommendation System: In another embodiment, the system 100 can be used to create new individualized application that are not merely based on a user's prior internet searches or "clicks" but based on their needs and desires, both expressed and subconscious. In one embodiment, of such a newly enabled application, a new nuanced-based "travel app" will be described that utilizes some of the embodiments of the system 100 as described herein.

The travel app can enable the user to create a desired or "perfect plan" by using the mobile app GUI 109 using their mobile device 107. In such a case, the user input system 106 can be a host to the travel app application or the one or more of the system 100 functions and modules can be implemented within an applications hosted environment of the travel app. By using nuanced data of the individual as well as the environment, and factors that can affect the travel plan, the system 100 can generate the perfect plan for the user.

To start, the user enters or requests the creation of a travel plan through of a series of GUI screens that request travel data such as date, time, objective, (golf, architecture, historic sites, civil war sites, pleasure, churches, etc.). The travel app can also prompt the user to invite or plan the travel plan for that user or a group of users or to invite one or more friends. In this manner, the "perfect plan" can be developed and simulations run that not only meets the nuances of the requesting user, but those of the group or invited friends. Each user can have a predetermined user profile, which includes not only their factual data, but nuanced data such as: "I like to talk to friends," "I like to talk to interesting strangers," "I like flexibility and free time," or "I like to stick to a plan." The GUI 109 can also asked how the user would like to feel during and after the completion of the trip of the plan. The GUI 109 of the travel app can prompt the user for these semantic nuanced data inputs into their personal profile so that the system can anticipate desires when performing the simulations for preparing the generation of the perfect plan, without the user having to enter detailed factual data that the user can or may not want to enter. The user can also enter interests and costs and budget information.

From these inputs, and using the modeling and Deep MindMaps as described herein, the system 100 develops multiple possible plans through simulation of the user input data and other associated data stored in the CogDataPool 221. One or more of the simulated travel plans are presented to the user and the use can have the ability to adjust the inputs such as the date and time or budget, and can also adjust one or more feature of the presented travel plan. The GUI 109 can include all of the necessary data presented to the user including views of the maps, itinerary, places to see, places to stay, travel arrangements, etc. Each of these can include a user input for adjustment by the user. Once finalized and the user selects the travel plan, as adjusted or otherwise originally presented, the user can once again invite friends or share the travel plan. If a friend or a group agree to the plan and also make the trip, a similar adjustment process can be provided to the friend user for fine tuning or customization for that user as well. Further, a feed can be provided to the user's calendar with the travel plan including the itinerary and particular plans can be flagged or bookmarked. Further, based on the travel plan, the user can search to identify possible additional points of interest, including identifying friends that may be located in the vicinity of their planned route or trip. If such a friend or location is identified, that friend can be contacted and notified of the users planned proximity during the trip, or reservations can be made or tickets purchased for an event.

The travel app can also keep track of travel details of the user and provide ratings received from the user or provide the user with credits or adventure points that can be used for advertising or feedback purposes, as well as new data to be stored by the system 100 for future travel plans by that user, such as adjustments to their user travel profile, or generally to any travel user.

Based on the description of the system 100 and this particular travel app embodiment, one of ordinary skill in the art will understand that additional feature and functionalities can be provided by the system using the nuanced data within the CogDataPool 221.

Task triage and reasoning: Energy flows provide a mechanism by which the extended consequences of paying attention to or neglecting particular concepts can be simulated. Using domain models containing information about chemicals, for example, or about what chemicals are expected in what contexts, allows the system to compute the consequences of incoming intelligence as described herein. System and Method Approach and Methods

### Advanced Predictive Analytics:

In some embodiments, the system 100 simulates human lives, thinking, psychology.

Analysis capabilities on the fly Ability to access and analyze all sorts of data that could affect shopping, including not only customer. preferences, but weather, time of day, that day's stock performances- anything at all.

Based on what is happening on the ground (i.e. hurricane), automatically adjust product ordering/delivery scheduling.

Collect/infer customers' favorite colors, locations, hobbies, etc. for below.

'Automated salesperson' for Website, in-store kiosks.

Ask user what do you want to achieve today? What are you looking for? Are you here for a special occasion (birthday, etc.)? How much are you looking to spend? make suggestions based on deep understanding and trending purchase data for certain special occasions i.e. find ideal gift for 18-yr old boy with interests A,B,C AND/OR Look at past purchases and make suggestions, also: you bought XYZ for Grandpa last year, so we recommend this (something else) this time, if he really liked it general product recommending capability.

Using in-store/online purchasing patterns to infer various goals, attributes of purchasers.

Look at what product does/is for actually infer deeper meaning/purpose/psychological attributes.

As an example, if user buys rake, mulch, and shovel, infer they like gardening, and push their psychological profile along the direction of people with that interest. If they start to buy items associated with a new stage of life, note this and adjust accordingly.

Suggest other products that are part of the goal the user is trying to achieve, are used by people with those experiences/at that place in their life or are often liked by people with that personality profile.

If never bought anything dog-related before, infer they now have one.

Ad targeting determine what ads are optimal for each customer based on deep data, price points, and value vs. cachet/name brand/most expensive.

Data mining from customer reviews be responsive in an automated fashion even at short-term expense (will provide feeling of connection and long term gains customer will perceive very positively).

We can mine manufacturer-provided product descriptions to extract the information needed to support the deep modeling processes described in this document.

Determine when you should charge certain users more/provide discounts for certain products.

Product Recommendation Engine Given what customers bought before, tell company what you think they will buy in future.

Purchasing Prediction Engine Given past purchasing performance, indicate per-product stock levels that are likely to be most profitable.

Personal Al concierge support user during buying process in highly personalized way.

### Message Tailoring For Ads tailor marketing messages/concepts to specific users.

Deep-knowledge fraud detection: why is an 80-yr old woman buying rifle shells? Why has she changed her past payment trends? Why is she purchasing in a way that looks like she's trying to max out the card before she gets caught?

Automatically place products into categories in support of product placement decision making and the other capabilities described here. Example: things bought on Father's Day, ties/tools, potential birthday gifts, things that fathers/men like, things that women/children like Automatically determine employee satisfaction unhappiness levels.

### Wargaming Exemplary Detailed Embodiment:

As another exemplary embodiment, in wargaming, the Integral Mind capabilities offer an order-of-magnitude improvement in both finding good moves and adjudicating results for non-kinetic actions such as economic sanctions, economic aid, information operations, and local-level political interventions.

In some embodiments, the system 100 can enable a new method of wargaming. In one embodiment, a player can be modeled in terms of the following holistically interacting subparts:
a) Psychological and emotional substrate molds and forms all of the components below, exerting pressures on all of them. Involves values, fears, culture, worldviews, etc.
b)Player or Team Goal substrate what goals am I trying to achieve and what things (broadly speaking) facilitate or act against them?
c) Player or Team Option generator what process do I use to generate new actions I could take?
d) Player or Team Option evaluator if I take action X, what would the costs and benefits be?
e) Player or Team Tradeoff evaluator choose between COAs/goals/outcomes X, Y, etc.?

In one embodiment, the system 100 provides a solution that can fully simulate the most complex games by combining components of the system 100 to provide decision making, recommendations and adjudication. If there is not a pre-determined list of controlled actions the system 100 can take, then the system can provide output messaging or game control to what needs to be done, and it can construct an initial Course of Action (COA), (cf. Military Decision Making Process (MDMP)). To crystallize that prototype COA into a specific recognizable option that can be described in a single pithy phrase, however, the system can require additional input from the users or an application module or interface thereto to look at what the system wants to do and concoct that specific phrase.

In some embodiments, the gaming application can generate fully actionable CO As.

In some embodiments, the gaming application can construct CO As that are still actionable, but not described in a single phrase.

The system 100 provides fully automated adjudication in that it can compute consequences, risks, and perceptions deriving from any particular course of action. It provides this with a high degree of fidelity that a human would have a nearly impossible time providing, given the human tendencies towards unconscious bias towards our own cultures and the 'tunnel vision' generated by the details of the sociotechnical systems in which we are all embedded.

In support of reporting to or decision making by upper levels of the chain of command, the system 100 can provide specialized justifications and/or extracts for explaining desired aspects of the current situation.

Because the system 100 knows what affects through the simulations, the system 100 can compute deep human and practical consequences and provide automatic ratings of decision quality. The system 100 can determine under what conditions specific outcomes and recommendations are likely to be valid and can work with inconsistent data. The system 100 balances conflicting impulses and influences off against one another.

Ultimately, the system 100 can perform this process because the system 100 understands why things are as they are, not just correlations. The nuance inherent in the system 100 knowledge representation enables us to gracefully overcome bad and/or conflicting and/or inconsistent data. The system 100 does this in many ways, from exploiting redundancy to offsetting bad data with other data.

To structure a game to take full advantage of the system 100 functionalities, the game paradigm could be shifted from game development that is highly specific to individual wargames to deep-understanding simulation-based games that use the same knowledge over and over, greatly speeding game development.

The system 100 is knowledge -based, and view knowledge as falling into two categories: foundational (static) and dynamic. Foundational information changes very rarely for example, the notion that freedom is a key part of American culture or the fact that rain consists of water. Dynamic information changes in real-time and consists of the current goals the wargame is trying to achieve (or what it wants to avoid) as well as the current state of the players and of the situation. In one embodiment, to build a wargame using this technology, the game can be built using some foundational information and a wargame network, both structured in the INTELNET graph formalism. The game designers goal and efforts are simplified as the primary goal is to simply to take information and dump it into a 'bucket' and then let the system 100 figure out at runtime which of it is relevant and how. The system 100 INTELNET graphs are human readable and editable; the same data the human works with goes directly into the computer.

Moreover, this foundational knowledge is only built once and can be reused over and over again across different games. This drastically cuts the cost and time required to build new games. For example, for a wargames, a library of models by country can be built by experts and reused everywhere for any number of games and variations thereof.

In one embodiment, the typical wargame could require the following foundational knowledge as part of the reasoning substrate:

CULTURE/WORLD VIEW: Describes the general culture and worldview of each of the players. This can be broken down at whatever level of analysis is appropriate for the situation at hand; the technology is level-agnostic. Core values are included here. This leverages the PSYCHCORE general psychological network, which means you don't need to encode general human emotions.

NATIONAL INTERESTS : Information on the national interests of each player.

OPTIONS: Helps the computer understand how various options the game might include affect national interests and culture.

In one preferred embodiment, in terms of dynamic knowledge, the game designer can start with a small wargame INTELNET network which binds the specific players together and creates a context for the simulation. This could, optionally, update the OPTIONS foundational network to reflect some unique options that might only exist in this particular wargame, or remove options you don't want to be exercised.

In order to keep track of the current state of the overall holistic simulation, the system 100 creates a dynamic overlay on top of the other foundational and dynamic knowledge. This overlay automatically adjusts due to intelligence that the computer can process (natural language) as well as by the game master if he wants to add an 'inject' (new event or occurrence that the wargame and/or its players are then expected to respond to) or change some aspect of the situation. This overlay drives the recommendation and adjudication engines. The adjudication engine provides detailed output on the detailed effects, perceptions, costs/benefits, and desirability of any particular course of action. The system 100 recommendation actions suggests how a particular need might be fulfilled or belief created.

During the game, the system 100 can offer 'watchouts' (entities that should receive particular attention) and/or identify danger zones. The user or operator can pose a wide range of questions and receive a number of different types of recommendations from the simulation.

Some of the questions the system can answer include: a) How do we achieve a particular tactical or persuasion goal? b) If you do/don't do A then B will happen (and why you should/must care); c) If actions A are taken, B will be the outcomes and C will be impacted (and how); d) The most practical way to achieve goals A is B (with mission requirements C); e) Watch out for A (and why); f) In messaging, need to emphasize A (and why); g) Disruption how do we best disrupt a particular alliance and/or cause a party of interest to leave it?; h) Automated Adjudication rather than having an American guess about what an Iranian might do, for example, it would be far preferable to use the Iranian Mind Map to run the simulation instead, removing bias and enhancing speed; i) CO A Development Propose COA elements, explain why particular COAs should be undertaken, why certain aspects must be executed in particular ways, and why the particular method is a good one. This can also include information requests (together with justification for why they should be chosen). The system 100 can also suggest potential elements of information that would be of most value in decision-making as well as elements that should be kept from others. The system 100 can work in reverse to determine what information others should be prevented from discovering. Given that each information request consumes scarce resources, the system performs request triage.

The system 100 can help determine the relative consequences of the various drivers of each information request, assisting analysts in triaging these.

In some embodiments, the system provides real-time negotiation support; messaging campaign development support, and/or decision point development support. In one embodiment, users can run the standard game cycle (inject, response, etc.) with all desired aspects simulated by the machine to the extent desired. In one embodiment, if a game includes significant human input, the system 100 can perform adjudication against the options the human generates. The system 100 can also help the human come up with innovative game situation and design and task ideas.

### System 100 Implementation Exemplary Embodiments

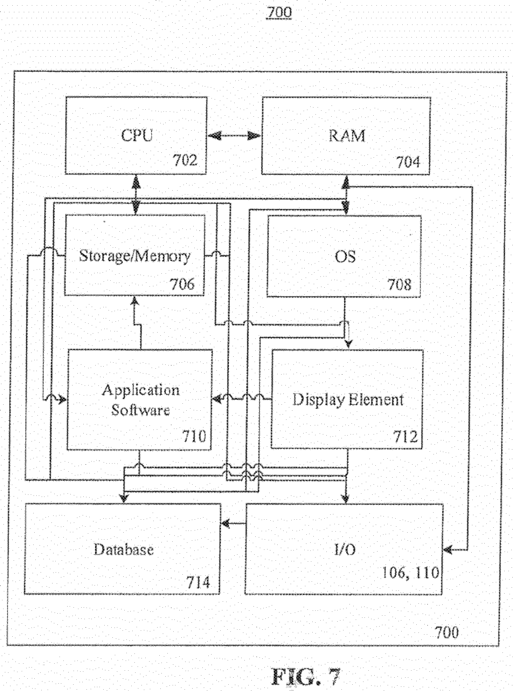

According to an embodiment of the present disclosed system and method, the system and method can be configured to share and or receive data to and can be used in conjunction or through the use of one or more computing devices. As shown in Fig 7, one of ordinary skill in the art would appreciate that the system 100, or one or more components or subsystems thereof can be implemented as a special purpose computing device 700 appropriate for use with various exemplary embodiments of the present disclosed system and method application can generally be comprised of one or more of a central processing Unit (CPU) 702, Random Access Memory (RAM) 704, a storage medium (e.g., hard disk drive, solid state drive, flash memory, cloud storage) 706, an operating system (OS) 708, one or more application software 710, one or more display elements 712, one or more input/output devices/means 106, 110 and one or more databases714. Examples of computing devices usable with embodiments of the present disclosed system and method include, but are not limited to, personal computers, smartphones, laptops, mobile computing devices, tablet PCs and servers. Certain computing devices configured for use with the system do not need all the components described in FIG 7. For instance, a server can not necessarily include a display element. The term computing device can also describe two or more computing devices communicatively linked in a manner as to distribute and share one or more resources, such as clustered computing devices and server banks/farms. One of ordinary skill in the art would understand that any number of computing devices could be used, and embodiments of the present disclosed system and method are contemplated for use with any computing device.

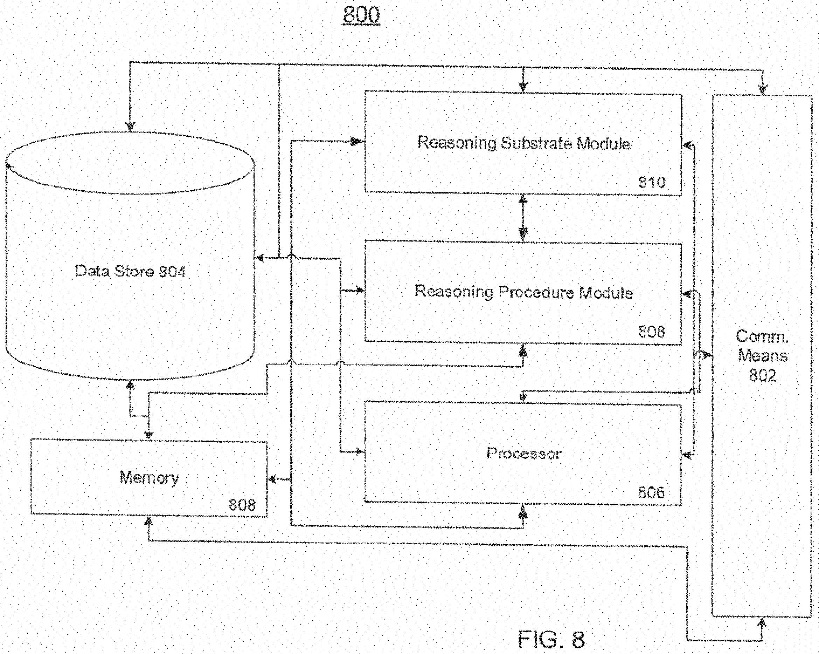

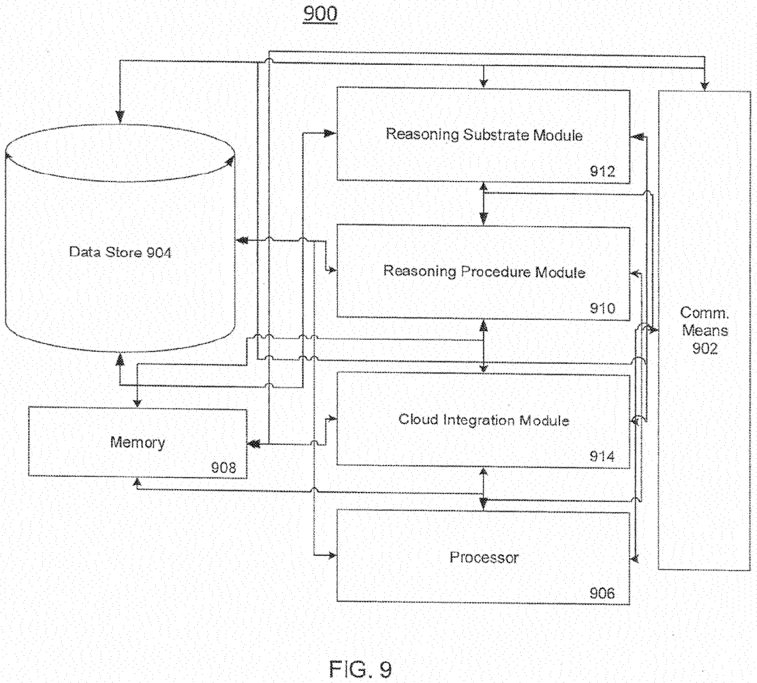

Turning to FIG. 8, according to an embodiment 800 of the present disclosed system and method and system 100, a system 800 for determining and analyzing sport related activities in conjunction with low latency transmission and processing is comprised of one or more communications means 802, one or more data stores 804, a processor 806, memory 808, a reasoning procedure module 808 and reasoning substrate module 810. FIG. 9 shows an alternative embodiment 900 of the present system 100, comprised of one or more communications means 902, one or more data stores 904, a processor 906, memory 908, a reasoning procedure module 910, reasoning substrate module 912 and a cloud integration module 914. The various modules described herein provide functionality to the system, but the features described and functionality provided can be distributed in any number of modules, depending on various implementation strategies. One of ordinary skill in the art would appreciate that the system can be operable with any number of modules, depending on implementation, and embodiments of the present disclosed system and method are contemplated for use with any such division or combination of modules as required by any particular implementation. In alternate embodiments, the system can have additional or fewer components. One of ordinary skill in the art would appreciate that the system can be operable with a number of optional components, and embodiments of the present disclosed system and method are contemplated for use with any such optional component.

According to an embodiment of the present disclosed system and method, the communications means of the system can be, for instance, any means for communicating data, voice or video communications over one or more networks or to one or more peripheral devices attached to the system. Appropriate communications means can include, but are not limited to, wireless connections, wired connections, cellular connections, data port connections, Bluetooth connections, or any combination thereof. One of ordinary skill in the art would appreciate that there are numerous communications means that can be utilized with embodiments of the present disclosed system and method, and embodiments of the present disclosed system and method are contemplated for use with any communications means.

Throughout this disclosure and elsewhere, block diagrams and flowchart illustrations depict methods, apparatuses (i.e., systems), and computer program products. Each element of the block diagrams and flowchart illustrations, as well as each respective combination of elements in the block diagrams and flowchart illustrations, illustrates a function of the methods, apparatuses, and computer program products. Any and all such functions ("depicted functions") can be implemented by computer program instructions; by special-purpose, hardware-based computer systems; by combinations of special purpose hardware and computer instructions; by combinations of general purpose hardware and computer instructions; and so on any and all of which may be generally referred to herein as a "circuit," "module," or "system."

While the foregoing drawings and description set forth functional aspects of the disclosed systems, no particular arrangement of software for implementing these functional aspects should be inferred from these descriptions unless explicitly stated or otherwise clear from the context.

Each element in flowchart illustrations may depict a step, or group of steps, of a computer-implemented method. Further, each step can contain one or more sub-steps. For the purpose of illustration, these steps (as well as any and all other steps identified and described above) are presented in order. It will be understood that an embodiment can contain an alternate order of the steps adapted to a particular application of a technique disclosed herein. All such variations and modifications are intended to fall within the scope of this disclosure. The depiction and description of steps in any particular order is not intended to exclude embodiments having the steps in a different order, unless required by a particular application, explicitly stated, or otherwise clear from the context.

In an exemplary embodiment according to the present disclosed system and method, data can be provided to the system, stored by the system and provided by the system to users of the system across local area networks (LANs) (e.g., office networks, home networks) or wide area networks (WANs) (e.g., the Internet). In accordance with the previous embodiment, the system can be comprised of numerous servers communicatively connected across one or more LANs and/or WANs. One of ordinary skill in the art would appreciate that there are numerous manners in which the system could be configured and embodiments of the present disclosed system and method are contemplated for use with any configuration.

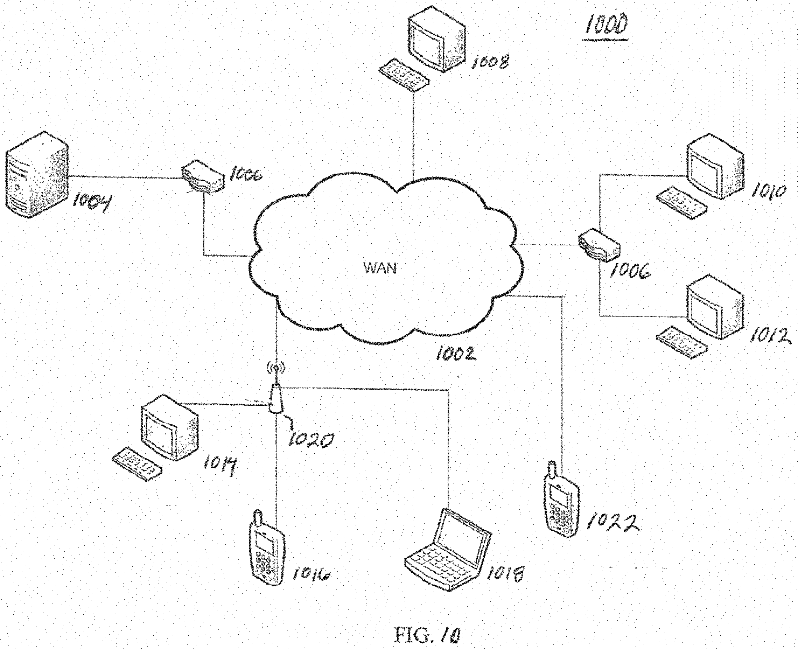

Referring to FIG. 10, a schematic overview of a cloud based system 1000 in accordance with an embodiment of the present disclosed system and method is shown. As shown the exchange of information through the Networkl002 can occur through one or more high speed connections. In some cases, high speed connections can be over-the-air (OTA), passed through networked systems, directly connected to one or more Networks 1004 or directed through one or more routers 1006. Routers 1006 are completely optional and other embodiments in accordance with the present disclosed system and method can or can not utilize one or more routers 1002. One of ordinary skill in the art would appreciate that there are numerous ways server 1004 can connect to Network 1002 for the exchange of information, and embodiments of the present disclosed system and method are contemplated for use with any method for connecting to networks for the purpose of exchanging information. Further, while this application refers to high speed connections, embodiments of the present disclosed system and method can be utilized with connections of any speed.

Components of the system 100 can connect to server 1004 via Network 1002 or other network in numerous ways. For instance, a component can connect to the system i) through a computing device 1008 directly connected to the Network 1002, ii) through a computing device 1010, 1012 connected to the WAN 1002 through a routing device 1006, iii) through a computing device 1014, 1016, 1018 connected to a wireless access point 1020 or iv) through a computing device 1022 via a wireless connection (e.g., CDMA, GMS, 3G, 4G) to the Network 701. One of ordinary skill in the art would appreciate that there are numerous ways that a component can connect to server 1004 via network 1002, and embodiments of the present disclosed system and method are contemplated for use with any method for connecting to server 1004 via network 1002. Furthermore, server 1004 could be comprised of a personal computing device, such as a smartphone, acting as a host for other computing devices to connect to.

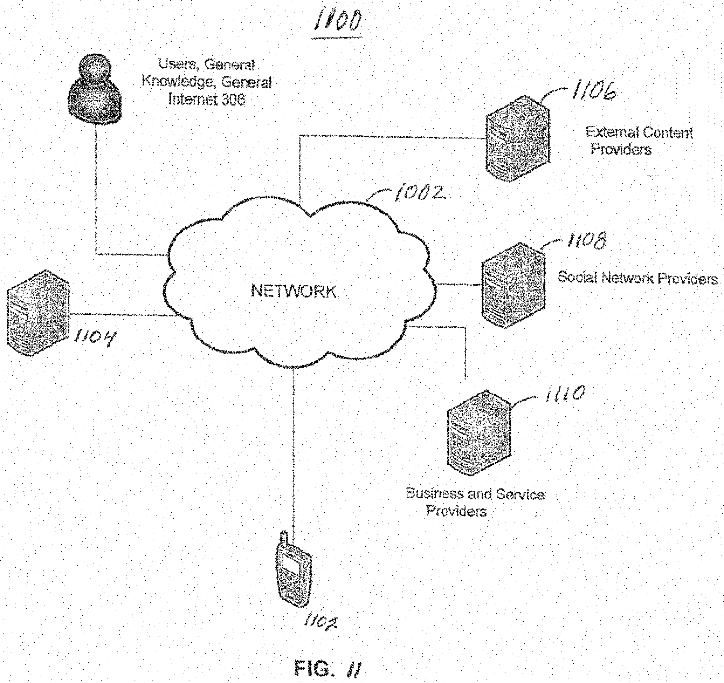

Turning now to FIG. 11, a continued schematic overview of a cloud based system 1100 in accordance with an embodiment of the present disclosed system and methods is shown. In FIG. 11 , the cloud based system 1100 is shown as it can interact with users and other third party networks or APIs. For instance, a user of a mobile device 1102 can be able to connect to application server 1104. Application server 1104 can enhance or otherwise provide additional services to the user by requesting and receiving information from one or more of an external content provider API/website or other third party system 1106, a social network 1108, one or more business and service providers 1110 or any combination thereof. Additionally, application server 1104 can enhance or otherwise provide additional services to an external content provider API/website or other third party system 1106, a social network 1108, or one or more business and service providers 1110 by providing information to those entities that is stored on a database that is connected to the application server 1104. One of ordinary skill in the art would appreciate how accessing one or more third-party systems could augment the ability of the system described herein, and embodiments of the present disclosed system and method are contemplated for use with any third-party system.

Traditionally, a computer program consists of a finite sequence of computational instructions or program instructions. It will be appreciated that a programmable apparatus (i.e., computing device) can receive such a computer program and, by processing the computational instructions thereof, produce a further technical effect.

A programmable apparatus includes one or more microprocessors, microcontrollers, embedded microcontrollers, programmable digital signal processors, programmable devices, programmable gate arrays, programmable array logic, memory devices, application specific integrated circuits, or the like, which can be suitably employed or configured to process computer program instructions, execute computer logic, store computer data, and so on. Throughout this disclosure and elsewhere a computer can include any and all suitable combinations of at least one general purpose computer, special-purpose computer, programmable data processing apparatus, processor, processor architecture, and so on.

It will be understood that a computer can include a computer-readable storage medium and that this medium can be internal or external, removable and replaceable, or fixed. It will also be understood that a computer can include a Basic Input/Output System (BIOS), firmware, an operating system, a database, or the like that can include, interface with, or support the software and hardware described herein.

Embodiments of the system as described herein are not limited to applications involving conventional computer programs or programmable apparatuses that run them. It is contemplated, for example, that embodiments of the disclosed system and method as claimed herein could include an optical computer, quantum computer, analog computer, or the like.

Regardless of the type of computer program or computer involved, a computer program can be loaded onto a computer to produce a particular machine that can perform any and all of the depicted functions. This particular machine provides a means for carrying out any and all of the depicted functions.

Any combination of one or more computer readable medium(s) can be utilized. The computer readable medium can be a computer readable signal medium or a computer readable storage medium. A computer readable storage medium can be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium can be any tangible medium that can contain, or store a program for use by or in connection with an instruction execution system, apparatus, or device.

Computer program instructions can be stored in a computer- readable memory capable of directing a computer or other programmable data processing apparatus to function in a particular manner. The instructions stored in the computer-readable memory constitute an article of manufacture including computer-readable instructions for implementing any and all of the depicted functions.

A computer readable signal medium can include a propagated data signal with computer readable program code embodied therein, for example, in baseband or as part of a carrier wave. Such a propagated signal can take any of a variety of forms, including, but not limited to, electro-magnetic, optical, or any suitable combination thereof. A computer readable signal medium can be any computer readable medium that is not a computer readable storage medium and that can communicate, propagate, or transport a program for use by or in connection with an instruction execution system, apparatus, or device.

Program code embodied on a computer readable medium can be transmitted using any appropriate medium, including but not limited to wireless, wireline, optical fiber cable, RF, etc., or any suitable combination of the foregoing.

The elements depicted in flowchart illustrations and block diagrams throughout the figures imply logical boundaries between the elements. However, according to software or hardware engineering practices, the depicted elements and the functions thereof can be implemented as parts of a monolithic software structure, as standalone software modules, or as modules that employ external routines, code, services, and so forth, or any combination of these. All such implementations are within the scope of the present disclosed system and method.

In view of the foregoing, it will now be appreciated that elements of the block diagrams and flowchart illustrations support combinations of means for performing the specified functions, combinations of steps for performing the specified functions, program instruction means for performing the specified functions, and so on.

It will be appreciated that computer program instructions can include computer executable code. A variety of languages for expressing computer program instructions are possible, including without limitation C, C++, Java, JavaScript, Python, assembly language, Lisp, and so on. Such languages can include assembly languages, hardware description languages, database programming languages, functional programming languages, imperative programming languages, and so on. In some embodiments, computer program instructions can be stored, compiled, or interpreted to run on a computer, a programmable data processing apparatus, a heterogeneous combination of processors or processor architectures, and so on.

In some embodiments, a computer enables execution of computer program instructions including multiple programs or threads. The multiple programs or threads can be processed more or less simultaneously to enhance utilization of the processor and to facilitate substantially simultaneous functions. By way of implementation, any and all methods, program codes, program instructions, and the like described herein can be implemented in one or more thread. The thread can spawn other threads, which can themselves have assigned priorities associated with them. In some embodiments, a computer can process these threads based on priority or any other order based on instructions provided in the program code.

Unless explicitly stated or otherwise clear from the context, the verbs "execute" and "process" are used interchangeably to indicate execute, process, interpret, compile, assemble, link, load, any and all combinations of the foregoing, or the like. Therefore, embodiments that execute or process computer program instructions, computer-executable code, or the like can suitably act upon the instructions or code in any and all of the ways just described.

The functions and operations presented herein are not inherently related to any particular computer or other apparatus. Various general- purpose systems can also be used with programs in accordance with the teachings herein, or it can prove convenient to construct more specialized apparatus to perform the required method steps. The required structure for a variety of these systems will be apparent to those of skill in the art, along with equivalent variations. In addition, embodiments of the disclosed system and method are not described with reference to any particular programming language. It is appreciated that a variety of programming languages can be used to implement the present teachings as described herein, and any references to specific languages are provided for disclosure of enablement and best mode of embodiments of the disclosed system and method. Embodiments of the disclosed system and method are well suited to a wide variety of computer network systems over numerous topologies. Within this field, the configuration and management of large networks include storage devices and computers that are communicatively coupled to dissimilar computers and storage devices over a network, such as the Internet.

The functions, systems and methods herein described could be utilized and presented in a multitude of languages. Individual systems can be presented in one or more languages and the language can be changed with ease at any point in the process or methods described above. One of ordinary skill in the art would appreciate that there are numerous languages the system could be provided in, and embodiments of the present disclosure are contemplated for use with any language.

While multiple embodiments are disclosed, still other embodiments of the present disclosed system and method will become apparent to those skilled in the art from this detailed description. The disclosed system 100 and method is capable of myriad modifications in various obvious aspects, all without departing from the spirit and scope of the present disclosed system and method. Accordingly, the drawings and descriptions are to be regarded as illustrative in nature and not restrictive.

When describing elements or features and/or embodiments thereof, the articles "a", "an", "the", and "said" are intended to mean that there are one or more of the elements or features. The terms "comprising", "including", and "having" are intended to be inclusive and mean that there may be additional elements or features beyond those specifically described.

Those skilled in the art will recognize that various changes can be made to the exemplary embodiments and implementations described above without departing from the scope of the disclosure. Accordingly, all matter contained in the above description or shown in the accompanying drawings should be interpreted as illustrative and not in a limiting sense.

It is further to be understood that the processes or steps described herein are not to be construed as necessarily requiring their performance in the particular order discussed or illustrated. It is also to be understood that additional or alternative processes or steps may be employed.
Further aspects of the disclosure are provided in the numbered clauses below:
1. A system having improved performed for computing input knowledge data within a computer environment for generating a controlled action output by enabling nuanced cognitive data storage and decision processing based thereon within the computing environment having a processor, a non-transitory memory pool communicatively coupled to the processor and having computer executable instructions, the system comprising:
   an input interface communicatively coupled to an input system for receiving input knowledge data, a task, and user input;
   an output interface communicatively coupled to an output system for generating the controlled action output;
   a core processing system having a plurality of intercoupled components and a data pool for storing received input knowledge data and derived atomic knowledge data and concepts in one or more of the intercoupled components and being accessible to each of the intercoupled components, the intercoupled components including:
      a core intuitive processing system having a set of computer programs including one or more reasoning algorithms, and reasoning design guides, and a simulation module for performing simulations among and between the system components related to the received task;
      a knowledge representation formalism module configured for nuanced atomic representation of any type of knowledge data and utilized energy flows between knowledge data;
      a deep mindmaps module configured to create and or store deep mindmaps that include one or more of various collections of knowledge data or atomic knowledge data;
      a modeling component configured to providing one or more task models responsive to the received task; a language meaning simulator configured to provide semantic or language interpretations related to the received knowledge data and can include one or more of a natural language processer module for determining an interpretation of the input knowledge data and a sentiment analyzer module for determining a sentiment related to the input knowledge data;
      a meaning extract module configured to extract at least one of meanings from a language of the received knowledge data not only language and semantics from the received knowledge data;
      a tradeoff/risk analyzer module configured to analyze one or more tradeoffs and risks as a part of the performed simulation of the core intuitive processing system;
      an optimization module having optimization algorithms configured to optimize one or more inter-module operations within the system;
      a cross-domain simulator configured with one or more predictor algorithms;
      wherein the system receives the task, and generates an output command action.
2. The system of clause 1, further comprising a task goal simulator configured for simulating a plurality of outcomes for the received task responsive to the derived atomic knowledge data and concepts, from two or more of the following: the one or more reasoning algorithms, at least one reasoning design guides, a knowledge representation formalism of the nuanced atomic knowledge data, one or more stored deep mindmaps, provide semantic or language interpretations of the received knowledge data, one or more natural language interpretations, one or more determined sentiments, one or more extracted meanings from a language of the received knowledge data not only language and semantics from the received knowledge data, and the one or more tradeoffs and risks.
3. The system of clause 1, further comprising an input system coupled to the input interface with the input system configured to host a graphical user interface (GUI) for interfacing with a user or a user device.
4. The system of clause 1, further comprising at least one of the input system and the output system being selected from the group of third party systems including a third party system selected from the group consisting of a advertising system, a language processing system, a webhosting system, a network communication system, a social network system, a command and control system, a messaging system, an alerting system, a decision making system, a medical diagnosis system, a device or system controller, an environmental control system, and a game hosting system.
5. The system of clause 1 wherein the data pool storing knowledge data and atomic knowledge data includes a communicatively coupled cognitive knowledge database storing at least a portion of the atomic knowledge data and one or more concepts.
6. The system of clause 1, further comprising a translator system for translating data received in, or communicated out of the data pool with other system components.
7. The system of clause 1 wherein the data pool is configured for storing in numerous different formats atomized knowledge data, received knowledge data, concepts the models and the deep mindmaps.
8. The system of clause 1 wherein the core system further includes at least one of a natural language processer module and a sentiment analyzer module.
9. The system of clause 1 wherein the optimization module includes algorithms for optimization resolution including received task-based negotiations and received task-based counteroffer creation.
10. The system of clause 1 wherein the core module and one or more of the core module components is configured to perform the steps of:
   a) analyzing the input knowledge data to identify semantics within input knowledge data;
      discovering through analyzation recurrent useful semantic patterns in the input knowledge data;
      discovering all relevant aspects related to, associated with, or inherent in the input knowledge data;
      identifying the types of information contained within the input knowledge data;
      analyzing the input knowledge data to identify traces of underlying processes or relations of the input knowledge data to other knowledge data and information;
      identifying characters and image information within the input knowledge data;
      identifying arrangements of characters and images as they relate to each other within the input knowledge data; extracting meaning from the input knowledge data or the language meaning simulator;
      extracting sentiments from the input knowledge data; and
      identifying syntactic structure and patterns within the input knowledge data b) following the above two or more input knowledge data analysis processes, the system receiving the outputs of the two or more input knowledge data analysis steps, and in response performing the steps of:
         determining a set of concepts that explain a plurality of nuanced aspects of the input knowledge data;
         storing the determined concepts in the memory pool; combining two or more concepts with the set of determine concepts pairwise;
         creating atoms of knowledge data (atomic knowledge data) from the combined two or more concepts;
         and storing the created atomic knowledge data in the memory pool.
11. The system of clause 1 wherein the core processing system and one or more of the modules thereof is configured for:
   storing the received input knowledge data in the memory pool in a free- form abstract format such that each first stored input data knowledge is initially disassociated and non-related from each second stored input data knowledge; connecting a first set of two or more of the stored input knowledge data including at least a first portion of the nuanced knowledge input knowledge data with a first set of links to form a first knowledge concept;
   receiving a first initiating energy at one of the first stored input knowledge data, and responsive to the received first initiating energy, spreading an amount of first link energy to each connected first link through each of the first input knowledge data within the first knowledge concept wherein for each first input data knowledge an amount of input link energy to the first input data knowledge is replicated to each output link thereof, wherein the associated link energy for the first links binds the first input knowledge data within the first knowledge concept; connecting a second set of two or more of the stored input knowledge data including at least a second portion of the nuanced knowledge input knowledge data with a second set of links to form a second knowledge concept, wherein either none or one or more of the input knowledge data within the second knowledge concept are input knowledge data within the first knowledge concept;
   receiving a first initiating energy at one of the second stored input knowledge data, and responsive to the received second initiating energy, spreading an amount of second link energy to each connected link through each of the input knowledge data within the second knowledge concept wherein for each second input data knowledge an amount of input link energy to the second input data knowledge is replicated to each output link thereof, wherein the associated second link energy for the second links binds the second input knowledge data within the second knowledge concept;
   associating the first knowledge concept with the second knowledge concept into a combined knowledge concept, and responsive to the associating, connecting one or more of the first input knowledge data to one or more of the second input knowledge data using third links and spreading an amount of third energy to the third links, and changing at least one or more of the first link energy or the second link energy as a result of the associating;
   receiving a third initiating energy into the combined knowledge concept, wherein responsive to the received third initiating energy identifying at least one additional stored input data knowledge not within the first input knowledge data or the second input knowledge data, and adding the additional stored input data knowledge and one or more fourth links to the combined knowledge concept and spreading fourth energy to the fourth links and changing one or more of the first link energies or the second link energies;
   forming a reasoning substrate from the combined knowledge concept; receiving a decision input energy at an input edge input data knowledge of the combined knowledge concept of the reasoning substrate;
   flowing the decision input energy through the links connecting the input knowledge data of combined knowledge concept of the reasoning substrate responsive to receiving the decision input energy;
   receiving at an output edge input data knowledge a summation of the decision input energy flowing through the combined knowledge concept from the input edge input data knowledge as an instant decision energy; and
   comparing the receive instant decision energy at the output edge input data knowledge of the reasoning substrate with a predefined decision energy value; wherein the output interface is communicatively coupled to the second system generating the output command action at the output interface responsive to the comparing.
12. The system of clause 11 wherein the process of flowing the decision input energy through the links and the input knowledge data of the combined knowledge concept is summed and includes no decay due to the process flow.
13. The system of clause 11 wherein the process of flowing the decision input energy through the combined knowledge concept is not completed until all links and all loops have been traversed.
14. The system of clause 11 wherein all energies are defined as a set of energy tuples.
15. The system of clause 11 wherein the input data knowledge that represents a nuanced knowledge is a nuanced knowledge selected from the group consisting of the group consisting of a key word, an interest, a goal, a trait, a view, an opinion, a symbol, a semantic, a meaning, an inflection, and an interpretation.
16. The system of clause 11 wherein the combined knowledge concept is representative of a knowledge model selected from the group consisting of a domain model, a cultural model, a psychological model, a customer model, a customer intelligence model, a topic model, an area model, a political model, a political personage model, a government needs model, a goal model, a belief model, a worldview model, and a market model.
17. The system of clause 11, further comprising:
   in response to receiving the third initiating energy,
   discovering a third knowledge concept having at least one or more third input data knowledge that is not contained within the first or second knowledge concepts; and
   associating the third knowledge concept with the first or second knowledge concept within the combined knowledge concept or with the combined knowledge concept, and responsive to the associating with the third knowledge concept, connecting one or more of the third input data knowledge to one or more of the first or second input knowledge data using third links and spreading an amount of third energy to the third links.
18. The system of clause 17, wherein following the associating, further comprising changing at least one or more of the first or second link energies as a result of the associating.
19. A method for improving the computation of knowledge data within a computer environment for generating a controlled action output by enabling nuanced cognitive data storage and decision processing based thereon within the computing environment having a processor, an input interface communicatively coupled to an input system for receiving knowledge data and user input, an output interface communicatively coupled to an output system for generating the controlled action output and a non-transitory memory communicatively coupled to the processor and having computer executable instructions, the method comprising:
   receiving input knowledge data, a task, and user input at an input interface: storing the received input knowledge data and derived atomic knowledge data and concepts in a memory pool that is intercoupled with various system components and accessible to each intercoupled component;
   performing simulations among and between the system components related to the received task;
   representing nuanced atomic representation of any type of knowledge data and utilized energy flows between knowledge data;
   creating deep mindmaps that include one or more of various collections of knowledge data or atomic knowledge data;
   modeling one or more task models responsive to the received task;
   providing semantic or language interpretations related to the received knowledge data and can include one or more of a natural language processer module for determining an interpretation of the input knowledge data and a sentiment analyzer module for determining a sentiment related to the input knowledge data;
   extracting at least one of meanings from a language of the received knowledge data not only language and semantics from the received knowledge data;
   analyzing one or more tradeoffs and risks as a part of the performed simulation of the core intuitive processing system;
   generating an output command action at the output interface.
20. The method of clause 19, wherein the method further comprising: simulating a plurality of outcomes for the received task responsive to the derived atomic knowledge data and concepts, from two or more of the following: the one or more reasoning algorithms, at least one reasoning design guides, a knowledge representation formalism of the nuanced atomic knowledge data, one or more stored deep mindmaps, provide semantic or language interpretations of the received knowledge data, one or more natural language interpretations, one or more determined sentiments, one or more extracted meanings from a language of the received knowledge data not only language and semantics from the received knowledge data, and the one or more tradeoffs and risks.
21. The method of clause 19, wherein the method further comprising: hosting at an input system a graphical user interface (GUI) for interfacing with a user or a user device.
22. The method of clause 19, further comprising: providing an input and output interface for at least one third party system selected from the group of third party systems including a third party system selected from the group consisting of a advertising system, a language processing system, a webhosting system, a network communication system, a social network system, a command and control system, a messaging system, an alerting system, a decision making system, a medical diagnosis system, a device or system controller, an environmental control system, and a game hosting system.
23. The method of clause 19 wherein the data pool storing knowledge data and atomic knowledge data includes a communicatively coupled cognitive knowledge database storing at least a portion of the atomic knowledge data and one or more concepts.
24. The method of clause 19, further comprising:
   translating data received in, or communicated out of the data pool with other system components.
25. The method of clause 19 wherein in the data pool:
   storing in numerous different formats atomized knowledge data, received knowledge data, concepts the models and the deep mindmaps.
26. The method of clause 19, further comprising generating an interpretation or sentiment from the input knowledge data.
27. The method of clause 19, the method further comprising:
   optimizing resolution within the above recited processes to provide task- based negotiations or task-based counteroffer creation.
28. The method of clause 19 wherein, in the core module and one or more of the core module components is configured to perform the steps of:
   a) analyzing the input knowledge data to identify semantics within input knowledge data;
      discovering through analyzation recurrent useful semantic patterns in the input knowledge data;
      discovering all relevant aspects related to, associated with, or inherent in the input knowledge data; identifying the types of information contained within the input knowledge data;
      analyzing the input knowledge data to identify traces of underlying processes or relations of the input knowledge data to other knowledge data and information;
      identifying characters and image information within the input knowledge data;
      identifying arrangements of characters and images as they relate to each other within the input knowledge data; extracting meaning from the input knowledge data or the language meaning simulator;
      extracting sentiments from the input knowledge data; and
      identifying syntactic structure and patterns within the input knowledge data;
   b) following the above two or more input knowledge data analysis processes, the system receiving the outputs of the two or more input knowledge data analysis steps, and in response performing the steps of:
      determining a set of concepts that explain a plurality of nuanced aspects of the input knowledge data;
      storing the determined concepts in the memory pool;
      combining two or more concepts with the set of determine concepts pairwise;
      creating atoms of knowledge data (atomic knowledge data) from the combined two or more concepts;
      and storing the created atomic knowledge data in the memory pool.
29. The method of clause 19 wherein the core processing system and one or more of the modules thereof is configured for:
   storing the received input knowledge data in the memory pool in a free- form abstract format such that each first stored input data knowledge is initially disassociated and non-related from each second stored input data knowledge; connecting a first set of two or more of the stored input knowledge data including at least a first portion of the nuanced knowledge input knowledge data with a first set of links to form a first knowledge concept;
   receiving a first initiating energy at one of the first stored input knowledge data, and responsive to the received first initiating energy, spreading an amount of first link energy to each connected first link through each of the first input knowledge data within the first knowledge concept wherein for each first input data knowledge an amount of input link energy to the first input data knowledge is replicated to each output link thereof, wherein the associated link energy for the first links binds the first input knowledge data within the first knowledge concept; connecting a second set of two or more of the stored input knowledge data including at least a second portion of the nuanced knowledge input knowledge data with a second set of links to form a second knowledge concept, wherein either none or one or more of the input knowledge data within the second knowledge concept are input knowledge data within the first knowledge concept;
   receiving a first initiating energy at one of the second stored input knowledge data, and responsive to the received second initiating energy, spreading an amount of second link energy to each connected link through each of the input knowledge data within the second knowledge concept wherein for each second input data knowledge an amount of input link energy to the second input data knowledge is replicated to each output link thereof, wherein the associated second link energy for the second links binds the second input knowledge data within the second knowledge concept;
   associating the first knowledge concept with the second knowledge concept into a combined knowledge concept, and responsive to the associating, connecting one or more of the first input knowledge data to one or more of the second input knowledge data using third links and spreading an amount of third energy to the third links, and changing at least one or more of the first link energy or the second link energy as a result of the associating;
   receiving a third initiating energy into the combined knowledge concept, wherein responsive to the received third initiating energy identifying at least one additional stored input data knowledge not within the first input knowledge data or the second input knowledge data, and adding the additional stored input data knowledge and one or more fourth links to the combined knowledge concept and spreading fourth energy to the fourth links and changing one or more of the first link energies or the second link energies;
   forming a reasoning substrate from the combined knowledge concept; receiving a decision input energy at an input edge input data knowledge of the combined knowledge concept of the reasoning substrate;
   flowing the decision input energy through the links connecting the input knowledge data of combined knowledge concept of the reasoning substrate responsive to receiving the decision input energy;
   receiving at an output edge input data knowledge a summation of the decision input energy flowing through the combined knowledge concept from the input edge input data knowledge as an instant decision energy; and
   comparing the receive instant decision energy at the output edge input data knowledge of the reasoning substrate with a predefined decision energy value; wherein the output interface is communicatively coupled to the second system generating the output command action at the output interface responsive to the comparing.
30. The method of clause 29 wherein the process of flowing the decision input energy through the links and the input knowledge data of the combined knowledge concept is summed and includes no decay due to the process flow.
31. The method of clause 29 wherein the process of flowing the decision input energy through the combined knowledge concept is not completed until all links and all loops have been traversed.
32. The method of clause 29 wherein all energies are defined as a set of energy tuples.
33. The method of clause 29 wherein the input data knowledge that represents a nuanced knowledge is a nuanced knowledge selected from the group consisting of the group consisting of a key word, an interest, a goal, a trait, a view, an opinion, a symbol, a semantic, a meaning, an inflection, and an interpretation.
34. The method of clause 29 wherein the combined knowledge concept is representative of a knowledge model selected from the group consisting of a domain model, a cultural model, a psychological model, a customer model, a customer intelligence model, a topic model, an area model, a political model, a political personage model, a government needs model, a goal model, a belief model, a worldview model, and a market model.
35. The method of clause 29, further comprising:
   in response to receiving the third initiating energy,
   discovering a third knowledge concept having at least one or more third input data knowledge that is not contained within the first or second knowledge concepts; and
   associating the third knowledge concept with the first or second knowledge concept within the combined knowledge concept or with the combined knowledge concept, and responsive to the associating with the third knowledge concept, connecting one or more of the third input data knowledge to one or more of the first or second input knowledge data using third links and spreading an amount of third energy to the third links.
36. The method of clause 35, wherein following the associating, further comprising changing at least one or more of the first or second link energies as a result of the associating.
37. A system having improved computing of knowledge data from received input knowledge data within a computer environment for managing the creation, storage, and use of atomic knowledge data from that input knowledge data that include nuanced cognitive data related to the data information for improving decision processing within the computing environment having a processor, a non-transitory memory communicatively coupled to the processor and having computer executable instructions, the system comprising:
   an input interface communicatively coupled to an input system for receiving input knowledge data;
   an output interface communicatively coupled to an output system for generating the controlled action output;
   a core processing system having a plurality of intercoupled components and a data pool for storing received input knowledge data, and configured to break the received input knowledge data into its smallest form to include semantic and syntactic data related thereto by performing the steps to include two or more of the following input knowledge data analysis steps:
      analyzing the input knowledge data to identify semantics within input knowledge data;
      discovering through analyzation recurrent useful semantic patterns in the input knowledge data;
      discovering all relevant aspects related to, associated with, or inherent in the input knowledge data;
      identifying the types of information contained within the input knowledge data;
      analyzing the input knowledge data to identify traces of underlying processes or relations of the input knowledge data to other knowledge data and information;
      identifying characters and image information within the input knowledge data;
      identifying arrangements of characters and images as they relate to each other within the input knowledge data; extracting meaning from the input knowledge data or the language meaning simulator;
      extracting sentiments from the input knowledge data; and
      identifying syntactic structure and patterns within the input knowledge data following the above two or more input knowledge data analysis processes, the system receiving the outputs of the two or more input knowledge data analysis steps, and in response performing the steps of:
         determining a set of concepts that explain a plurality of nuanced aspects of the input knowledge data;
         storing the determined concepts in the memory pool;
         combining two or more concepts with the set of determine concepts pairwise;
         creating atoms of knowledge data (atomic knowledge data) from the combined two or more concepts;
         and storing the created atomic knowledge data in the memory pool.
38. A method for improving the computing of knowledge data information data within a computer environment for managing the creation, storage, and use of atomic knowledge data from that data information data that include nuanced cognitive data related to the data information for improving decision processing within the computing environment having a processor, an input interface communicatively coupled to an input system for receiving input information data, an output interface communicatively coupled to an output system for generating the controlled action output, a non-transitory memory
   communicatively coupled to the processor and having computer executable instructions, these components configured as a core processing system having a plurality of intercoupled components and a data pool for storing received input knowledge data, and configured break the received input knowledge data into its smallest form to include semantic and syntactic data related to the input knowledge data, the method comprising:
   performing two or more of the following input knowledge data analysis steps:
   analyzing the input knowledge data to identify semantics within input knowledge data; discovering through analyzation recurrent useful semantic patterns in the input knowledge data;
   discovering all relevant aspects related to, associated with, or inherent in the input knowledge data;
   identifying the types of information contained within the input knowledge data;
   analyzing the input knowledge data to identify traces of underlying processes or relations of the input knowledge data to other knowledge data and information;
   identifying characters and image information within the input knowledge data;
   identifying arrangements of characters and images as they relate to each other within the input knowledge data; extracting meaning from the input knowledge data or the language meaning simulator;
   extracting sentiments from the input knowledge data; and
   identifying syntactic structure and patterns within the input knowledge data following the above two or more input knowledge data analysis processes, the method further receiving the outputs of the two or more input knowledge data analysis steps and performing the steps of:
      determining a set of concepts that explain a plurality of nuanced aspects of the input knowledge data;
      storing the determined concepts in the memory pool;
      combining two or more concepts with the set of determine concepts pairwise;
      creating atoms of knowledge data (atomic knowledge data) from the combined two or more concepts;
      and storing the created atomic knowledge data in the memory pool. 39. A system for improving the performance of a data computing system by enabling nuanced cognitive data storage and decision processing based thereon within a computing environment having a processor, a non-transitory memory pool communicatively coupled to the processor, and having computer executable instructions performing the steps of:
         an input interface communicatively coupled to a first system receiving a plurality of input knowledge data with at each input data knowledge being associated with or representing by a singular instance of knowledge and wherein one or more of the input knowledge data represents a nuanced knowledge;
         storing the received input knowledge data in the memory pool in a free- form abstract format such that each first stored input data knowledge is initially disassociated and non-related from each second stored input data knowledge; connecting a first set of two or more of the stored input knowledge data including at least a first portion of the nuanced knowledge input knowledge data with a first set of links to form a first knowledge concept;
         receiving a first initiating energy at one of the first stored input knowledge data, and responsive to the received first initiating energy, spreading an amount of first link energy to each connected first link through each of the first input knowledge data within the first knowledge concept wherein for each first input data knowledge an amount of input link energy to the first input data knowledge is replicated to each output link thereof, wherein the associated link energy for the first links binds the first input knowledge data within the first knowledge concept; connecting a second set of two or more of the stored input knowledge data including at least a second portion of the nuanced knowledge input knowledge data with a second set of links to form a second knowledge concept, wherein either none or one or more of the input knowledge data within the second knowledge concept are input knowledge data within the first knowledge concept;
         receiving a first initiating energy at one of the second stored input knowledge data, and responsive to the received second initiating energy, spreading an amount of second link energy to each connected link through each of the input knowledge data within the second knowledge concept wherein for each second input data knowledge an amount of input link energy to the second input data knowledge is replicated to each output link thereof, wherein the associated second link energy for the second links binds the second input knowledge data within the second knowledge concept;
         associating the first knowledge concept with the second knowledge concept into a combined knowledge concept, and responsive to the associating, connecting one or more of the first input knowledge data to one or more of the second input knowledge data using third links and spreading an amount of third energy to the third links, and changing at least one or more of the first link energy or the second link energy as a result of the associating;
         receiving a third initiating energy into the combined knowledge concept, wherein responsive to the received third initiating energy identifying at least one additional stored input data knowledge not within the first input knowledge data or the second input knowledge data, and adding the additional stored input data knowledge and one or more fourth links to the combined knowledge concept and spreading fourth energy to the fourth links and changing one or more of the first link energies or the second link energies;
         forming a reasoning substrate from the combined knowledge concept; receiving a decision input energy at an input edge input data knowledge of the combined knowledge concept of the reasoning substrate;
         flowing the decision input energy through the links connecting the input knowledge data of combined knowledge concept of the reasoning substrate responsive to receiving the decision input energy;
         receiving at an output edge input data knowledge a summation of the decision input energy flowing through the combined knowledge concept from the input edge input data knowledge as an instant decision energy;
         comparing the receive instant decision energy at the output edge input data knowledge of the reasoning substrate with a predefined decision energy value; and an output interface communicatively coupled to a second system generating an output command action at the output interface responsive to the comparing.
40. The system of clause 39 wherein the process of flowing the decision input energy through the links and the input knowledge data of the combined knowledge concept is summed and includes no decay due to the process flow.
41. The system of clause 39 wherein the process of flowing the decision input energy through the combined knowledge concept is not completed until all links and all loops have been traversed.
42. The system of clause 39 wherein all energies are defined as a set of energy tuples.
43. The system of clause 39 wherein the input data knowledge that represents a nuanced knowledge is a nuanced knowledge selected from the group consisting of the group consisting of a key word, an interest, a goal, a trait, a view, an opinion, a symbol, a semantic, a meaning, an inflection, and an interpretation.
44. The system of clause 39 wherein the combined knowledge concept is representative of a knowledge model selected from the group consisting of a domain model, a cultural model, a psychological model, a customer model, a customer intelligence model, a topic model, an area model, a political model, a political personage model, a government needs model, a goal model, a belief model, a worldview model, and a market model.
45. The system of clause 39, further comprising:
   in response to receiving the third initiating energy,
   discovering a third knowledge concept having at least one or more third input data knowledge that is not contained within the first or second knowledge concepts; and
   associating the third knowledge concept with the first or second knowledge concept within the combined knowledge concept or with the combined knowledge concept, and responsive to the associating with the third knowledge concept, connecting one or more of the third input data knowledge to one or more of the first or second input knowledge data using third links and spreading an amount of third energy to the third links.
46. The system of clause 45, wherein following the associating, further comprising changing at least one or more of the first or second link energies as a result of the associating.
47. A method for improving the performance of a data computing system by enabling nuanced cognitive data storage and decision processing based thereon within a computing environment having a processor, a non-transitory memory pool communicatively coupled to the processor, an input interface communicatively coupled to a first system and an output interface
   communicatively coupled to a second system and having computer executable instructions performing the steps of:
   receiving a plurality of input knowledge data with at each input data knowledge being associated with or representing by a singular instance of knowledge and wherein one or more of the input knowledge data represents a nuanced knowledge;
   storing the received input knowledge data in the memory pool in a free- form abstract format such that each first stored input data knowledge is initially disassociated and non-related from each second stored input data knowledge; connecting a first set of two or more of the stored input knowledge data including at least a first portion of the nuanced knowledge input knowledge data with a first set of links to form a first knowledge concept;
   receiving a first initiating energy at one of the first stored input knowledge data, and responsive to the received first initiating energy, spreading an amount of first link energy to each connected first link through each of the first input knowledge data within the first knowledge concept wherein for each first input data knowledge an amount of input link energy to the first input data knowledge is replicated to each output link thereof, wherein the associated link energy for the first links binds the first input knowledge data within the first knowledge concept; connecting a second set of two or more of the stored input knowledge data including at least a second portion of the nuanced knowledge input knowledge data with a second set of links to form a second knowledge concept, wherein either none or one or more of the input knowledge data within the second knowledge concept are input knowledge data within the first knowledge concept;
   receiving a first initiating energy at one of the second stored input knowledge data, and responsive to the received second initiating energy, spreading an amount of second link energy to each connected link through each of the input knowledge data within the second knowledge concept wherein for each second input data knowledge an amount of input link energy to the second input data knowledge is replicated to each output link thereof, wherein the associated second link energy for the second links binds the second input knowledge data within the second knowledge concept;
   associating the first knowledge concept with the second knowledge concept into a combined knowledge concept, and responsive to the associating, connecting one or more of the first input knowledge data to one or more of the second input knowledge data using third links and spreading an amount of third energy to the third links, and changing at least one or more of the first link energy or the second link energy as a result of the associating;
   receiving a third initiating energy into the combined knowledge concept, wherein responsive to the received third initiating energy identifying at least one additional stored input data knowledge not within the first input knowledge data or the second input knowledge data, and adding the additional stored input data knowledge and one or more fourth links to the combined knowledge concept and spreading fourth energy to the fourth links and changing one or more of the first link energies or the second link energies;
   forming a reasoning substrate from the combined knowledge concept; receiving a decision input energy at an input edge input data knowledge of the combined knowledge concept of the reasoning substrate; flowing the decision input energy through the links connecting the input knowledge data of combined knowledge concept of the reasoning substrate responsive to receiving the decision input energy;
   receiving at an output edge input data knowledge a summation of the decision input energy flowing through the combined knowledge concept from the input edge input data knowledge as an instant decision energy;
   comparing the receive instant decision energy at the output edge input data knowledge of the reasoning substrate with a predefined decision energy value; and generating an output command action at the output interface responsive to the comparing.
48. The method of clause 47 wherein the process of flowing the decision input energy through the links and the input knowledge data of the combined knowledge concept is summed and includes no decay due to the process flow.
49. The method of clause 47 wherein the process of flowing the decision input energy through the combined knowledge concept is not completed until all links and all loops have been traversed.
50. The method of clause 47 wherein all energies are defined as a set of energy tuples.
51. The method of clause 47 wherein the input data knowledge that represents a nuanced knowledge is a nuanced knowledge selected from the group consisting of a key word, an interest, a goal, a trait, a view, an opinion, a symbol, a semantic, a meaning, an inflection, and an interpretation.
52. The method of clause 47 wherein the combined knowledge concept is representative of a knowledge model selected from the group consisting of a domain model, a cultural model, a psychological model, a customer model, a customer intelligence model, a topic model, an area model, a political model, a political personage model, a government needs model, a goal model, a belief model, a worldview model, and a market model.
53. The method of clause 47, further comprising:
   in response to receiving the third initiating energy,
   discovering a third knowledge concept having at least one or more third input data knowledge that is not contained within the first or second knowledge concepts; and
   associating the third knowledge concept with the first or second knowledge concept within the combined knowledge concept or with the combined knowledge concept, and responsive to the associating with the third knowledge concept, connecting one or more of the third input data knowledge to one or more of the first or second input knowledge data using third links and spreading an amount of third energy to the third links.
54. The method of clause 53, wherein following the associating, further comprising changing at least one or more of the first or second link energies as a result of the associating.
55. A system for providing nuanced artificial intelligence, reasoning, decision making and recommendation, said system comprising:
   a computer processor;
   a non- volatile computer-readable memory pool; and
   a data receiving interface,
   wherein the non-volatile computer-readable memory pool is configured with computer instructions configured to:
      receive input data via said data receiving interface;
      transform input data into a set of concept energy tuples, wherein each concept energy tuple describes how much energy should be placed in a particular concept node;
      generate one or more knowledge models; propagate one or more concept energy tuples selected from said set of concept energy tuples throughout said one or more knowledge models;
      processing the selected one or more concept energy tuples through a reasoning substrate; and
      generate a controlled action at an output interface responsive to the processing of the selected one or more concept energy tuples.
56. The system of clause 55 wherein generated controlled action is selected from the group of actions selected from the group of actions consisting of a generated control message or signal, a message that is predefined and stored, or one that is created during the process, or is an output on a graphical user interface (GUI) such as a map, data, an indicator, an alert, a message, or a set of data or information.
57. The system of clause 55, further comprising a goal inference process including:
   identifying concepts, ideas, and keywords potentially indicative of user interests
   processing human language keywords and concepts in order to determine other concepts that are semantically related to the user interest and to determine high- level concepts that are semantically related to the user interests; and
   placing energy into the concepts representing each user interest.
58. The system of clause 57 wherein energy placed into the concepts representing each user interest is reverse propagated in a reverse direction to discover goals with which the user interests are consistent.
59. The system of clause 55 wherein the non- volatile computer-readable memory pool is further configured to execute a post-processing step system of a emotion simulation process including performing the steps of:
   identifying one or more concepts in said generated controlled action; calculating an energy for a first concept of said one or more concepts; translating said energy into an energy polarity; and
   assigning said energy polarity to a second concept based on said first concept.
60. The system of clause 55 wherein the non- volatile computer-readable memory pool is further configured to combine said one or more knowledge models in order to generate a combined model.
61. A method for providing nuanced artificial intelligence, reasoning, decision making and recommendation, said method comprising the steps of:
   receiving input data via a data receiving interface;
   transforming input data into a set of concept energy tuples, wherein each concept energy tuple describes how much energy should be placed in a particular concept node;
   generating one or more knowledge models;
   propagating one or more concept energy tuples selected from said set of concept energy tuples throughout said one or more knowledge models;
   processing the selected one or more concept energy tuples through a reasoning substrate; and
   generating a controlled action output via processing said propagated concept energy tuples response to the processing through the reasoning substrate.
62. The method of clause 61 wherein generating the controlled action is generating a controlled action selected from the group of actions selected from the group of actions consisting of a generated control message or signal, a message that is predefined and stored, or one that is created during the process, or is an output on a graphical user interface (GUI) such as a map, data, an indicator, an alert, a message, or a set of data or information.
63. The method of clause 61, further comprising the step of executing a post-processing step on said output data via a goal inference process, generating new final output data.
64. The method of clause 63, further comprising the steps of:
   identifying concepts, ideas, and keywords potentially indicative of user interests
   processing human language keywords and concepts in order to determine other concepts that are semantically related to the user interest and to determine high- level concepts that are semantically related to the user interests; and
   placing energy into the concepts representing each user interest.
65. The method of clause 64 wherein energy placed into the concepts representing each user interest is reverse propagated in a reverse direction to discover goals that these user interests are consistent therewith.
66. The method of clause 61 wherein the non- volatile computer-readable memory pool is further configured to execute post-processing step system comprising emotion simulation process.
67. The method of clause 66 wherein said emotion simulation process comprises:
   identifying one or more concepts in said output data;
   calculating an energy for a first concept of said one or more concepts; translating said energy into an energy polarity; and
   assigning said energy polarity to a second concept based on said first concept.
68. The method of clause 61, further comprising the step of combining said one or more knowledge models in order to generate a combined model.

## Claims

1. A control system for controlling an autonomous or semi-autonomous system, the control system comprising a memory pool having at least one atom configured to enable information about a context, environment or world of the autonomous or semi-autonomous system to be at least one of used, reused and reconfigured 'on-the-fly', the control system being configured to:
receive a task to be performed in a changing or dynamic situation in the context, environment or world in which the autonomous or semi-autonomous system is operating;
generate output data to meet particular contextualised demands of the task by at least one of using, reusing and reconfiguring, 'on-the-fly', the at least one atom stored in the memory pool of the control system;
generate, based on the output data, an output command action for controlling operation of the autonomous or semi-autonomous system in response to the changing or dynamic situation.

2. A control system according to Claim 1, the control system comprising an input system, a core processing system and an output system, the core processing system having an input interface for interfacing to the input system and having an output interface for interfacing to the output system, wherein the input system is configured to receive the task, wherein the core processing system is configured to generate the output data, and wherein the output system is configured to generate the output command action.

3. A control system according to Claim 1 or Claim 2, the control system comprising a processor, an input information module, a reasoning substrate module, and a reasoning procedures module,
wherein the input information module comprises one or more of: the information about the context, environment or world, information about the task, and configuration information designed to configure individual components within the control system or to combine the individual components as required for the task to be performed,
wherein the reasoning procedures module comprises instructions to be executed by the processor, and
wherein one or more of the input information module, the reasoning substrate module, and the reasoning procedures module is configured based on the at least one atom.

4. A control system according to any previous claim, wherein the at least one atom is created according to:
receive input knowledge data indicative of information about the context, environment or world in which the autonomous or semi-autonomous system operates;
analyse the received input knowledge data to identify semantic, syntactic, and other information included in the received input knowledge data;
determine, based on the identified semantic, syntactic, and other information included in the received input knowledge data, a set of concepts that explain one or more nuanced aspects of the input knowledge data;
create the at least one atom based on one or more of: the determined concepts; and the identified semantic, syntactic, and other information included in the received input knowledge data.

5. A control system according to any previous claim, the control system being configured to:
store a determined set of concepts in the memory pool of the core processing system;
combine the concepts in the determined set pairwise,
wherein the at least one atom is created from the combined concepts.

6. A control system according to any previous claim, wherein the at least one atom is created based on at least one of: semantic surface area, nuance, nuance maximization, the amount of information implied by or contained within an atom, nuance of a graph, Inference Generating Capacity of a graph, Surface Area for Contextual Influence of a graph, pre-construal, information reconstrual, opacity, flexibility, brittleness, knowledge distribution across multiple primitives, non-abandonment of knowledge implicit in problem domains, implicit knowledge, information reuse in diverse contexts, nuanced cause-and-effect reasoning, causality, reasoning and cross-domain functionality.

7. A control system according to any previous claim, wherein one or more elements of the at least one atom, the task and/or the information about the context, environment or world form a graph having nodes representing concepts and links interconnecting the nodes.

8. A control system according to any previous claim, wherein the at least one atom is represented in the form of a directed/ordered {FROM CONCEPT}-{LINK}-{TO CONCEPT} tuple.

9. A control system according to any previous claim, wherein a link of the at least one atom is an energy transfer function defined as an arbitrary function taking FROM CONCEPT energies as input and outputting energies to be combined with any existing energies present in a TO CONCEPT, wherein each energy comprises at least one of a positive or negative scalar value and associated aspects.

10. A control system according to any previous claim, wherein a reasoning procedures module of the control system is configured to propagate at least one energy through a reasoning substrate, causing energy to flow as guided by the reasoning substrate and be modified or copied by the contents of the reasoning substrate.

11. A control system according to any previous claim, wherein:
at least a portion of energy flow is in a reverse direction as defined by a usual direction of a relevant portion of a reasoning substrate; or
the energy flow is modified by mechanisms other than links; or
at least a portion of the input information is transformed into an initial set of concepts and associated energies comprising the initial energy state of the reasoning substrate from which further energy propagation proceeds.

12. A control system according to any previous claim, wherein to generate the output command action the control system is configured to perform one or more of: perform simulations related to the received task; simulate various possible courses of action; and determine tradeoffs involved in generating each respective output command action.

13. A computer-implemented method for controlling an autonomous or semi-autonomous system, the method comprising:
receiving a task to be performed in a changing or dynamic situation in a context, environment or world in which the autonomous or semi-autonomous system is operating;
generating output data to meet particular contextualised demands of the task by at least one of using, reusing and reconfiguring, 'on-the-fly', at least one atom storing information about the context, environment or world of the autonomous or semi-autonomous system;
generating, based on the output data, an output command action for controlling operation of the autonomous or semi-autonomous system in response to the changing or dynamic situation.

14. A computer-readable storage medium comprising instructions which, when executed by one or more computer processors, cause the one or more computer processors to perform the method of Claim 13.

15. A computer program product comprising instructions which, when the program is executed one or more computer processors, cause the one or more computer processors to perform the method of Claim 13.
